# EUROPEAN PATENT APPLICATION

(11) **EP 1 795 674 A1**
(43) Date of publication of application: **13.06.2007**
(21) Application number: 05721503.0
(22) Date of filing: 25.03.2005
(51) Int. Cl.: E05B 1/00, B60J 5/00, B60R 25/00, E05B 49/00, G01L 1/16, H01H 36/00, H01L 41/08, H01L 41/09

(54) **DOOR HANDLE DEVICE, DOOR MEMBER WITH THE DOOR HANDLE DEVICE, AND SMART ENTRY SYSTEM WITH THE DOOR MEMBER**

(30) Priority: 08.12.2004 JP 2004355124; 16.12.2004 JP 2004363890; 13.01.2005 JP 2005005942; 25.01.2005 JP 2005016476; 26.01.2005 JP 2005018085
(71) Applicant: MATSUSHITA ELECTRIC INDUSTRIAL CO., LTD., Osaka 571-8501 (JP)
(72) Inventor: OGINO, Hiroyuki, Matsushita Elec. Ind. Co., Ltd., Shiromi,Chuo-ku,Osaka-shi,Osaka 540-6319 (JP); ABE, Yukio, Matsushita Elec. Ind. Co., Ltd., Shiromi,Chuo-ku,Osaka-shi,Osaka 540-6319 (JP); INUI, Hirofumi, Matsushita Elec. Ind. Co., Ltd., Shiromi,Chuo-ku,Osaka-shi,Osaka 540-6319 (JP); UEDA, Shigeki, Matsushita Elec. Ind. Co., Ltd., Shiromi,Chuo-ku,Osaka-shi,Osaka 540-6319 (JP); YONENO, Noriyuki, Matsushita Elec. Ind. Co., Ltd., Shiromi,Chuo-ku,Osaka-shi,Osaka 540-6319 (JP); SHIRAI, Shigeru, Matsushita Elec. Ind. Co., Ltd., Shiromi,Chuo-ku,Osaka-shi,Osaka 540-6319 (JP); KONDOU, Ryuta, Matsushita Elec. Ind. Co., Ltd., Shiromi,Chuo-ku,Osaka-shi,Osaka 540-6319 (JP); KAWAI, Miyuki, Matsushita Elec. Ind. Co., Ltd., Shiromi,Chuo-ku,Osaka-shi,Osaka 540-6319 (JP)
(74) Representative: Grünecker, Kinkeldey, Stockmair & Schwanhäusser Anwaltssozietät
(86) International application number: PCT/JP2005/005576
(87) International publication number: WO 2006/061917

(57) **Abstract**

While there are contact joining and capacitance type switches for detecting an operation of a door handle, a problem that is to be solved by the invention is to solve problems of contact failure due to aging and a malfunction triggered by rain drops.

According to the invention, a piezoelectric sensor (4) has such flexibility as to be annexed to a door handle (3), whereby a minute displacement of the door handle (3) can be detected with high sensitivity. Consequently, a sufficient signal output can be obtained only through a simple touch to the door handle (3), whereby a touch or contact to the door handle (3) can be detected. In addition, since electrodes are not exposed to the outside, the piezoelectric sensor (4) is made difficult to be affected by disturbance, and dust, rain, snow and the like which come to adhere thereto. Furthermore, since the piezoelectric sensor (4) can be deformed with suppleness, there are imposed few limiting conditions on a setting place and a space where to dispose the piezoelectric sensor (4) is diminished.

## Description

### TECHNICAL FIELD

The present invention relates to a handle apparatus in which a sensor is provided in a handle apparatus having a handle to detect operation of the handle apparatus.
In addition, the invention relates to a vehicle door handle which is preferable for a keyless entry system which enables the locking and unlocking of doors of a vehicle such as an automobile without a key and more particularly to a vehicle door handle which can realize an improvement in operation reliability of the keyless entry system, as well as a reduction in consumed current.

### BACKGROUND ART

In unlocking doors of a vehicle by operating a door handle, there exists a vehicle handle apparatus in which a sensor is provided which detects contact to and operation of the door handle to enable a function to unlock the doors under a predetermined condition when a detection signal is outputted from the sensor.

For example, Patent Document No. 1 discloses a vehicle door handle apparatus in which a contact joining switch such as a membrane switch is used as a sensor to implement the unlocking doors of a vehicle. This membrane switch has a known construction in which a pair of electrode portions is printed on oppositely facing inner surfaces of a pair of flexible film-like plates which is oppositely disposed via a spacer in such a manner as to be disposed at a predetermined interval. This membrane switch is normally in an Off state and is put in an ON state when an elastic element such as a silicone rubber which is placed on one of the plates so as to be situated on the electrode portion is pressed by a trigger so that the electrode portions are brought into contact with each other.

In addition, Patent Document No. 2 discloses an automotive human body approach detection sensor which is designed to unlock doors of a vehicle by using a capacitance type sensor. An outer handle using an automotive human body approach detection sensor is formed into a hollow shape, a parallel cable, which constitutes a capacitance type sensor as a non-contact sensor, is accommodated in a hollow portion therein in such a manner as to extend along a longitudinal direction of a grip portion of the outer handle. The parallel cable is connected to a shielded wire that is provided in such a manner that a proximal end portion thereof extends to the outside via an opening provided in the vicinity of a pivot portion of the outer handle, and the other end of the shielded wire is connected to a circuit board.

Incidentally, in recent years, in place of the general door unlocking methods in which a door is unlocked by inserting a key into a key hole in a door handle, so-called keyless entry apparatuses have been applied to automobiles and houses in which doors are unlocked using an individual identification card, a transmitter-receiver and the like without inserting a key into a key hole. A vehicle radio key apparatus of this type is disclosed in Patent Document No. 3. In this vehicle radio key apparatus, while a control unit is activated when a door handle of a vehicle is pulled, a portable side transmitter-receiver is put in a transmission state when it receives a transmission-reception code from a transmitter-receiver on the side of the vehicle, and the control unit performs a door unlocking process based on an intrinsic code from the portable side transmitter-receiver. In addition, a detection unit is provided which detects that a door handle is pulled, so that a transmission-reception code is designed to be sent from the transmitter-receiver on the side of the vehicle based on a detection signal from the detection unit.
Patent Document No. 1: JP-A-2002-322834
Patent Document No. 2: JP-A-10-308149
Patent Document No. 3: JP-A-8-53964

In addition, in recent years, in vehicles such as automobiles, there are increasing vehicles which incorporate keyless entry systems with a view to improving convenience and security.
A keyless entry system is a system which enables the locking and unlocking of doors of a vehicle without operating a key and in which the doors are locked and unlocked by collating password data by a radio communication between a radio communication terminal carried by the driver and a radio communication terminal installed in the vehicle.

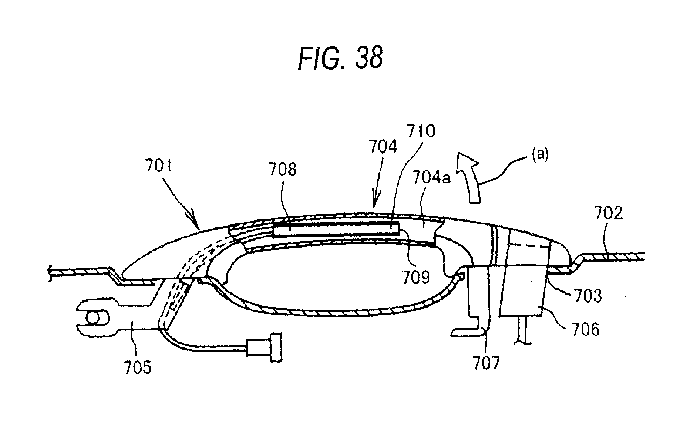

A related vehicle door handle shown in Fig. 38 is proposed for use for a key less entry system of this kind.
This vehicle door handle 701 is installed in an opening 703 in a door outer panel of a vehicle, and a handle main body 704, which constitutes a grip portion gripped when a corresponding door is operated to be opened and closed, is formed into a hollow construction, whereby a handle operation detection sensor 710 is incorporated in a hollow portion 704a formed within the handle main body 704.
The handle operation detection sensor 710 is such as to detect whether or not the door has been operated in an attempt to open or close the same from variation in electrostatic capacity by giving attention to a fact that when the driver or the like touches the handle main body 704, the electrostatic capacity on the perimeter of the handle main body 704 varies through touch to the human body and is made up of a sensor electrode 709 which detect a variation in electrostatic capacity and an antenna 708 which enables transmission and reception of signals to and from a radio communication terminal possessed and carried by the driver when the sensor electrode 709 detects a predetermined or greater variation in electrostatic capacity (refer, for example, to Patent Document No. 4).
Note that in the handle main body 704, an arm 705 extending from a front portion thereof is connected to the side of the door so that the handle main body 704 can oscillate so as to be displaced in a direction indicated by an arrow (a). In addition, a key cylinder casing 706 and a bell crank element 707 are provided behind the handle main body 704. The bell crank element 707 makes up a door lock apparatus in cooperation with a link mechanism, not shown.
Patent Document No. 4: JP-A-2003-194959

### DISCLOSURE OF THE INVENTION

### PROBLEM THAT THE INVENTION IS TO SOLVE

The contact joining switch used in the related door handle apparatuses, however, provides defects that a contact failure occurs due to aged deterioration and that the switch is not activated only by a light touch such as contact. In addition, since there exists a stroke before contacts are joined together, an inevitable time lag is generated from a moment the switch is touched until it is actually activated, and this time lag constitutes a cause to deteriorate the response. For example, when gripping to pull the door handle, in the event that the door is pulled abruptly, the release of a lock unit does not catch up with the pulling action, resulting in a state in which the locked state remains or the locked door is slackened. Due to this, feeling in operation of the door handle is affected because a predetermined length of time is needed from the door handle is gripped until it is pulled to open.

On the other hand, with the capacitance type sensor, there has been provided a problem that when the door handle gets wet due to rain or as a result of washing, a malfunction is caused or the sensor is not activated when the door handle is touched by the hand with a glove. In addition, since electrostatic capacity varies depending on individuals and changes depending on shoes worn by individuals who touch the door handle, there has existed a problem that the adjustment of sensitivity is difficult.

A piezoelectric sensor is preferred as a contact switch which can increase the detection sensitivity while separating noise components and can be switched on and off with a feeling of touch which enables a response to a sight contact.

Common piezoelectric sensors are, however, a rigid unit in which piezoelectric devices made from ceramics are arranged, and when there exists a limitation on an area where to dispose a sensor, there may occur a problem that a piezoelectric sensor cannot be disposed and incorporated at a desired position.

In addition while it is possible to consider that an optical sensor, which is of a non-contact type, is used, there are caused many malfunctions depending on weather conditions in which dust, rain, or snow is caused to adhere to the sensor, and hence, the optical sensor is not a practical choice.

Due to these circumstances, it has been difficult to realize good operation feeling, operation reliability and incorporation properties with the door handle apparatus using the contact joining switch, capacitance type sensor, common piezoelectric sensor or optical sensor or the keyless entry apparatus which incorporates therein the door handle apparatus.

The invention was made in view of the situations, and an object thereof is to provide a door handle apparatus which detects opening and closing operations of a corresponding door by using a piezoelectric sensor which has such a flexible construction as to obtain a sufficient detection sensitivity which can detect even a contact with a low pressure.

In addition, the invention was made to solve the problems inherent in the related art, and another object thereof is to provide a door handle apparatus which can perform predetermined actions which corresponds to types of vibration by detecting and determining vibration by a displacement detection unit, in addition to the provision of the door handle apparatus which detects opening and closing operations of a corresponding door by using a piezoelectric sensor which has such a flexible construction as to obtain a sufficient detection sensitivity which can detect even a contact with a low pressure.

Additionally, with the aforesaid vehicle door handle 1, the hollow portion 4a of a certain size had to be secured within the handle main body 4 for incorporation therein of the handle operation detection sensor 10, leading to a problem that there are caused a limitation on the shape and dimensions of the handle main body 4.

In addition, the electrostatic capacity around the perimeter of the handle main body 4 varies minutely due to, for example, other implements and things than the human body approaching or contacting the same.
Then, in the event that the detection sensitivity of the capacitance type handle operation detection sensor 10 is set slightly low in order not to erroneously detect a minute variation in electrostatic capacity due to such a disturbance, when the contact pressure applied to the handle main body 4 by the hand during opening and closing operations of the door is weak, it is not possible to detect whether or not the door has been operated to open or close, and the hand has to be brought into contact with the handle main body 4 again, leading to a risk that a deterioration in operability is called for.

On the other hand, in the event that the detection sensitivity of the handle operation detection sensor 10 is enhanced, whether or not the door has been operated to open or close can be detected in an ensured fashion even in case the contact pressure by the hand to the handle man body 4 is weak, but, on the contrary, the handle operation detection sensor 10 determines that there has occurred an opening or closing operation of the door even in case there occurs a minute variation in electrostatic capacity due to the disturbance to thereby send out a signal, leading to a risk that sending out of such a useless signal results in emission of noise to the surrounding environments.

Then, a further object of the invention is to solve the problem by providing a vehicle door handle which has a high degree of freedom in designing shapes and dimensions for the handle main body, moreover, which has such a high detection sensitivity that whether or not the door has been operated to open or close can be detected in an ensured fashion even in case the contact by the hand to handle main body during an opening or closing operation of the door is weak, and, furthermore, which can prevent the emission of noise to the surrounding environments which results from sending out a useless signal and at the same time can reduce a load that is borne by a battery installed on the vehicle by reducing consumed current.

In addition, a problem that the invention is to solve is to provide a door handle apparatus which realizes an improvement in operation reliability and a reduction in consumed current and a keyless entry apparatus which uses the door handle apparatus so provided.

### MEANS FOR SOLVING THE PROBLEMS

With a view to solving the problems inherent in the related art, according to the invention, there is provided a door handle apparatus including a handle portion which performs opening and closing operations of a door, a movable portion which operates while linking with the handle portion, a frame portion on which the handle portion and the movable portion are mounted, an elastic element which deforms by operation of either the handle portion or the movable portion, a piezoelectric sensor which is supported at least partially by the elastic element and which outputs a signal by the deformation of the elastic element and a sensor signal detecting portion which detects an output signal from the piezoelectric sensor, wherein the elastic element is mounted on any of the handle portion, the movable portion and the frame portion while being biased with a predetermined pressure applied thereto.

In addition, according to the door handle apparatus of the invention, at least part of the piezoelectric sensor comprises an elastic element.

Additionally, according to the door handle apparatus of the invention, at least part of the piezoelectric sensor comprises a bent portion which is deformed in advance.

In addition, according to the door handle apparatus of the invention, at least part of the piezoelectric sensor is deformed torsionally in advance.

Additionally, according to the door handle apparatus of the invention, the elastic element is formed into a cantilever shape in which the elastic element is fixed to an inside of the door handle apparatus at one end thereof.

In addition, according to the door handle apparatus of the invention, the elastic element is bent in a direction in which the elastic element oppositely faces the movable portion.

Additionally, according to the door handle apparatus of the invention, the piezoelectric sensor comprises a bent portion which is deformed in advance at an extending side of an opposite end portion to a fixed end of the elastic element.

In addition, according to the door handle apparatus of the invention, the elastic element supports the piezoelectric sensor while bending and deforming at least part of the piezoelectric sensor.

Additionally, according to the door handle apparatus of the invention, the elastic elements supports the piezoelectric sensor while deforming torsionally at least part of the piezoelectric sensor.

In addition, according to the door handle apparatus of the invention, the elastic element is brought into contact with part of the movable portion when the handle portion is not in use due to a predetermined torsional stress being applied to part of the elastic element.

Additionally, according to the door handle apparatus of the invention, the sensor signal detecting portion includes a filter which extracts a signal of a frequency that is generated by virtue of operation of the door handle portion.

In addition, according to the door handle apparatus of the invention, the piezoelectric sensor, the elastic element and the sensor signal detecting portion are molded as an integrated unit.

Additionally, according to the invention, there is provided a door member which includes the door handle apparatus.

In addition, according to the invention, there is provided a keyless entry system which includes the door member.

Additionally, according to the invention, there is provided a sensor unit including a flexible piezoelectric sensor, an elastic element which supports part of the piezoelectric sensor and a sensor signal detection portion which detects an output signal from the piezoelectric sensor, wherein the sensor signal detecting portion detects a signal from the piezoelectric sensor when the elastic element is deformed from a state in which a predetermined stress is applied to the elastic element.

In addition, according to the sensor unit of the invention, at least part of the piezoelectric sensor comprises an elastic element.

Additionally, according to the invention, there is provided a sensor unit mounting method in which the sensor unit is mounted in such a manner that the elastic unit deforms by being imparted a pressure from the handle portion when mounted on a door.

In addition, according to the invention, there is provided a door handle operation detecting method, which is a method for detecting a contact of a human being or an obj ect to a handle portion or an operation of the handle portion of a door handle apparatus which includes the aforesaid sensor unit based on a signal from the piezoelectric sensor when the elastic element is deformed by the use of the handle portion from a state in which a predetermined stress is applied to the elastic element while the handle portion is not in use.

Additionally, since the door handle apparatus according to the invention includes a piezoelectric sensor which has a flexibility and which is at least partially deformed in advance, an elastic element which supports the piezoelectric sensor, a handle portion which operates opening and closing operation of a door, a movable portion which operates while linking with the handle portion, a frame portion on which the handle portion and the movable portion are mounted, the elastic element being mounted on the frame portion while being imparted a pressure from the operating unit in a direction in which a deformation imparted in advance to the piezoelectric sensor is released or increased, and a detecting unit which detects based on an output signal outputted from the piezoelectric sensor at least any of a contact of a human being or an object to the handle portion, an opening operation by the handle portion and a closing operation by the handle portion, and the piezoelectric sensor is supported by the elastic element to which the pressure is applied by the movable portion which operates while linking with the handle portion so as to be deformed via a minute displacement of the handle portion, the displacement of the handle portion can be detected with high sensitivity.

In this door handle apparatus, since the piezoelectric sensor has such a flexibility that the sensor is deformed in a flexible fashion so as to be annexed to the handle portion and is partially deformed in advance, a minute displacement of the handle portion can be detected with high sensitivity.

Since the invention includes a piezoelectric sensor which has a flexibility and which is at least partially deformed in advance, an elastic element which supports the piezoelectric sensor, a handle portion which operates opening and closing operation of a door, a movable portion which operates while linking with the door handle, a frame portion on which the door handle and the movable portion are mounted, the elastic element being mounted on the frame portion while being imparted a pressure from the movable portion in a direction in which a deformation imparted in advance to the piezoelectric sensor is released or increased, and a detecting unit which detects based on an output signal outputted from the piezoelectric sensor at least any of a contact of a human being or an object to the handle portion, an opening operation by the handle portion and a closing operation by the handle portion, and the piezoelectric sensor is supported by the elastic element to which the pressure is applied by the movable portion which operates while linking with the handle portion so as to be deformed via a minute displacement of the handle portion, the displacement of the handle portion can be detected with high sensitivity.

In this door handle apparatus, the piezoelectric sensor has such a flexibility that the sensor can be annexed to the handle portion, and a minute displacement of the handle portion which results when a human being or an object is brought into contact with the handle portion can be detected with high sensitivity. Consequently, a sufficient signal output can be obtained even by a simple touch to the handle portion, whereby at least any of a contact to the handle portion, an opening operation by the handle portion and a closing operation by the handle portion can be detected. In addition, since no electrode has to be exposed to the outside, the piezoelectric sensor is made difficult to be affected by a disturbance and dust, rain and snow which would otherwise adhere thereto. Furthermore, since the piezoelectric sensor can be deformed with suppleness, there are imposed few limiting conditions on a setting place, and hence the piezoelectric sensor can easily be annexed in an appropriate form which matches the configuration of each door handle apparatus. In addition, since a space where the piezoelectric sensor is placed is diminished, the piezoelectric sensor can be annexed without largely modifying the configuration of door handle apparatus which are currently available. Additionally, since the piezoelectric sensor is supported by the elastic element in such a state that part thereof is deformed in advance, a resulting deformation becomes large even in the event that the handle portion is displaced minutely, resulting in a configuration which increases an output signal, whereby a detection with high sensitivity is made possible.

The invention is such that the operating unit constitutes an arm portion which operates while linking with the handle portion. Then, when the handle portion is displaced minutely by a contact of a human being or an object to the handle portion, the arm portion is displaced while linking with the handle portion, and the elastic element to which a pressure is applied by the arm portion is also displaced, whereby part of the piezoelectric sensor, which is supported by the elastic element, is deformed together with the elastic element, generating an output signal in response to the deformation. Then, the minute displacement of the handle portion can be detected with high sensitivity based on the output signal from the piezoelectric sensor. While the elastic element is deformed while in contact with part of the arm portion until the pressure applied thereto is lost, the displacement is good enough for the piezoelectric sensor to output a signal.

In addition, since the piezoelectric sensor receives the displacement of the arm portion via the elastic element, there occurs no case where, for example, the piezoelectric sensor gets worn due to contact with the arm portion or the piezoelectric sensor directly receives an impact generated by an abrupt operation of the handle portion, this improving the reliability thereof.

Additionally, since the elastic element is not displaced further when the pressure applied to the elastic element is released along with an opening operation by the handle portion, the piezoelectric sensor is not deformed further, either, whereby no such excessive deformation is applied to the piezoelectric sensor as to cause a disconnection.

The invention is such that the elastic element is molded substantially into a plate, which is fixed at one end thereof so as to be formed into a cantilever shape, thereby making it possible to realize a configuration in which a predetermined pressure is applied thereto from the arm portion through an extremely simple shape.

The invention is such that the elastic element supports the piezoelectric sensor which is at least partially bent and deformed in advance. When the handle portion is displaced minutely, the displacement is applied to the piezoelectric sensor via the operating unit and the elastic element, whereby the piezoelectric sensor is deformed in a direction in which the bent and deformed portion is bent further or the bending and deformation is released. Here, a tensile stress and a compression force are generated in the interior of the piezoelectric sensor at the bent portion thereof, and when this portion is deformed, a larger displacement is generated in the interior of the piezoelectric sensor due to stretch and compression than when a non-bent portion is subjected to the same deformation. Consequently, even in the event that the handle portion is displaced minutely, since the displacement is applied to the piezoelectric sensor via the operating unit and the elastic element, whereby the bent and deformed portion is deformed to generate a large displacement, an output signal according to the deformation is generated from the piezoelectric sensor, the sensitivity of the piezoelectric sensor being thereby improved.

The invention is such that the elastic element supports the piezoelectric sensor which is at least partially deformed torsionally. When the handle portion is displaced minutely, since the displacement is applied to the piezoelectric senor via the operating unit and the elastic element, whereby the piezoelectric sensor is deformed in a direction in which the torsionally deformed portion is twisted further or the torsional deformation is released, an output signal according to the deformation is generated from the piezoelectric sensor, so that a minute displacement of the handle portion which occurs when a human being or an object is brought into contact with the handle portion can be detected with high sensitivity. Consequently, a sufficient signal output can be obtained by even a simple touch to the handle portion, and at least any of a contact to the handle portion, an opening operation by the handle portion and a closing operation by the handle portion can be detected.

Since the invention is such that the piezoelectric sensor and the elastic element are molded together with the detecting unit, the assembly of the door handle apparatus can be implemented with efficiency.

The invention is such that a door member including the door handle apparatus is provided. From this configuration, the invention can be applied to a smart entry system for buildings and front doors of homes so as to improve the operability of a door handle portion of the smart entry system.

The invention is such that a smart entry system including the door handle apparatus is provided, and the door handle apparatus can be applied to a smart entry system for doors such as side doors and tailgates so as to improve the operability of a door handle portion of the smart entry system.

Note that the configuration in which the piezoelectric sensor is at least partially deformed in advance may be a configuration in which the piezoelectric sensor is deformed due to compression or stretch, in addition to the bent deformation and torsional deformation. In addition, by this configuration, the piezoelectric sensor which has been subjected to a minute displacement may be made to generate a larger displacement by virtue of an elastic force inherent therein so as to generate a relatively large and ensured displacement compared to a deformation that would be generated in such a state that no advance deformation is imparted for output of a signal.

In addition, since a door handle apparatus according to the invention includes a grip type handle portion which performs opening and closing operations of a door, a piezoelectric sensor which has a flexibility allowing for a deformation based on a displacement of the handle portion and a sensor signal detecting portion which detects based on an output signal from the piezoelectric sensor at least any of a contact of a human being or an object to the handle portion, an opening operation by the handle portion and a closing operation by the handle portion and the piezoelectric sensor is deformed even by a minute displacement of the handle portion through a direct or indirect contact thereof with an arm portion which operates while linking with the door handle, the displacement of the handle portion can be detected with high sensitivity.

In this door handle apparatus, the piezoelectric sensor has the flexibility and can be annexed to the door handle portion while being deformed flexibly.

In addition, the invention is characterized by including a grip type handle portion which performs opening and closing operations of a door, a piezoelectric sensor which has a flexibility which enables a deformation based on a displacement of the handle portion and a sensor signal detecting portion which detects based on an output signal from the piezoelectric sensor at least any of a contact of a human being or an object to the handle portion, an opening operation by the handle portion and a closing operation by the handle portion, wherein the piezoelectric sensor is deformed by a displacement of the handle portion through a direct or indirect contact thereof with an arm portion which operates while linking with the door handle.

In this door handle apparatus, the piezoelectric sensor has such a flexibility that the sensor can be annexed to the handle portion, and a minute displacement of the handle portion which results when a human being or an object is brought into contact with the handle portion can be detected with high sensitivity. Consequently, a sufficient signal output can be obtained even by a simple touch to the handle portion, whereby at least any of a contact to the handle portion, an opening operation by the handle portion and a closing operation by the handle portion can be detected. In addition, since no electrode has to be exposed to the outside, the piezoelectric sensor is made difficult to be affected by a disturbance and dust, rain and snow which would otherwise adhere thereto. Furthermore, since the piezoelectric sensor can be deformed with suppleness, there are imposed few limiting conditions on a setting place, and hence the piezoelectric sensor can easily be annexed in an appropriate form which matches the configuration of each door handle apparatus. In addition, since a space where the piezoelectric sensor is placed is diminished, the piezoelectric sensor can be annexed without largely modifying the configuration of door handle apparatus which are currently available.

In addition, the invention is such as to include an elastic element which is provided in such a manner as to be imparted a predetermined pressure when a handle portion is not in use so as to be brought into contact with part of an arm portion, so that a piezoelectric sensor is partially supported by the elastic element. Then, when the handle portion is displaced minutely by a contact of a human being or an object to the handle portion, the arm portion is displaced while linking with the handle portion, and the elastic element to which a pressure is applied by the arm portion is also displaced, whereby part of the piezoelectric sensor, which is supported by the elastic element, is deformed together with the elastic element, generating an output signal in response to the deformation. Then, the minute displacement of the handle portion can be detected with high sensitivity based on the output signal from the piezoelectric sensor. While the elastic element is deformed while in contact with part of the arm portion until the pressure applied thereto is lost, the displacement is good enough for the piezoelectric sensor to output a signal.

In addition, since the piezoelectric sensor receives the displacement of the arm portion via the elastic element, there occurs no case where, for example, the piezoelectric sensor gets worn due to contact with the arm portion or the piezoelectric sensor directly receives an impact generated by an abrupt operation of the handle portion, this improving the reliability thereof.

Additionally, since the elastic element is not displaced further when the pressure applied to the elastic element is released along with an opening operation by the handle portion, the piezoelectric sensor is not deformed further, either, whereby no such excessive deformation is applied to the piezoelectric sensor as to cause a disconnection.

In addition, since the invention is such that the elastic element is fixed at one end thereof so as to be formed into a cantilever shape, thereby making it possible to realize a configuration in which a predetermined pressure is applied thereto from the arm portion through an extremely simple shape.

Additionally, the invention is such that a predetermined torsional stress is applied to the elastic element so that part thereof is brought into contact with part of the arm portion while the handle portion is not in use. Then, when the handle portion is displaced minutely by a contact of a human being or an object to the handle portion, the arm portion is displaced while linking with the handle portion, and the part of the elastic element is displaced while in contact with the part of the arm portion until the applied torsional stress is lost. As this occurs, the part of the elastic element is twisted to be deformed in a direction in which the applied torsional stress is released or a direction in which the elastic element attempts to restore its original shape from the twisted one. As this occurs, part of the piezoelectric sensor which is supported by the elastic element is also twisted to be deformed together with the part of the elastic element, and an output signal according to the deformation is generated from the piezoelectric sensor. Then, a minute displacement of the handle portion can be detected with high sensitivity based on the output signal from the piezoelectric sensor.

In addition, the invention is such that the piezoelectric sensor has a bent portion in a direction in which the piezoelectric sensor extends from a support portion of the elastic element, whereby the bend portion of the piezoelectric sensor is also deformed along with the displacement of the elastic element so as to generate an output signal according to the deformation of the bent portion. Consequently, since an output signal according to the deformation of the bent portion is also outputted in such a manner as to be superposed on the output signal generated along with the deformation of the elastic element and the output signal generated along with the torsional deformation, the sensitivity of the piezoelectric sensor is increased.

Additionally, the invention is such that the piezoelectric sensor and the elastic element are molded together with the detecting unit, the assembly of the door handle apparatus can be implemented with efficiency.

The invention is such that a door member including the door handle apparatus is provided. From this configuration, the invention can be applied to a smart entry system for buildings and front doors of homes so as to improve the operability of a door handle portion of the smart entry system.

The invention is such that a smart entry system including the door handle apparatus is provided, and the door handle apparatus can be applied to a smart entry system for doors such as side doors and tailgates so as to improve the operability of a door handle portion of the smart entry system.

In addition, a door handle apparatus according to the invention is characterized by including a handle portion which performs opening and closing operations of a door, a piezoelectric sensor which has a flexibility which enables a deformation based on a displacement of the handle portion and a sensor signal detecting portion which detects based on an output signal from the piezoelectric sensor at least any of a contact of a human being or an object to the handle portion, an opening operation by the handle portion and a closing operation by the handle portion, wherein the piezoelectric sensor is deformed by a displacement of the handle portion through a direct or indirect contact thereof with an arm portion which operates while linking with the door handle.

In this door handle apparatus, the piezoelectric sensor has such a flexibility that the sensor can be annexed to the handle portion, and a minute displacement of the handle portion can be detected with high sensitivity.

Additionally, the invention is characterized by including a handle portion which performs opening and closing operations of a door, a piezoelectric sensor which has a flexibility which enables a deformation based on a displacement of the handle portion and a sensor signal detecting portion which detects based on an output signal from the piezoelectric sensor at least any of a contact of a human being or an obj ect to the handle portion, an opening operation by the handle portion and a closing operation by the handle portion, wherein the piezoelectric sensor is deformed by a displacement of the handle portion through a direct or indirect contact thereof with an arm portion which operates while linking with the door handle.

In this door handle apparatus, the piezoelectric sensor has such a flexibility that the sensor can be annexed to the handle portion. Consequently, a sufficient signal output can be obtained even by a simple touch to the handle portion, whereby a touch to the handle portion can be detected. In addition, since no electrode has to be exposed to the outside, the piezoelectric sensor is made difficult to be affected by a disturbance and dust, rain and snow which would otherwise adhere thereto. Furthermore, since the piezoelectric sensor can be deformed with suppleness, there are imposed few limiting conditions on a setting place thereof, and a space where the piezoelectric sensor is disposed is diminished.

Additionally, the invention is characterized in that the door handle apparatus has a plurality of arm portion which operate while linking with the handle portion, wherein the piezoelectric sensor can be deformed by the deformation of at least any of the plurality of arm portions which operate while linking with the handle portion, and since the displacement of the handle portion is detected at a plurality of locations, the redundancy of detection is increased, detection reliability being thereby enhanced.

In addition, the invention is such that the piezoelectric sensor is supported by an elastic element which is fixed at one end thereof so as to be formed into a cantilever shape and a predetermined pressure is applied to part of the elastic element so as to be brought into contact with an upper end of the arm portion when the handle portion is not in use, and since the piezoelectric sensor contacts the upper end of the arm portion via the elastic element, there exists no case where, for example, the piezoelectric sensor gets worn through contact with the arm portion or is subjected to a direct impact generated by operation, whereby the reliability is improved. In addition, since a predetermined pressure is applied to the elastic element so that part of the elastic element is brought into contact with part of the arm portion while the handle portion is not in use, the elastic element and the piezoelectric sensor are displaced in such a manner as to follow the part of the arm portion when the handle portion performs an opening operation, and since the elastic element is no more displaced after a predetermined displacement is attained, there occurs no case where an excessive displacement generates a disconnection.

Additionally, from a relationship with respect to a contact position between the part of the arm portion and the elastic element, the displacement of a distal end portion of the elastic element becomes larger than the displacement of the part of the arm portion, whereby the displacement of the arm portion is increased, the sensitivity being thereby enhanced.

In addition, the invention is such that the piezoelectric sensor has a bent portion in a direction in which the piezoelectric sensor extends from an opposite side to the fixing portion of the elastic element, and since a larger output signal relative to deformation is obtained at the bent portion than a straight portion when the respective portions are subjected to the same displacement, the sensitivity of the piezoelectric sensor is enhanced.

Additionally, the invention is such that the piezoelectric sensor and the elastic element are molded together with the detecting unit, whereby the assembly of the door handle apparatus can be implemented with efficiency.

In addition, the invention is a door member which includes the door handle apparatus and is such that the door handle apparatus is included in doors such as side doors and tailgates and doors such as front doors of buildings, whereby the operability of the door member is enhanced.

Additionally, the invention is such that a smart entry system including the door handle apparatus is provided, and the door handle apparatus can be applied to a smart entry system for doors such as side doors and tailgates and a smart entry system for buildings and front doors of homes so as to improve the operability of a door handle portion of the smart entry system.

In addition, the invention provides a vehicle door handle which is characterized by including a handle main body which is assembled to a door of a vehicle so as to constitute a grip portion which is used when opening and closing the door, a movable portion which is displaced in a predetermined fashion together with the handle main body when the door is opened and closed by gripping the handle main body and a handle operation detecting sensor which detects a displacement of the movable portion to output an electric signal and being incorporated in the door of the vehicle in such a manner that the handle operation detecting sensor is deformed by virtue of deformation of the movable portion.

Additionally, the invention is characterized in that in the vehicle door handle, the handle operation detecting sensor has a cable-shaped piezoelectric device so as to detect opening and closing operations of the door through a deformation of part of the piezoelectric device which occurs along with the deformation of the movable portion.

In addition, the invention is such as to have a grip portion which performs opening and closing operations of a door, a handle fixing portion which is mounted on the door in such a state as to hold the grip portion and a piezoelectric sensor which is mounted on a portion of the handle fixing portion with which the grip portion is brought into contact, wherein the piezoelectric sensor detects that the handle has been operated by detecting vibration of the grip portion.

By this configuration, the piezoelectric sensor detects vibration of the grip portion, whereby the operation by the user can be detected in an ensured fashion, thereby making it possible not only to enhance the operational reliability but also to reduce consumed current.

Additionally, the invention is configured so as to have a grip portion which performs opening and closing operations of a door, a handle fixing portion which is mounted on the door in such a state as to hold the grip portion and a piezoelectric sensor which is mounted on a portion of the handle fixing portion with which the grip portion is brought into contact, wherein the piezoelectric sensor detects that the handle has been operated by detecting vibration of the grip portion, whereby since the piezoelectric sensor is provided at the portion of the handle fixing portion with which the grip portion is brought into contact, even in the event that the grip portion is displaced minutely, the piezoelectric sensor can be made to detect the displacement, thereby making it possible to detect whether or not an opening or closing operation has occurred in a more ensured fashion.

In addition, in the invention, the piezoelectric sensor is configured such that a stress is constantly applied thereto, whereby the piezoelectric sensor can detect even a minute displacement of the grip portion, so as to detect whether the user has operated the grip portion with high sensitivity.

Additionally, in the invention, the grip portion is configured such that a raised portion is provided at a portion of the grip portion which is brought into contact with the piezoelectric sensor so that the piezoelectric sensor detects vibration, whereby even in the event that a deviation in fitting of the grip portion occurs, a stress can be imparted to the piezoelectric sensor by the raised portion so provided.

In addition, in the invention, the grip portion is configured such that the raised portion is formed into a shape which is larger than a diameter of the piezoelectric sensor, whereby even in the event that a deviation in fitting of the grip portion occurs, a stress can be imparted to the piezoelectric sensor by the raised portion which is made larger than the diameter of the piezoelectric sensor.

In addition, in the invention, the handle fixing portion is configured such that a raised portion is provided at a portion of the handle fixing portion which is brought into contact with the piezoelectric sensor so that the piezoelectric sensor is provided on the raised portion so provided so as to detect vibration, whereby even in the event that a deviation in fitting of the grip portion occurs, a stress can be imparted to the piezoelectric sensor by the raised portion.

Additionally, in the invention, the piezoelectric sensor is configured so as to be curved to be mounted on the handle fixing portion, whereby a stress can be applied to the curved portion of the piezoelectric sensor so as to enable detection of a minute displacement of the grip portion.

In addition, in the invention, the piezoelectric sensor is configured such that a distal end thereof is held by the handle fixing portion so that vibration from any other sources than the handle fixing portion is made difficult to be detected, whereby effect of disturbance due to vibration from any other sources than the handle fixing portion is reduced.

In addition, in the invention, the piezoelectric sensor is configured such that a sensor circuit case is held by the handle fixing portion so that vibration from any other sources than the handle fixing portion is made difficult to be detected, whereby disturbance vibration from any other sources than the handle fixing portion is reduced so as to ensure the detection of displacement of the grip portion.

In addition, in the invention, the piezoelectric sensor is configured so as to have a waterproofing device which covers the piezoelectric sensor with a view to preventing the penetration of water such as rain thereinto from the outside thereof, whereby the piezoelectric sensor is prevented from being exposed to the outside so as to be made difficult to be affected by dust, rain and snow which would otherwise adhere thereto.

Additionally, the invention provides a keyless entry apparatus which includes a door handle apparatus, a vehicle side transmitter-receiver which is installed on a vehicle, a portable side transmitter-receiver which is carried by an operator and a control unit which unlocks doors of the vehicle by receiving a password signal sent by the portable side transmitter-receiver at the vehicle side transmitter-receiver after the portable side transmitter-receiver has received a password requesting signal sent by the vehicle side transmitter-receiver, wherein the control unit includes a password signal requesting unit which makes the vehicle side transmitter-receiver send a password requesting signal when receiving a detection signal from the piezoelectric sensor, a password signal determination means which determines whether or not a password signal which is received and interpreted by the vehicle side transmitter-receiver is a normal signal which is set in advance and an unlocking instruction means which instructs unlocking by the door locking unit when the password signal is determined to be the normal signal.

By this configuration, even in the event that the contact to the handle main body by the hand fingers is weak, the door handle apparatus is activated, and since a stroke through which contacts of a contact joining switch are joined together does not exist, no time lag exists from a moment a door opening or closing operation is started until a door opening and closing switch is activated.

In addition, the door handle apparatus of the invention includes a door handle which operates opening and closing operations of a door, a movable portion which moves together with the door handle or while linking with the same, a displacement detecting unit which detects displacement of the movable portion, a determination unit which determines at least either a contact of a human body or an object to the door handle or an opening operation by the door handle based on an output signal from the displacement detecting unit and an unlocking means which unlocks the door when a contact to the door handle or an opening operation by the door handle is determined by the determination unit, wherein the determination unit has another determination mode which differs from the mode of determining either the contact to the door handle or the opening operation thereby, so as to perform determination in a plurality of modes.

By this configuration, by detecting displacement of the movable portion by the displacement detecting unit, a minute displacement of the door handle which results when a human body or an object is brought into contact with the door handle can be detected with high sensitivity. Consequently, a sufficient signal output can be obtained even when the door handle is simply touched, thereby making it possible to detect at least either the contact to the door handle or the opening operation by the door handle. Furthermore, by detecting various types of vibration by detecting minute displacement, the determination unit can determine whether the vibration in question results from a vibration generated by a door opening operation or another vibration such as a vibration having an intentional pattern, an erroneous vibration or a disturbance-attributed vibration, whereby a predetermined action can be taken which corresponds to the vibration so determined, thereby making it possible to realize the door handle apparatus which has the multiple functions and superior convenience.

Additionally, the invention is characterized by including a door handle which performs opening and closing operations of a door, a movable portion which moves together with the door handle or while linking with the same when the door handle performs the opening and closing operations, a displacement detecting unit which detects displacement of the movable portion, a determination unit which determines at least either a contact of a human being or an object to the door handle or an opening operation by the door handle based on an output signal from the displacement detecting unit and an unlocking means which unlocks the door when a contact to the door handle or an opening operation by the door handle is determined by the determination unit, wherein the determination unit has another determination mode which differs from the mode of determining either the contact to the door handle or the opening operation thereby, so as to perform determination in a plurality of modes, whereby by detecting displacement of the movable portion by the displacement detecting unit, a minute displacement of the door handle which results when a human body or an object is brought into contact with the door handle can be detected with high sensitivity. Consequently, a sufficient signal output can be obtained even when the door handle is simply touched, whereby at least either the contact to the door handle or the opening operation by the door handle can be detected, thereby making it possible to obtain a feeling of touch which reacts only by being touched lightly and a good feeling of operation of the door when it is opened. In addition, since the electrodes do not have to be exposed to the outside, the displacement detecting unit is made difficult to be affected by dust, rain and snow which would otherwise adhere thereto. Furthermore, by detecting various types of vibration by detecting minute displacement, the determination unit can determine whether the vibration in question results from a vibration generated by a door opening operation or another vibration such as a vibration having an intentional pattern, an erroneous vibration or a disturbance-attributed vibration, whereby a predetermined action can be taken which corresponds to the vibration so determined, thereby making it possible to realize a door handle apparatus which has the multiple functions and which is superior in usefulness.

Additionally, since the invention is made to include a flexible cable-shaped piezoelectric sensor, the piezoelectric sensor can detect a minute displacement with high sensitivity and can be deformed with suppleness, and hence, there are imposed few limiting conditions on a setting place thereof, and a space where to dispose it can be diminished.

In addition, the invention is such that the determination unit has a pattern signal determination mode, whereby in the pattern signal determination mode, when vibration detected by the displacement detecting unit is determined to be a signal vibration of a predetermined pattern which is imparted to the door or the door handle by the user, a predetermined user requesting action is performed.

Namely, of the plurality of determination modes of the determination unit, in one of the modes which differs from the mode of determining either the contact by the human being or object or the opening operation, by designing the vibration detected by the displacement detecting unit to be determined to be a signal vibration having a predetermined pattern of a predetermined number of times of peak and a predetermined time interval which result from the knocking on the door or operation of the door handle by the user and the predetermined user requesting action to be performed when a signal is determined to be one having the predetermined pattern, when the user knocks on the door or operates the door handle in the predetermined pattern having the predetermined number of times and predetermined time interval, the waveform of this vibration is detected and interpreted at the displacement detecting unit, and in case the action (rhythm) of the knocking and the like is a predetermined action, the predetermined user requesting action is to be performed. Namely, the knocking rhythm that only the user knows constitutes a password signal to enable the implementation of a predetermined action, whereby the door handle apparatus can be realized which has the multiple functions and which is superior in usefulness.

Additionally, the invention includes a security means, and the determination unit has a criminal vibration determination mode, whereby when the criminal vibration determination mode determines that a displacement or vibration detected by the displacement detecting unit is a criminal vibration such as a vibration generated when committing a crime such as burglary by breaking a lock, the security means is designed to be activated so as to perform a predetermined burglar alarming action.

Namely, of the plurality of determination modes of the determination unit, in the one of the modes which differs from the mode of determining either the contact by the human being or object or the opening operation, by designing the vibration detected by the displacement detecting unit to be determined at the time of locking as a vibration which differs from the normal disturbance-attributed vibration such as a vibration generated when committing a crime such as burglary by breaking a lock and the security means to be activated so as to perform the predetermined burglar alarming action when the vibration is determined to be the criminal vibration, when the waveform of a vibration is detected by the displacement detecting unit and the vibration so detected is determined during locking as a vibration which differs from the normal disturbance-attributed vibration and which is characteristic of a criminal vibration generated by a burglar who intends to enter the vehicle, steal the vehicle itself or steal items left therein and/or equipment thereof, the security means is activated so as to take the predetermined burglar alarming action, whereby the door handle apparatus can be realized which has the multiple functions and which is useful and superior in anti-burglary properties.

In addition, the invention includes an alarming unit which raises the alarm based on the mode determination of criminal vibration by the determination unit, whereby an effect to frighten a burglar or the like who intends to enter the vehicle or the like to commit crime to thereby suppress the entry into the vehicle by raising the alarm upon detection of a crime, in particular, when the alarming is effected by, for example, sound and light.

Additionally, the invention includes a communication unit which can communicate information on the mode determination of criminal vibration by the determination unit to external equipment, whereby a fact that a burglar or the like has attempted to enter the vehicle or the like to commit crime can be informed to an inside alarm terminal or an outside telephone, a guarding company, a police station and the like, thereby making it possible to quickly deal with such burglary or the like as soon as it occurs.

In addition, the invention includes a locking reinforcement unit, whereby when a burglar or the like who attempts to enter the vehicle or the like to commit crime is detected, the locking is reinforced to thereby prevent a further entry into the vehicle or the like. In particular, by reinforcing the locking of a portion which is locked already by locking the portion at a plurality of locations, when the further entry is attempted, the burglar is forced to spend more time breaking the locks, which increases the risk to be found, and hence, it is possible to make the burglar give up the attempt to enter further. In addition, in the case of a vehicle, a storage compartment such as a glove box can be locked or on-board audio equipment can be closed with a locked lid for protection against burglary.

In addition, the invention is a door member including the door handle apparatus, whereby the invention can be applied to a keyless entry apparatus or a smart entry apparatus for buildings and doors such as front doors of homes, so as to enhance the operability of a door handle portion of the key less entry apparatus, thereby making it possible to realize the door member which has the multiple functions and which is superior in usefulness.

Additionally, the invention is a keyless entry apparatus which includes the door handle apparatus, whereby the door handle apparatus can be applied to a keyless entry apparatus for doors such as side doors and tailgates, so as to enhance the operability of a door handle portion of the key less entry apparatus, thereby making it possible to realize the keyless entry apparatus which has the multiple functions and which is superior in usefulness.

In addition, the invention is a keyless entry apparatus which includes a door handle apparatus, a vehicle side transmitter-receiver which is installed on a vehicle, a portable side transmitter-receiver which is carried by a user and a control unit which unlocks doors of the vehicle by receiving an ID requesting signal sent by the portable side transmitter-receiver at the vehicle side transmitter-receiver after an ID signal sent by the vehicle side transmitter-receiver has been received at the portable side transmitter-receiver, wherein the control unit has a predetermined burglar alarming action performed in the event that a determination unit determines on a criminal vibration only when the ID signal sent by the portable side transmitter-receiver is not received at the vehicle side transmitter-receiver. By this configuration, since a determination on a criminal vibration can be implemented more clearly relative to a vibration detected during locking by discriminating the vibration from an intentional vibration by the user, a malfunction can be prevented, and a security means can be activated so as to take a predetermined burglar alarming action, whereby the keyless entry apparatus can be realized which is highly functional, useful and superior in burglar alarming properties.

### ADVANTAGES OF THE INVENTION

In the door handle apparatus of the invention, since the piezoelectric sensor has flexibility and can be deformed with suppleness so as to be annexed to the door handle and part thereof is deformed in advance, it becomes possible to detect a minute displacement of the door handle with high sensitivity. Consequently, a sufficient signal output can be obtained only through simple touch to the door handle, whereby it becomes possible to detect at least any of a contact to the door handle, an opening operation by the door handle and a closing operation by the door handle. In addition, since the electrodes do not have to be exposed to the outside, the piezoelectric sensor is made difficult to be affected by disturbance and dust, rain and snow which would otherwise adhere thereto. Furthermore, since the piezoelectric sensor can be deformed with suppleness, there are imposed few limiting conditions on a setting place thereof and a space where the piezoelectric sensor is disposed is diminished, the piezoelectric sensor can be affixed to door handles which are currently available in such a manner as to match the configurations thereof without largely modifying them.

In addition, in the door handle apparatus of the invention, the piezoelectric sensor has flexibility and can be deformed with suppleness so as to be annexed to the door handle, whereby it becomes possible to detect a minute displacement of the door handle with high sensitivity. Consequently, a sufficient signal output can be obtained only through simple touch to the door handle, whereby it becomes possible to detect at least any of a contact to the door handle, an opening operation by the door handle and a closing operation by the door handle. Additionally, since the electrodes do not have to be exposed to the outside, the piezoelectric sensor is made difficult to be affected by disturbance and dust, rain and snow which would otherwise adhere thereto. Furthermore, since the piezoelectric sensor can be deformed with suppleness, there are imposed few limiting conditions on a setting place thereof and a space where the piezoelectric sensor is disposed is diminished, the piezoelectric sensor can be affixed to door handles which are currently available in such a manner as to match the configurations thereof without largely modifying them.

In addition, in the door handle apparatus of the invention, the piezoelectric sensor has flexibility and can be deformed with suppleness so as to be annexed to a door knob, whereby it becomes possible to detect a minute displacement of the door knob with high sensitivity. Consequently, a sufficient signal output can be obtained only through simple touch to the door knob, whereby a touch to the handle portion can be detected. Additionally, since the electrodes do not have to be exposed to the outside, the piezoelectric sensor is made difficult to be affected by disturbance and dust, rain and snow which would otherwise adhere thereto. Furthermore, since the piezoelectric sensor can be deformed with suppleness, there are imposed few limiting conditions on a setting place thereof and a space where the piezoelectric sensor is disposed is diminished.

In addition, in the vehicle door handle of the invention, in the event that the handle operation detecting sensor is deformed at the movable portion which operates while linking with the handle main body, the handle operation detecting sensor can detect whether or not the door has been operated to open or close, and hence, the handle operation detecting sensor itself does not have to be incorporated in the handle main body. Consequently, a hollow portion of a predetermined size for incorporating therein the handle operation detecting sensor does not have to be provided within the handle main body, whereby the shape and dimensions of the handle main body can be designed arbitrarily by paying attention to the gripping characteristics thereof when gripped and external design, the degree of freedom in designing the shape and dimensions of the handle main body being thereby increased.

Additionally, in the vehicle door handle of the invention, the handle operation detecting sensor is such as to detect whether or not an opening or closing operation has been carried out through deformation imparted to a piezo device material which forms the piezoelectric device by the movable portion which is displaced in a predetermined manner together with the handle main body when the door is operated to open or close, and there is provided no risk that an approach of an apparatus or the like which has nothing to do with opening and closing operations of a door is erroneously detected compared to the related capacitance type handle operation detecting sensor.
Consequently, by setting high the detection sensitivity, whether or not an opening or closing operation of the door has been carried out can be detected quickly through a slight displacement of the movable portion which is displaced together with the handle main body, whereby even in the event that the contact of the hand fingers to the handle main body when the door is operated to open or close is weak, it is possible to detect whether or not an opening or closing operation of the door has been carried out in an ensured fashion.

Additionally, in the handle operation detecting sensor, since no detection signal is outputted as long as the piezo device material is not deformed by the displacement behavior of the movable portion which is displaced together with the handle main body, the emission of noise to the surrounding environments by the transmission of useless signals can also be prevented.

In addition, since the handle operation detecting sensor which uses the piezoelectric device can be operated stably with a consumed current of 1mA or lower, when compared to the related capacitance type handle operation detecting sensor, the consumed current can be reduced so as to alleviate a load applied to an on-board battery.

In addition, the door handle apparatus of the invention has a high degree of freedom in designing the shape and dimensions of the handle main body and a high detection sensitivity, and even in the event that the contact of the hand fingers to the handle main body when the door is operated to open or close is weak, it is possible to detect whether or not an opening or closing operation of the door has been carried out in an ensured fashion, and furthermore, not only can the emission of noise to the surrounding environments by the transmission of useless signals be prevented but also the consumed current can be reduced so as to alleviate a load applied to an on-board battery.

Additionally, the door handle apparatus of the invention includes the displacement detecting unit which detects a displacement resulting from an opening or closing operation by the door handle and the determination unit which discriminates based on an output signal from the displacement detecting unit a vibration resulting from a contact to the door handle or an opening operation by the door handle from a vibration resulting from other causes, a minute displacement of the door handle can be detected with high sensitivity, and a sufficient signal output can be obtained through simple touch to the door handle, thereby making it possible to detect the contact to the door handle and the opening operation thereby. In addition, since the electrodes do not have to be exposed to the outside, the piezoelectric sensor is made difficult to be affected by disturbance and dust, rain and snow which would otherwise adhere thereto. Furthermore, when a contact to the door handle or an opening operation by the door handle occurs, the doors can be unlocked, whereas when an output signal indicating another vibration is outputted, a predetermined action corresponding thereto can be taken, thereby making it possible to realize the door handle apparatus which is highly functional and superior in usefulness.

### BRIEF DESCRIPTION OF THE DRAWINGS

[Fig. 1] An external view of an automotive door which includes a door handle apparatus according to Embodiment 1 of the invention.
[Fig. 2] An external view of a handle bracket 2 according to Embodiment 1 of the invention as viewed from an outside of a vehicle.
[Fig. 3] An external view of the handle bracket 2 according to Embodiment 1 of the invention as viewed from an inside of the vehicle.
[Fig. 4] A sectional view of a piezoelectric sensor 4 according to Embodiment 1 of the invention.
[Fig. 5] (a) is a schematic view which shows how a door handle 3, the piezoelectric sensor 4, an elastic element 8 and an arm portion 9 are displaced when the door handle 3 is operated, (b) shows an example in which the piezoelectric sensor has no bent portion in Embodiment 1 of the invention, and (c) is a diagram which shows how the piezoelectric sensor is bent to be deformed in the example shown in (b).
[Fig. 6] A schematic view resulting when Fig. 5(a) is viewed from a direction indicated by an arrow S.
[Fig. 7] A characteristic chart which shows a signal V that is amplified and filtered at a sensor signal detecting unit according to Embodiment 1 of the invention and a determination output J of a determination unit.
[Fig. 8] An external view of the handle bracket 2 in a configuration in which two elastic elements 8 are provided in such a manner as to correspond, respectively, to two arm portions 9 which operate while linking with the door handle 3, so that piezoelectric sensors 4 are supported on and fixed to the two elastic elements 8, respectively.
[Fig. 9] An external view of an automotive door which includes a door handle apparatus according to Embodiment 2 of the invention.
[Fig. 10] (a) shows a sectional view of a door handle apparatus according to Embodiment 2 of the invention and is a sectional view of the door handle apparatus taken along the line B-B in Fig. 9, and (b) is a sectional view of the door handle apparatus taken along the line F-F and as viewed from a direction indicated by an arrow E in Fig. 10(a).
[Fig. 11] An external view of the door handle apparatus according to Embodiment 2 of the invention as viewed in a direction indicated by an arrow C in Fig. 10, that is, from the inside of the vehicle.
[Fig. 12] (a) is a schematic view which shows a state in which an elastic element 15 is deformed but still remains in contact with an arm portion 16, when a door handle 13 is pulled towards the outside of the vehicle (in a direction indicated by an arrow S in the figure), and (b) is a schematic view which shows a state in which the elastic element 15 has completed its displacement and is separated from the arm portion 16, when the door handle 13 is pulled further towards the outside of the vehicle (in the direction indicated by the arrow S in the figure).
[Fig. 13] (a) is a sectional view of the door handle apparatus taken along the line F-F and as viewed from a direction indicated by an arrow E in Fig. 12(a), and (b) is a sectional view of the door handle apparatus taken along the line F-F and as viewed from a direction indicated by an arrow E in Fig. 12(b).
[Fig. 14] A characteristic chart which shows a signal V that is amplified and filtered at a detecting unit according to Embodiment 2 of the invention and a determination output J of a determination unit.
[Fig. 15] An external view of an automotive door including a door handle apparatus according to Embodiment 3 of the invention.
[Fig. 16] A sectional view of the door handle apparatus according to Embodiment 3 of the invention which is taken along the line A-A in Fig. 15.
[Fig. 17] An external view of the door handle apparatus according to Embodiment 3 of the invention as viewed in a direction indicated by an arrow B in Fig. 16, that is, from the inside of the vehicle.
[Fig. 18] A sectional view of a piezoelectric sensor 404 according to Embodiment 3 of the invention.
[Fig. 19] (a) is a schematic view which shows a state in which an elastic element 408 is deformed but still remains in contact with an arm portion 409, when a door handle 403 is pulled towards the outside of the vehicle (in a direction indicated by an arrow S in the figure), and (b) is a schematic view which shows a state in which the elastic element 408 has completed its displacement and is separated from the arm portion 409, when the door handle 403 is pulled further towards the outside of the vehicle (in the direction indicated by the arrow S in the figure).
[Fig. 20] A characteristic chart which shows a signal V that is amplified and filtered at a sensor signal detecting unit according to Embodiment 3 of the invention and a determination output J of a determination unit.
[Fig. 21] (a) is a schematic view which shows an elastic element 408 and a piezoelectric sensor 404 in such a state that a door handle 403 according to Embodiment 4 of the invention is not in use, and (b) is a schematic view of the elastic element 408 and the piezoelectric sensor 404 in such a state that the door handle 403 according to Embodiment 4 of the invention is pulled towards the inside of the vehicle.
[Fig. 22] An external view of an automotive door including a door handle apparatus according to Embodiment 5 of the invention.
[Fig. 23] An external view of a handle bracket 302 according to Embodiment 5 of the invention which results when seen from the outside of the vehicle.
[Fig. 24] An external view of the handle bracket 302 according to Embodiment 5 of the invention which results when seen from the inside of the vehicle.
[Fig. 25] A sectional view of a piezoelectric sensor 304 according to Embodiment 5 of the invention.
[Fig. 26] A schematic view which shows how a door knob 303, the piezoelectric sensor 304 and an arm portion 309 are displaced when the door knob 303 is operated.
[Fig. 27] A schematic view resulting when Fig. 26 is viewed from a direction indicated by an arrow S.
[Fig. 28] A characteristic chart which shows a signal V that is amplified and filtered at a detecting unit according to Embodiment 5 of the invention and a determination output J of a determination unit.
[Fig. 29] An external view of a handle bracket 302 according to another embodiment of the invention.
[Fig. 30] An external perspective view of an embodiment of a vehicle door handle according to the invention.
[Fig. 31] A sectional view of the vehicle door handle taken along the line A-A in Fig. 30.
[Fig. 32] A schematic view of a handle operation detecting sensor shown in Fig. 31.
[Fig. 33] A diagram which shows the configuration of the handle operation detecting sensor shown in Fig. 31.
[Fig. 34] A view resulting when viewed in a direction indicated by an arrow C in Fig. 31.
[Fig. 35] A block diagram of the handle operation detecting sensor shown in Fig. 34.
[Fig. 36] An explanatory diagram which explains the operation of the vehicle door handle shown in Fig. 31.
[Fig. 37] An output characteristic chart of the handle operation detecting sensor shown in Fig. 35, in which (a) shows a bending load that is applied to the sensor, and (b) shows a sensor output that is outputted in response to the bending load.
[Fig.38] An explanatory diagram which explains the configuration of a related vehicle door handle.
[Fig. 39] An external perspective view which shows a door handle apparatus according to Embodiment 7 of the invention.
[Fig. 40] (a) is a diagram which shows an internal configuration of Embodiment 7 of the invention which results when taken along the line A-A in Fig. 39, and (b) is a diagram which shows an internal configuration of Embodiment 7 of the invention which results when taken along the line B-B in Fig. 40(a).
[Fig. 41] A schematic view which shows the configuration of a piezoelectric sensor according to Embodiment 7 of the invention shown in Fig. 40.
[Fig. 42] A diagram which shows the configuration of a piezoelectric device according to Embodiment 7 of the invention.
[Fig. 43] a block diagram of the door handle apparatus according to Embodiment 7 of the invention.
[Fig. 44] (a) is a diagram which shows a bending load applied to the piezoelectric sensor according to Embodiment 7 of the invention, and (b) is a diagram which shows a sensor output that is outputted in response to the bending load applied to the piezoelectric sensor according to Embodiment 7 of the invention.
[Fig. 45] A diagram which shows an internal configuration of a door handle apparatus according to Embodiment 8 of the invention.
[Fig. 46] A sectional view which shows a door handle apparatus according to Embodiment 9 of the invention.
[Fig. 47] A sectional view which shows a door handle apparatus according to Embodiment 10 of the invention.
[Fig. 48] A sectional view which shows a door handle apparatus according to Embodiment 11 of the invention.
[Fig. 49] A sectional view which shows a door handle apparatus according to Embodiment 12 of the invention.
[Fig. 50] A sectional view which shows a door handle apparatus according to Embodiment 13 of the invention.
[Fig. 51] A sectional view which shows a door handle apparatus according to Embodiment 14 of the invention.
[Fig. 52] A sectional view which shows a door handle apparatus according to Embodiment 15 of the invention.
[Fig. 53] (a) is a schematic diagram which shows the configuration of a keyless entry apparatus according to Embodiment 16 of the invention, (b) is a diagram which shows the configuration of a main part of the keyless entry apparatus according to Embodiment 16 of the invention.
[Fig. 54] A flowchart which shows an operation procedure of the keyless entry apparatus according to Embodiment 16 shown in Fig. 53.
[Fig. 55] An external view of an automotive door including a door handle apparatus according to Embodiment 17 of the invention.
[Fig. 56] A sectional view of the door handle apparatus according to Embodiment 17, which is taken along the line A-A in Fig. 55.
[Fig. 57] An external view of the door handle apparatus according to Embodiment 17 of the invention which results when viewed in a direction indicated by an arrow B in Fig. 56, that is, from the inside of a passenger compartment of the vehicle.
[Fig. 58] A sectional view of a piezoelectric sensor 904 according to Embodiment 17 of the invention.
[Fig. 59] A control block diagram of related portions of an automobile which includes the door handle apparatus according to Embodiment 17.
[Fig. 60] (a) is a schematic view which shows a state in which an elastic element 908 is deformed but still remains in contact with an arm portion 909, when a door handle 903 is pulled towards the outside of the vehicle (in a direction indicated by an arrow S in the figure), and (b) is a schematic view which shows a state in which the elastic element 908 has completed its displacement and is separated from the arm portion 909, when the door handle 903 is pulled further towards the outside of the vehicle (in the direction indicated by the arrow S in the figure).
[Fig. 61] A characteristic chart which shows a signal Va of a filter unit 951a that is amplified and filtered at a sensor signal detecting unit 905 according to Embodiment 17 of the invention and a determination output Ja of a comparing unit 952a.
[Fig. 62] A characteristic chart which shows a signal Vb of a filter unit 951b that is amplified and filtered at the sensor signal detecting unit 905 according to Embodiment 17 of the invention and a determination output Jb of a comparing unit 952b.
[Fig. 63] An external view of an automobile which includes a keyless entry apparatus having a door handle apparatus according to Embodiment 18 of the invention.
[Fig. 64(a)] A block diagram which shows a schematic configuration of the keyless entry apparatus according to Embodiment 18 of the invention.
[Fig. 64(b)] A block diagram which shows a detailed configuration of a main part of the keyless entry apparatus according to Embodiment 18 of the invention.

### DESCRIPTION OF REFERENCE NUMERALS

- 1: door
- 2: door handle bracket (frame portion)
- 3: door handle (handle portion)
- 4: piezoelectric sensor
- 5: sensor signal detecting unit
- 8: elastic element
- 9: arm portion (movable portion)
- 11: door
- 13: door handle (handle portion)
- 14: frame portion
- 15: elastic element
- 16: arm portion (movable portion)
- 101: control circuit (control unit)
- 105: password signal requesting means
- 111: password signal determination means
- 113: unlocking instruction means
- 201: spring
- 202, 203, 204: raised portion
- 205: sensor circuit case
- 206: waterproofing means
- 301: door
- 303: door knob (handle portion)
- 304: piezoelectric sensor
- 304a: bent portion
- 305: sensor signal detecting unit
- 308: elastic element
- 308a: fixing portion
- 308b: support portion
- 309: arm portion
- 309a: upper end
- 309b: fixing shaft
- 401: door
- 403: door handle (handle portion)
- 404: piezoelectric sensor
- 404a: bent portion
- 405: sensor signal detecting unit
- 408: elastic element
- 408a, 408b: support portion
- 409: arm portion
- 409a: end portion
- 712: vehicle door handle
- 713: door
- 714: handle main body (handle portion)
- 714a: arm
- 715: movable portion
- 716: handle operation detecting sensor
- 719: sensor signal detecting unit
- 721: opening/closing drive means
- 723: opening/closing control means
- 733: piezoelectric device
- 745: center electrode
- 747: outer electrode
- 749: piezo device material
- 751: covering layer
- 811: handle main body
- 813: door
- 815: piezoelectric sensor
- 815a: distal end
- 815b: curve
- 823: grip portion
- 824: handle fixing portion
- 891: vehicle side transmitter-receiver
- 893: portable side transmitter-receiver
- 901: door
- 903: door handle (handle portion)
- 904: piezoelectric sensor
- 909: arm portion (movable portion)
- 918: unlocking means
- 921: security means
- 931: vehicle
- 932: vehicle side transmitter-receiver
- 933: portable side transmitter-receiver
- 934: control circuit
- 938: locked state identifying means
- 9171: determination unit
- 9211: alarm means
- 9212: communication means
- 9213: locking reinforcement means
- 9341: determination unit

### BEST MODE FOR CARRYING OUT THE INVENTION

Hereinafter, embodiments of the invention will be described while referring to the drawings. Note that the invention is not limited by the embodiments.

### (Embodiment 1)

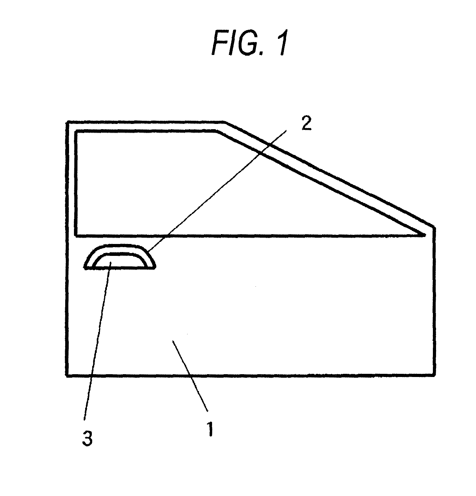

A first embodiment of the invention will be described by reference to Figs. 1 to 8.

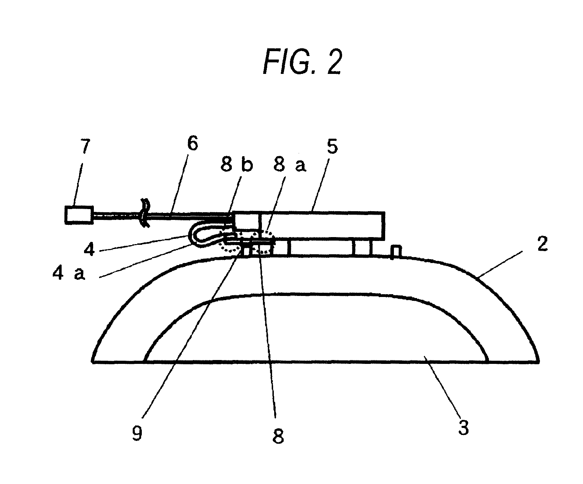

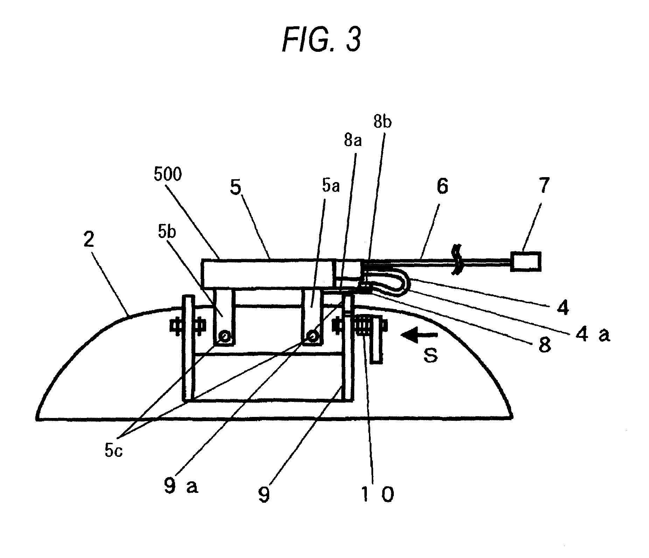

Fig. 1 is an external view of an automotive door which includes a door handle apparatus according to the first embodiment of the invention. In the figure, a handle bracket 2 as a frame portion is mounted on a door 1. The handle bracket 2 has a pulling door handle 3 as a handle portion. Note that while the door 11 is made to constitute a normal side door, the door may also be applied to other doors such as a sliding door, a tailgate and the like. Fig. 2 is an external view of the handle bracket 2 as viewed from the outside of a vehicle, and Fig. 3 is an external view of the handle bracket 2 as viewed from the inside of the vehicle. In the figures, a flexible cable-shaped piezoelectric sensor 4 is mounted on the handle bracket 2 together with a sensor signal detecting unit 5. The piezoelectric sensor 4, a power supply and detection signal output cable 6, and a connecter 7 are connected to the sensor signal detecting unit 5. The piezoelectric sensor 4 is supported on and fixed to a distal end portion of an elastic element 8 which is made of a leaf spring (a support portion 8b in the figures). In addition, the piezoelectric sensor 4 includes a bent portion 4a in a direction in which the piezoelectric sensor 4 extends from a distal end portion side of the elastic element 8. The elastic element is fixed to the sensor signal detecting unit 5 at the other end thereof in a cantilever fashion (8a in the figures). In addition, the elastic element 8 contacts an arm portion 9 as a movable portion which operates while linking with the door handle 3 at an upper end 9a. As this occurs, the elastic element 8 is biased with a predetermined pressure so as to be in contact with the upper end 9a when the door handle 3 is not in use.

As shown in Fig. 3, the piezoelectric sensor 4, the elastic element 8 and the sensor signal detecting unit 5 are molded together so as to constitute a sensor unit 500. Then, the sensor unit 500 is mounted on the handle bracket 2 with machine screws 5c via metallic mounting fixtures 5a, 5b provided on the sensor signal detecting unit 5.

A predetermined spring pressure is applied to the arm portion 9 by a spring 10 so as to be pressed in a direction in which the door handle 3 is normally closed. Since a pressure that is applied to the elastic element 8 by the spring 10 via the arm portion 9 is made larger than a pressure that is made to act on the arm portion 9 by the elastic element 8, there occurs no case where the arm portion 9 is pushed by the pressure that is made to act on the arm portion 9 by the elastic element 8 in such a manner as to cause the door handle 3 to be opened towards the outside of the vehicle. In addition, the movement of the arm portion 9 is restricted by a stopper portion, not shown, whereby the door handle 3 is prevented from being biased excessively in the closing direction by the stopper portion.

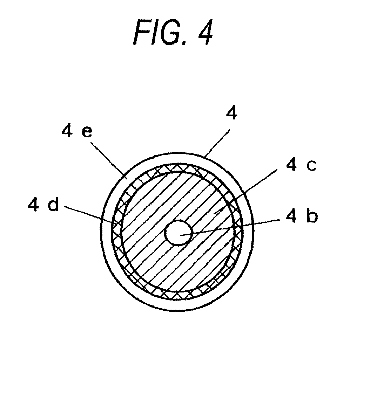

Fig. 4 is a sectional view of the piezoelectric sensor 4. The piezoelectric sensor 4 is such that a central electrode 4b, a piezoelectric element 4c, an outer electrode 4d and a covering layer 4e are molded coaxially and has a configuration which has superior flexibility as a whole. While a normal metallic solid conductor is used for the central electrode 4b, here, an electrode is used in which a metallic coil is wound around an insulating polymeric fiber. Polyester fiber which is commercially used for electric blankets and a copper-alloy which contains 5wt% silver are preferred as the insulating polymeric fiber and the metallic coil, respectively.

The piezoelectric element 4c is such as to be made by kneading together polyethylene resin and piezoelectric ceramic (here, lead titanate-zirconate) powder and is continuously extruded together with the central electrode 4b to thereby form the flexible piezoelectric element 4c. Note that it is desirable in consideration of the environment to use a non-lead material such as bismuth-sodium titanate based or niobate-alkali based piezoelectric ceramic material as the piezoelectric ceramic.

A DC voltage of several kilovolts is applied between the central electrode 4b and an artificial electrode which is brought into contact with a surface of the piezoelectric element 4c after the piezoelectric element 4c has been extruded around a circumference of the central electrode 4b so as to polarize the piezoelectric element 4c, whereby a piezoelectric effect is imparted to the piezoelectric element 4c. A belt-shaped electrode in which a metallic film is bonded on to a polymeric layer is used for the outer electrode 4d, and the belt-shaped electrode is made to be wound around a circumference of the piezoelectric element 4c. Polyethylene terephthalate (PET) is used as the polymeric layer, and since electrodes in which an aluminum film is bonded on to the polymeric layer have a high thermal stability at 120°C and are mass produced commercially, they are preferred for use as the outer electrode 4d. Note that in order to shield the electrode against noise in an external environment, it is preferable that the outer electrode 4d is wound around the circumference of the piezoelectric element 4c in such a manner as to overlap partially. Although vinyl chloride is preferred for use for the covering layer 4e in terms of reliability, it is preferable in consideration of the environment to use non-vinyl-chloride based materials such as thermoplastic elastomer.

The sensor signal detecting unit 5 is made up of at least one band-pass filter which is made up, in turn, of an operational amplifier and peripheral components and, if necessary, a band elimination filter unit or a low-pass filter which is made up of an operational amplifier and peripheral components and is adapted to remove signal components including a natural vibration frequency of the door 1. In addition, the sensor signal detecting unit 5 includes a determination unit which detects at least one of a contact of an object to the door handle 3, an opening operation and a closing operation by the door handle 3 based on an output signal from the filter unit. A comparator is used as the determination unit. The filter unit and the determination unit use devices whose consumed currents are 1mA or lower, respectively.

As characteristics of the band-pass filter unit, the band-pass filter unit is set to have characteristics which allow for passage through a frequency area of, for example, 3Hz to 8Hz as a characteristic frequency band by analyzing the frequency of an output signal outputted from the piezoelectric sensor 4 when the door handle 3 is operated experimentally.

In addition, when setting the band elimination filter unit or the low-pass filter unit, a setting is implemented so as to provide characteristics in which as a characteristic frequency band, for example, a frequency area of 10Hz or more is removed by analyzing the frequency of an output signal outputted from the piezoelectric sensor 4 when the door 1 is intentionally knocked on, for example. In addition, in the event that the intensity of the natural vibration is so small that little influence is given to an output signal from the piezoelectric sensor 4, neither the band elimination filter unit nor the low-pass filter unit may be provided.

Furthermore, since it is assumed that the natural vibration characteristic differs depending on types of vehicles and sizes and weight of doors, it is preferred to optimize the setting of the band-pass filter unit, the band elimination filter unit and the low-pass filter unit based on the aforesaid experimental analysis.

The sensor signal detecting unit 5 is preferably covered with a shield member so as to be electrically shielded in order to remove external electric noise. In addition, a feedthrough capacitor, an EMI filter or the like may be added to input and output portions of the sensor signal detecting unit 5 as a countermeasures against a strong electric field.

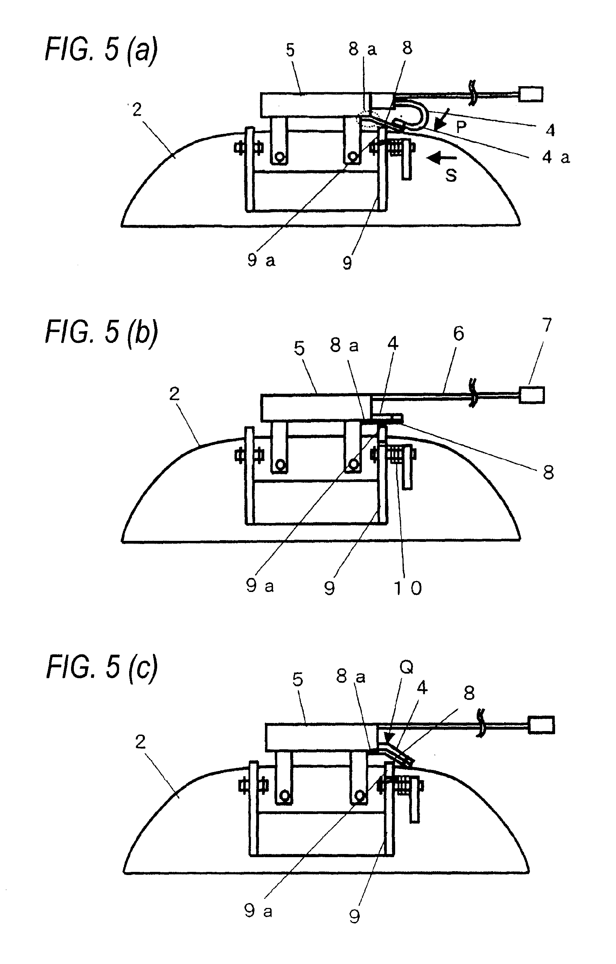

Fig. 5(a) is a schematic diagram which shows how the door handle 3, the piezoelectric sensor 4, the elastic element 8 and the arm portion 9 are displaced when the door handle 3 is pulled towards the outside of the vehicle. As shown in Fig. 5(a), when the door handle 3 is pulled towards the outside of the vehicle, the upper end 9a of the arm portion 9 is lowered, and the elastic element 8, which is biased to the upper end 9a with the predetermined pressure, is also displaced downwards centered at the fixing portion to a maximum extent thereof while the distal end portion side thereof rotates about a fixing shaft 9b. Then, when the door handle 3 is pulled further towards the outside of the vehicle, the upper end 9a of the arm portion 9 is lowered further, whereby the elastic element 8 is separated from the arm portion 9. Namely, with no pressure applied thereto from the upper end 9a, the elastic element 8 is formed into a shape in which the elastic element 8 is bent downwards in advance in the vicinity of the fixing portion 8a, and the piezoelectric sensor 4 is also formed by the elastic element 8 into a shape in which the piezoelectric sensor 4 is bent to be deformed in advance at the bent portion 4a. Then, when the piezoelectric sensor 4, the elastic element 8 and the sensor signal detecting unit 5 are mounted on the handle bracket 2 and the upper end 9a of the arm portion 9 and the elastic element 8 are brought into contact with each other, as shown in Fig. 2 or 3, a pressure is applied to the elastic element 8 by the upper end 9a of the arm portion 9 in a direction in which the bending deformation that is imparted in advance to the piezoelectric sensor 4 is increased (a direction in which a radius of curvature at the bent portion 4a is reduced), and the elastic element 8 itself is deformed in a direction in which the bending in the vicinity of the fixing portion 8a is reduced.

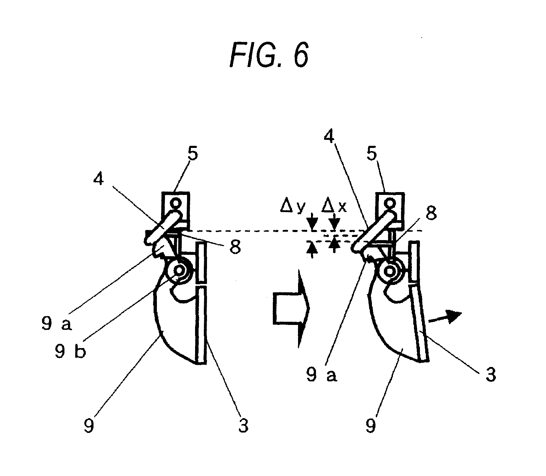

Next, the function will be described. When the door handle 3 is pulled towards the outside of the vehicle to open the door or an inner side of the door handle 3 is lightly touched with the hand, the door handle 3 is displaced towards the outside of the vehicle, and the arm portion 9 is displaced while linking with the door handle 3. Figs. 5(a) and 6 are schematic diagrams which show how the door handle 3, the piezoelectric sensor 4, the elastic element 8, and the arm portion 9 are displaced as that occurs. Here, Fig. 6 is the schematic view which results when Fig. 5(a) is viewed in a direction indicated by an arrow S. As shown in the figures, when the door handle 3 is displaced towards the outside of the vehicle, the upper end 9a of the arm portion 9 is lowered, and the elastic element 8, which is biased to the upper end 9a with the predetermined pressure, is also displaced downwards centered at the fixing portion to the maximum extent thereof while the distal end portion side thereof rotates about a fixing shaft 9b. Due to this, the piezoelectric sensor 4 is also deformed in a direction in which the radius of curvature of the bent portion 4a is increased.

In this case, for example, as shown in Fig. 6, from a relationship of contact position between the upper end 9a and the elastic element 8, a displacement Δx at the upper end 9a becomes Δy at the distal end portion of the elastic element 8, which is larger than Δx, whereby the larger displacement than the direct displacement of the upper end 9a is provided on the elastic element 8.

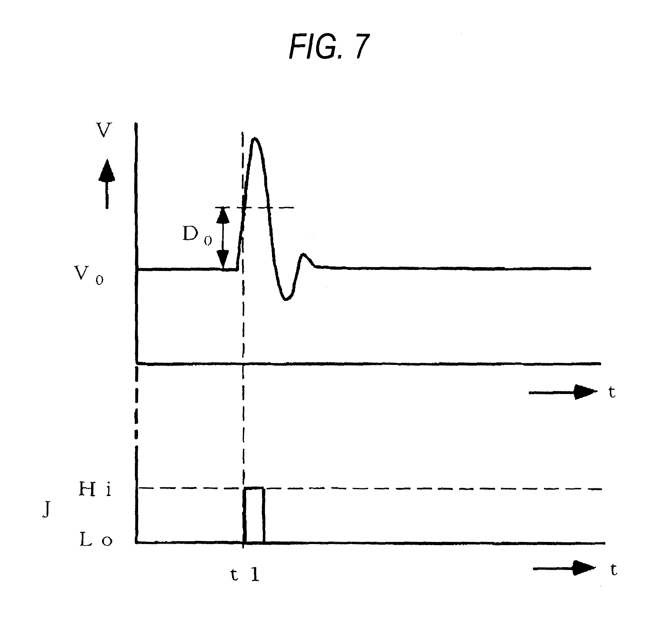

Fig. 7 is a characteristic chart which shows a signal V which is amplified and filtered within the sensor signal detecting unit 5 and a detection output J of a determination unit, which result when the elastic element 8 and the arm portion are so displaced. In the figure, an axis of ordinate denotes V, J sequentially from the top, and an axis of abscissa denotes time t. When displacement occurs as a result of the operation of the door handle 3, deforming the piezoelectric sensor 4, a signal in response to an acceleration at which the piezoelectric sensor 4 deforms is outputted from the piezoelectric sensor 4 by virtue of a piezoelectric effect. As this occurs, a signal having a frequency of about 3 to 8Hz appears in the output signal, and the signal is amplified and filtered within the sensor signal detecting unit 5, whereby a signal indicated by V in Fig. 7 is obtained.

The determination unit determines that at least one of a contact of an object to the door handle 3, and an opening operation and a closing operation by the door handle 3 has occurred and outputs a pulse signal of Lo→Hi→Lo as a determination output at time t1 in case an amplitude V-V0 of V from V0 is D0 or more.

In addition, since the piezoelectric sensor 4 is deformed via the arm portion 9 and the elastic element 8 (in the direction in which the radius of curvature is reduced) also when the door handle 3 is pressed from the outside of the vehicle, a similar detection is made possible also in this case.

By the function that has been described heretofore, in this door handle apparatus, the piezoelectric sensor 4 has such flexibility as to be annexed to the door handle 3, whereby a minute displacement of the door handle 3 can be detected with high sensitivity. Consequently, a sufficient signal output can be obtained only through a simple touch to the door handle 3, whereby a contact to the door handle 3 can be detected. In addition, since electrodes do not have to be exposed to the outside, the piezoelectric sensor 4 is made difficult to be affected by disturbance, and dust, rain and snow that would otherwise adhere thereto. Furthermore, since the piezoelectric sensor 4 can be deformed with suppleness, there are imposed few limiting conditions on a setting place thereof, and a space where to dispose the piezoelectric sensor 4 is diminished.

In addition, the piezoelectric sensor 4 is supported by the substantially plate-shaped elastic element 8 which is fixed at the one end thereof in a cantilever-like fashion, and part of the elastic element 4 is biased with the predetermined pressure so as to be brought into contact with the upper end 9a of the arm portion 9, whereby a configuration can be realized in which the predetermined pressure is applied from the arm portion 9 in an extremely simple form.

Additionally, since the piezoelectric sensor 4 is not in direct contact with the upper end 9a of the arm portion 9 but is made to receive the displacement of the upper end 9a via the elastic element 8, there occurs no case, for example, where the piezoelectric sensor 4 is brought into contact with the arm portion 9 to thereby get worn or receives directly an impact generated by operation, reliability being thereby improved. In addition, since the elastic element 8 and the piezoelectric sensor 4 are displaced while following the upper end 9a of the arm portion 9 when the door handle 3 performs an opening operation and the elastic element 8 is displaced no further after it has been displaced to a predetermined extent, there occurs no case where the piezoelectric sensor 4 is disconnected due to an excessive displacement of the elastic element 8.

Additionally, from the relationship of contact position between the upper end 9a of the arm portion 9 and the elastic element 8, the displacement at the distal end portion of the elastic element 8 becomes larger than the displacement at the upper end 9a of the arm portion 9, whereby the displacement of the piezoelectric sensor 4 is increased further, so as to increase the sensitivity.

Additionally, the elastic element 8 is such as to support the piezoelectric sensor 4 with part of the piezoelectric sensor 4 bent and deformed in advance, and when the door handle 3 is displaced minutely, the displacement is applied to the piezoelectric sensor 4 via the arm portion 9 and the elastic element 8, and the bent and deformed portion is bent further. Here, a tensile stress and a compression force are generated within an interior of the piezoelectric sensor at the bent portion thereof, and when this portion is deformed, a larger displacement than one resulting when a non-bent portion is deformed is generated within the interior of the piezoelectric sensor by virtue of stretch and compression. Consequently, even in the event that the displacement of the door handle 3 is minute, since the displacement is applied to the piezoelectric sensor 4 via the arm portion 9 and the elastic element 8, whereby the bent and deformed portion is deformed to generate a large displacement, a large output signal in response to the displacement is generated from the piezoelectric sensor 4, the sensitivity of the piezoelectric sensor 4 being thereby increased.

In addition, the piezoelectric sensor 4, the elastic element 8 and the sensor signal detecting unit 5 are molded together as an integrated unit to thereby constitute the sensor unit 500, and since the piezoelectric sensor 4, the elastic element 8 and the sensor signal detecting unit 5 can be mounted on a frame portion 14 as the sensor unit 500, the assembly of the door handle apparatus can be implemented efficiently.

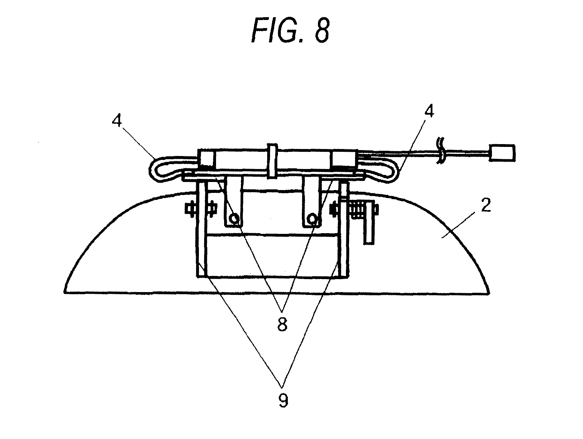

Additionally, as another embodiment of the invention, there may be provided a configuration, as shown in Fig. 8, in which two arm portions 9 which operate while linking with the door handle 3 are provided in such a manner as to correspond, respectively, to two elastic elements 8, and piezoelectric sensors 4 are supported on and fixed to the two elastic elements 8, respectively, and in this configuration, since the displacement of the door handle is detected at a plurality of locations, the redundancy of detection is enhanced, detection reliability being thereby increased.

In addition, in Fig. 5(a), while the bent portion 4a is provided in the direction in which the piezoelectric sensor 4 extends from the distal end portion side of the elastic element 8, as shown in Figs. 5(b), (c), the piezoelectric sensor 4 may be configured so as to have no bent portion 4a. In this configuration, when the door handle 3 is operated to perform a door opening operation and is displaced towards the outside of the vehicle, the arm portion 9 is displaced while linking with the door handle 3, and the elastic element 8 bents at a position of a point Q by virtue of the displacement of the arm portion 9, whereby the piezoelectric sensor 4 is deformed (refer to Fig. 5(c)). Then, a signal in response to an acceleration at which the piezoelectric sensor 4 deforms is generated from the piezoelectric sensor 4. Then, the sensor signal detecting unit 5 determines based on the signal that at least one of a contact of an object to the door handle 3, and an opening operation and a closing operation by the door handle 3 has occurred.

### (Embodiment 2)

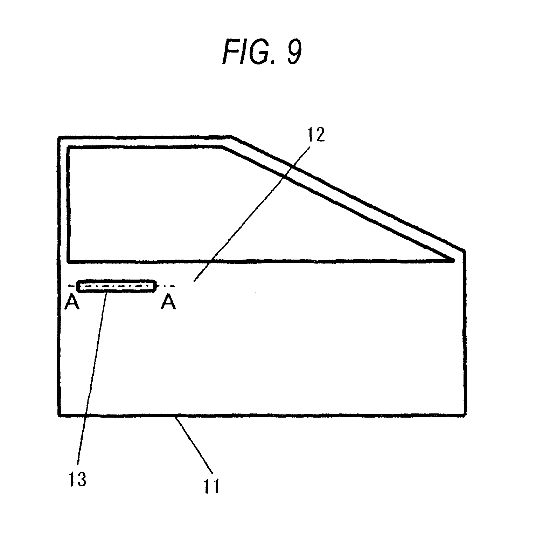

A second embodiment of the invention will be described by reference to Figs. 9 to 14.

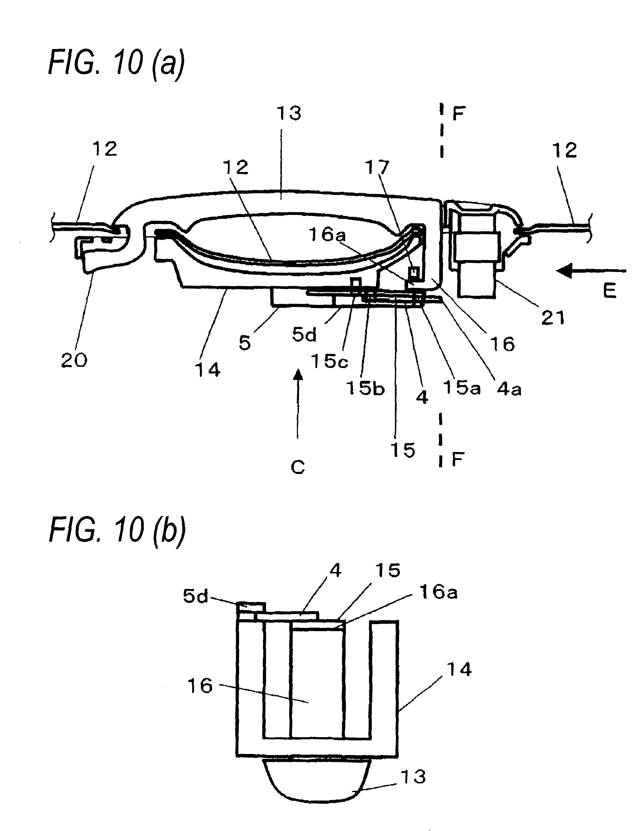

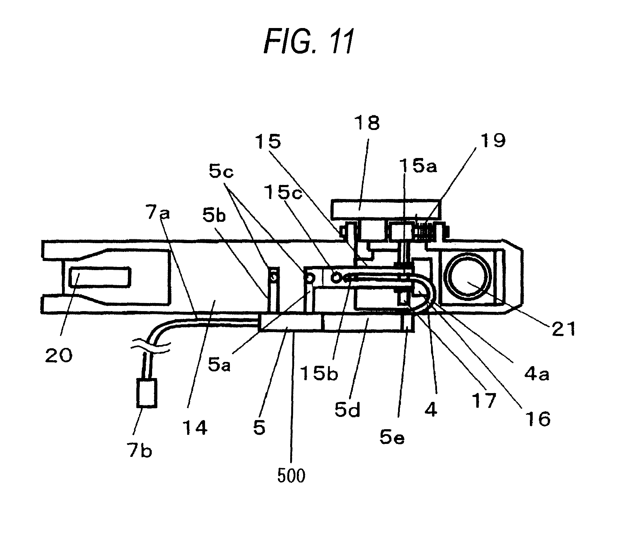

Fig. 9 is an external view of an automotive door which includes a door handle apparatus according to a second embodiment of the invention. In the figure, a door 11 has a gripping door handle 13 as a handle portion which is mounted on an outer panel (door panel) 12 thereof. Note that while the door 11 is made to be a normal side door, the door 11 may constitute doors such as a sliding door, a tailgate and the like. Fig. 10(a) is a sectional view of the door handle apparatus taken along the line B-B in Fig. 9 (as viewed from a top side of a vehicle body), and in the figure, a left side denotes a front of the vehicle body, whereas the right side denotes a rear of the vehicle body. Fig. 10 (b) is a sectional view of the door handle apparatus taken along the line F-F and as viewed in a direction indicated by an arrow E in Fig. 10(a). Fig. 11 is an external view of the door handle apparatus as viewed in a direction indicated by an arrow C in Fig. 10(a), that is, from the inside of the vehicle. In Figs. 10 and 11, a flexible cable-shaped piezoelectric sensor 4 is mounted on a frame portion 14 together with a sensor signal detecting unit 5. The piezoelectric sensor 4, a power supply and detection signal output cable 7a and a connector 7b are connected to the sensor signal detecting unit 5. As shown in Fig. 11, the piezoelectric sensor 4, an elastic element 8 and the sensor signal detecting unit 5 are molded together as an integrated unit to thereby constitute a sensor unit 500. Then, the sensor unit 500 is mounted on the frame portion 14 with machine screws 5c via metallic mounting fixtures 5a, 5b which are provided on the sensor signal detecting unit 5. In addition, the sensor signal detecting unit 5 includes a guide portion 5d which supports the piezoelectric sensor 4 between the frame portion 14 and itself, and the piezoelectric sensor 4 is fixed in place at a distal end 5e of the guide portion 5d.

The piezoelectric sensor 4 is supported on and fixed to the elastic element 8 at an end portion (a support portion 15a in the figure) of the elastic element 15, which is made of a leaf spring, and at a distal end portion (a support portion 15b in the figure) of the piezoelectric sensor 4. In addition, the piezoelectric sensor 4 has a bent portion 4b in a direction in which the piezoelectric sensor 4 extends from the end portion (the support portion 15a) of the elastic element 15. The elastic element 15 is joined to the metallic mounting fixture 5a of the sensor signal detecting unit 5 by virtue of welding at the other end thereof which lies in a direction towards a fixing portion 15c, and the piezoelectric sensor 4 and the elastic element 15 are molded integrally with the sensor signal detecting unit 5 via the metallic mounting fixture 5a.

The elastic element 15 is fixed at the fixing portion 15c in a cantilever-like fashion. In addition, the elastic element 15 is brought into contact with an arm portion 16 as a movable portion which operates while linking with the door handle 13 at an end portion 16a. Here, while the elastic element 15 originally has a shape in which the elastic element 15 is bent towards the outside of the vehicle at a predetermined angle in the vicinity of the fixing portion 15c, since the elastic element 15 is biased to be pushed in towards the inside of the vehicle by the end portion 16a with a predetermined pressure while the door handle 13 is not in use (a normal state in which the elastic element 15 is simply mounted on the door panel without a contact of a human being or an object thereto and an opening operation and a closing operation which are performed thereby), a state results when the door handle 13 is not in use in which almost no bending exists in the vicinity of the fixing portion 15c of the elastic element 15.

Part of a bell crank arm 17 is brought into abutment with the arm portion 16, and part of a balance weight 18 is brought into abutment with the bell crank arm 17. Then, since a coil-shaped spring 19 biases the balance weight 18 with a predetermined spring pressure, the spring pressure of the spring 19 is applied to the arm portion 16 via the balance weight 18 and the bell crank arm 17, so that the door handle 13 is normally pressed in a closing direction (towards the inside of the vehicle). In addition, the aforesaid press biasing action to the elastic element 15 by the end portion 16a results from the spring pressure of the spring 19 applied to the end portion 16a via the arm portion 16, and the spring characteristics of the elastic element 15 are set such that the pressure which the end portion 16a applies to the elastic element 15 by virtue of the spring pressure of the spring 19 becomes larger than the resiliency of the elastic element 15 as a leaf spring.

An operation center arm portion 20 is provided on the door handle 13 on an opposite side to a side thereof where the arm portion 16 is provided, whereby when the door handle 13 is pulled towards the outside of the vehicle, the door handle 13 is rotated and displaced about the operation center arm portion 20 which acts substantially as a rotational center. A key cylinder 21 is provided on the arm portion 16 in such a manner as to be adjacent thereto.

Since the configurations of the piezoelectric sensor 4 and the sensor signal detecting unit 5 were described in Embodiment 1, a detailed description thereof will be omitted here.

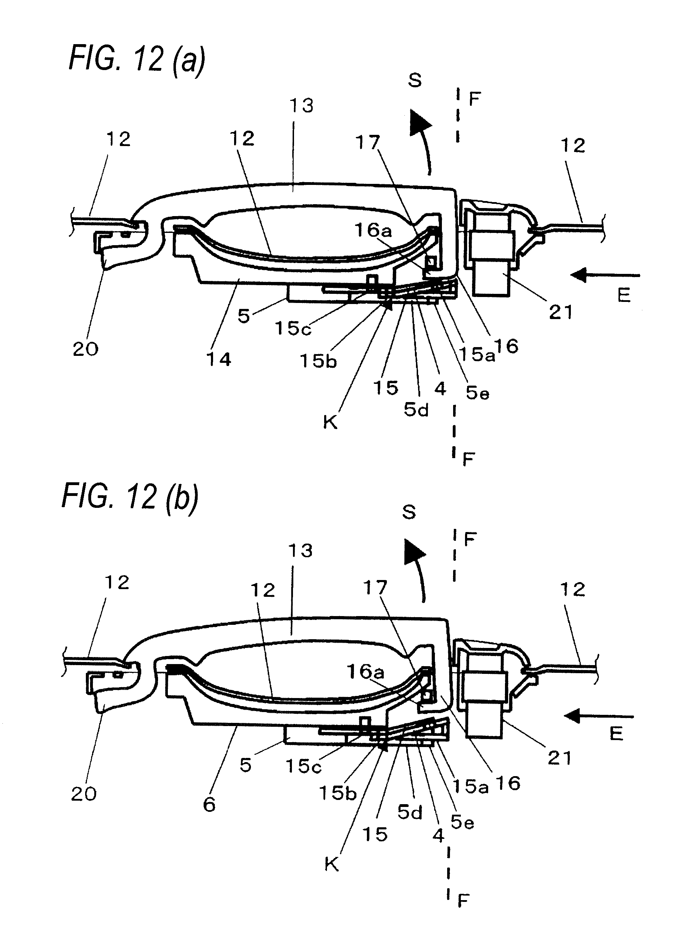

Figs. 12(a), (b) are schematic diagrams which show how the door handle 13, the piezoelectric sensor 4, the elastic element 15 and the arm portion 16 are displaced when the door handle 13 is gripped by the hand fingers so as to perform a door opening operation. Here, Fig. 12(a) corresponds to the sectional view taken along the line A-A in Fig. 9 and is a schematic diagram which shows a state in which the elastic element 15 is displaced but still remains in contact with the arm portion 16, when the door handle 13 is pulled towards the outside of the vehicle (in a direction indicated by an arrow S in the figure), and Fig. 12(b) is a schematic diagram which shows a state in which the door handle 13 is pulled further towards the outside of the vehicle (in a direction indicated by an arrow S in the figure) from the state shown in Fig. 12(a), and the elastic element 15 has completed its displacement and is separated from the arm portion 16.

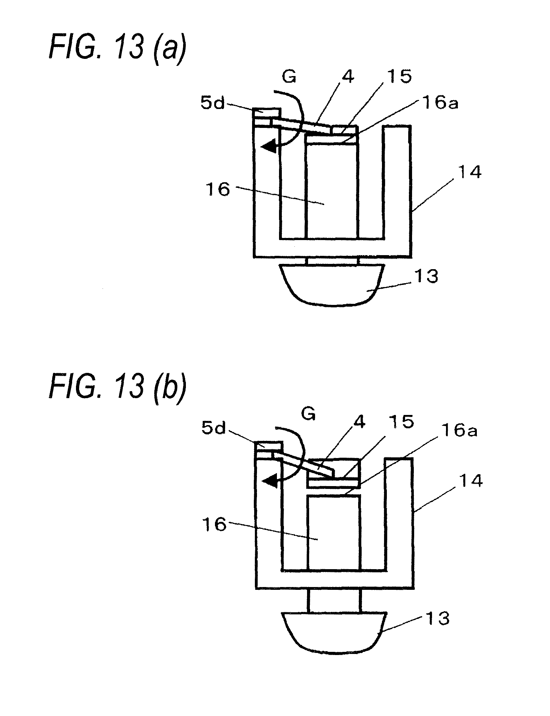

In addition, Figs. 13(a) and (b) are sectional views which results when Figs. 12(a) and (b) are taken along the lines F-F and viewed in directions indicated by arrows E, respectively, and in the figures, the top denotes the inside of the vehicle, whereas the bottom denotes the outside of the vehicle.

As shown in Figs. 12(a) and 13(a), when the door handle 13 is displaced towards the outside of the vehicle, the end portion 16a of the arm portion is displaced towards the outside of the vehicle, and the elastic element 15, which is biased by the end portion 16a with the predetermined pressure, is displaced towards the outside of the vehicle on a support portion 15a side thereof centered at the vicinity of the fixing portion 15c while in contact with the end portion 16a. Then, as shown in Figs. 12(b) and 13(b), when the door handle 13 is pulled further towards the outside of the vehicle, the end portion 16a of the arm portion 16 is also displaced further towards the outside of the vehicle, whereby the press biasing action to the elastic element 15 by the end portion 16a is lost, and the elastic element 15 is displaced no further. Namely, when there is applied no pressure from the end portion 16a, the elastic element has a shape in which the elastic element 15 is bent in advance towards the outside of the vehicle centered at the vicinity of the fixing portion 15c, and the piezoelectric sensor 4 is imparted a shape by the elastic element 15 in which the piezoelectric sensor 4 is deformed torsionally in advance in a direction indicated by an arrow G in Fig. 13(b) at the distal end 5e of the guide portion 5e. Then, when the piezoelectric sensor 4, the elastic element 15 and the sensor signal detecting unit 5 are mounted on the casing portion 14 with the end portion 16a of the arm portion 16 and the elastic element 15 brought into contact with each other, as shown in Fig. 10(b), the elastic element 15 is biased by the end portion 16a of the arm portion 16 with the pressure in a direction in which the torsional deformation, which has been imparted in advance to the piezoelectric sensor 4 by the end portion 16a of the arm portion 16, is reduced or preferably into a state in which the torsional deformation is eliminated, and the elastic element 15 itself is also deformed in the vicinity of the fixing portion 15c in a direction in which the bending is reduced. Note that the direction G of the torsional deformation is preferably opposite to the direction in which the belt-shaped electrode is wound around the piezoelectric element 4c as the outer electrode 4d. This is because in the event that the direction G is made to be the same as the direction in which the belt-shaped electrode is wound around the piezoelectric element 4, even when a torsional deformation is attempted to be applied to the piezoelectric sensor 4, since the deformation is applied in the direction in which the belt-shaped electrode is wound (tightened) up, an effective torsional deformation becomes difficult to be applied.

Next, the function will be described. When the door handle 13 is touched and gripped by the hand fingers to be pulled towards the outside of the vehicle, the door handle 13 is displaced towards the outside of the vehicle, and the arm portion 16 is displaced while linking with the door handle 13. Even when an inner wall surface of the door handle 13 is lightly touched by the hand, a minute vibration is generated and then, a displacement is generated in the door handle 13, whereby the arm portion 16 is displaced while linking with the displacement of the door handle 13. Then, as shown in Figs. 12(a) and 13(a), when the door handle 13 is displaced towards the outside of the vehicle, the end portion 16a of the arm portion 16 is displaced towards the outside of the vehicle, and the elastic element 15, which is biased by the end portion 16a with the predetermined pressure, is displaced towards the outside of the vehicle on a support portion 15a side thereof centered at the vicinity of the fixing portion 15c while in contact with the end portion 16a. When the elastic element 15 is so displaced, the piezoelectric sensor 4, which is supported on the elastic element 15, is also bent and deformed at a point K in Fig. 12(a), and since a pulling force towards the outside of the vehicle is applied at the bent portion 4a, the piezoelectric sensor 4 is deformed in a direction in which the radius of curvature of the bent portion 4a is increased. In addition, when the elastic element 15 is displaced, a torsional deformation is applied in the direction G in Fig. 13(b) at the distal end 5e of the guide portion 5e. Then, the piezoelectric sensor 4 generates an output signal which results from superposition of a voltage signal that is generated by virtue of a piezoelectric effect imposed by the bending deformation at the point K, a voltage signal that is generated by virtue of a piezoelectric effect imposed by the deformation of the bent portion 4a and a voltage signal that is generated by virtue of a piezoelectric effect imposed by the torsional deformation at the distal end 5e of the guide portion 5e.

The displacement of the elastic element 15 continues until the end portion 16a of the arm portion 16 is displaced further towards the outside of the vehicle when the door handle 13 is pulled further towards the outside of the vehicle, whereby the press biasing action to the elastic element 15 by the end portion 16a is lost, and as shown in Figs. 12(b) and 13(b), since the elastic element 15 is displaced no further when the press biasing action to the elastic element 15 by the end portion 16a is lost, the piezoelectric sensor 4 is not displaced, either. However, at this point in time, the piezoelectric sensor 4 has already received the displacement that has been generated as a result of the operation of the door handle 13 and outputted the signal sufficiently.

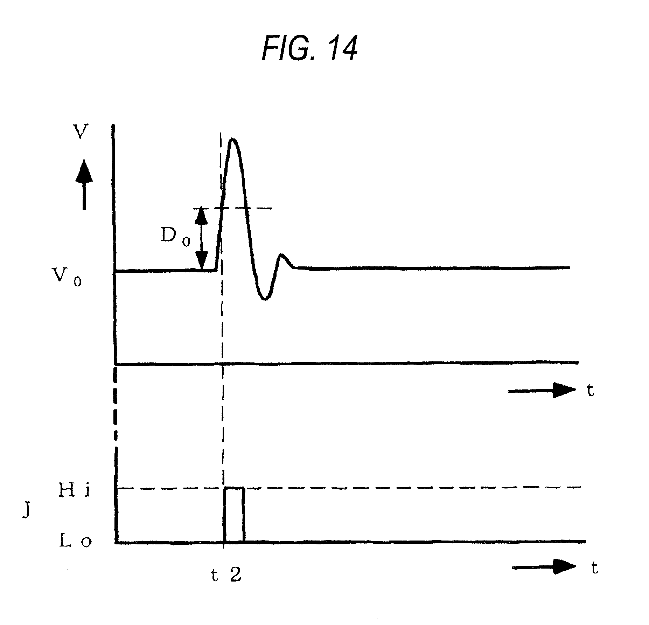

Fig. 14 is a characteristic chart which shows a signal V which is amplified and filtered within the sensor signal detecting unit 5 and a determination output J of the determination unit, both resulting when the piezoelectric sensor 4 outputs the signal as described above. In the figure, an axis of ordinate denotes sequentially from the top V, J, and an axis of abscissa denotes time t. When the piezoelectric sensor 4 is deformed by the aforesaid operation of the door handle 13, a signal is outputted from the piezoelectric sensor 4 by virtue of the piezoelectric effect in response to an acceleration with which the piezoelectric sensor 4 is deformed. As this occurs, a signal having a frequency of about 3 to 8Hz appears in the output signal, and the signal so appearing is amplified and filtered within the sensor signal detecting unit 5, whereby a signal as indicated by V in Fig. 7 is obtained.

The determination unit determines that at least one of a contact of an object to the door handle 13, and an opening operation and a closing operation by the door handle 13 has occurred and outputs a pulse signal of Lo→Hi→Lo as a determination output at time t2 in case an absolute value |V-V0| of an amplitude of V from V0 is D0 or more. The reason an absolute value of the amplitude is used is that there may occur a case where the polarity of the signal in Fig. 14 becomes opposite depending on the position and deformation state of the piezoelectric sensor, and to be specific, a window comparator may be used as the determination unit.

Note that also when the door handle 13 is pressed from the outside of the passenger compartment, the arm portion 16 is slightly deformed towards the inside of the vehicle and the elastic element 15 is pressed towards the inside of the vehicle, whereby the piezoelectric sensor 4 is bent and deformed towards the inside of the vehicle at the point K and is deformed torsionally in an opposite direction to the direction G, and the piezoelectric sensor 4 outputs a voltage signal by virtue of a piezoelectric effect imposed by the deformation thereof, thereby making it possible to detect that the door handle 13 is pressed from the outside of the vehicle.

In this door handle apparatus, a similar advantage to that provided by Embodiment 1 is provided by the function that has been described heretofore, and moreover, since the elastic element 15 supports the piezoelectric sensor 4 with at least part thereof deformed torsionally in advance, whereby when the door handle 13 is displaced minutely, the displacement is applied to the piezoelectric sensor 4 via the arm portion 16, which functions as an operating unit, and the elastic element 15, so that the torsionally deformed portion is twisted further or is deformed in the direction in which the twist is released, the output signal in response to the deformation is generated from the piezoelectric sensor 4, thereby making it possible to detect with high sensitivity a minute displacement of the door handle 13 which would result when a human being or an object is brought into contact with the door handle 13. Consequently, a sufficient signal output can be obtained through a simple touch to the door handle 13, thereby making it possible to detect at least one of the contact to the door handle 13, the opening operation by the door handle 13 and the closing operation by the door handle.

Note that in Embodiment 2, while the piezoelectric sensor 4 is configured so as to be brought into indirect contact with the arm portion 16 which operates while linking with the door handle 13 via the elastic element 15, a configuration may be adopted in which the piezoelectric sensor 4 is brought into direct or indirect contact with part of another constituent element which operates while linking with the door handle 13 such as the bell crank arm 17 or the balance weight 18, whereby the piezoelectric sensor 4 can be deformed by virtue of the displacement of the door handle 13.

In addition, the piezoelectric sensor 4 may be provided in such a manner as to be wound around the spring 19, so that a displacement of the spring 19 in the rotating direction by virtue of the operation of the door handle 13 be detected by the piezoelectric sensor 4.

In particular, in the embodiment, since the flexible piezoelectric sensor is used, there is provided an advantage that the piezoelectric sensor itself can be deformed into an appropriate shape so as to easily be annexed to various configuration only with addition of a simple configuration without modifying largely the configurations of door handles which are currently available.

Note that in Embodiments 1 and 2 which have been described heretofore, while the leaf springs are used as the elastic elements 8, 15, other elastic elements such as coil springs and torsion bars may be used.

In addition, in Embodiments 1 and 2 above, while the elastic elements 8, 15 are used, the piezoelectric sensor 4 may be configured so as to be in direct abutment with part of the arm portion 9, 16, and as this occurs, since the displacement of the arm portion 9, 16 is transmitted directly to the piezoelectric sensor 4, the sensitivity is enhanced.

Additionally, in place of the elastic elements 8, 15, the covering layer 4e of the piezoelectric sensor 4 may be made of an elastic element having a predetermined modulus of elasticity, or a predetermined modulus of elasticity may be provided by changing the shape of the covering layer 4e, so that part of the piezoelectric sensor 4 exhibits a predetermined pressure so as to bias itself to be brought into contact with part of the arm portion 9, 16 when the door handle is not in use.

In addition, vehicles can be provided in which the door handle apparatuses according to Embodiments 1 and 2 are applied to a smart entry system for doors such as side doors and sliding doors, and tailgates, and buildings can be provided in which the same door handle apparatuses are applied to a smart entry system for doors such as front doors.

Additionally, various apparatuses on an automobile may be controlled using the door handle apparatuses of Embodiments 1 and 2. For example, a power window system is activated to open glass windows for ventilation of the interior of the passenger compartment by detecting the contact of a human body to the door handle, or an automotive air conditioning system, seat heaters, an automotive navigation system or the like may be activated by detecting the contact of a human body to the door handle, the door handle apparatuses of Embodiments 1 and 2 being thus be able to contribute to improvement in comfortableness and convenience in the so-called car life.

In addition, in Embodiments 1 and 2 above, while the flexible piezoelectric sensor is used, other sensors may be used which generated an output signal in response to a deformation based on the displacement of the door handle, and for example, a cable-shaped or belt-shaped sensor of a capacitance type may be used in which the electrostatic capacity changes by virtue of deformation or an optical sensor may be used in which the amount of transmitted light changes by virtue deformation.

### (Embodiment 3)

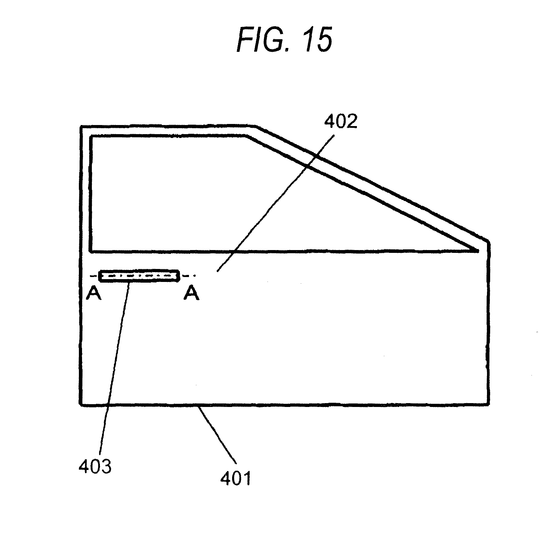

A third embodiment of the invention will be described by reference to Figs. 15 to 21.

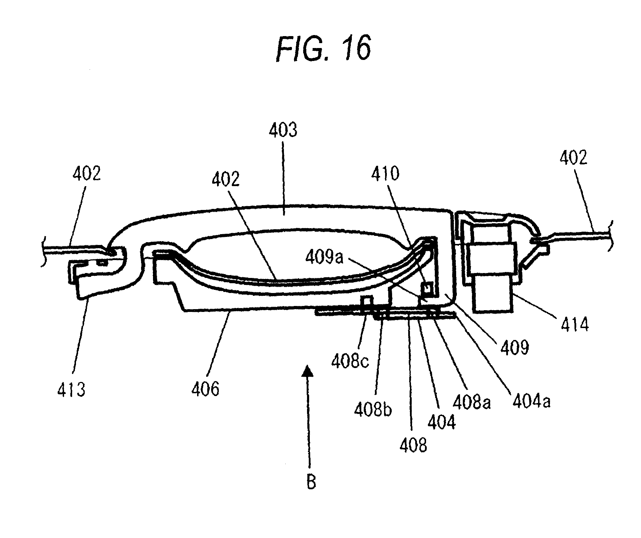

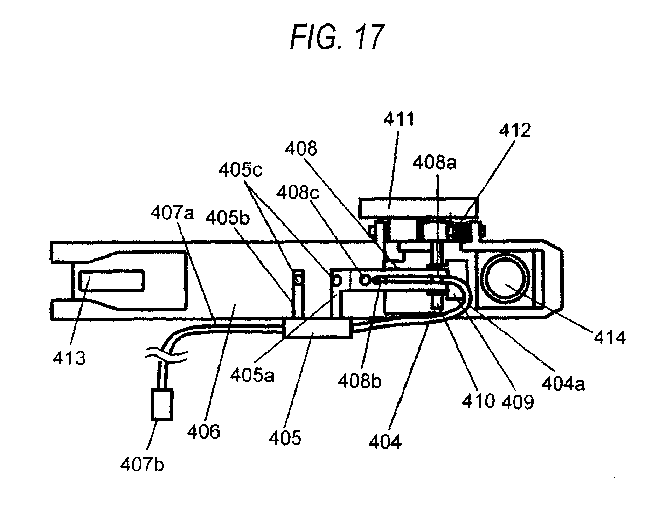

Fig. 15 is an external view of an automotive door which includes a door handle apparatus according to a third embodiment of the invention. In the figure, a door 401 has a gripping door handle 403 as a handle portion which is mounted on an outer panel (door panel) 402 thereof. Fig. 16 is a sectional view of the door handle apparatus taken along the line A-A in Fig. 15 (as viewed from a top side of a vehicle body), and in the figure, a left side denotes a front of the vehicle body, whereas the right side denotes a rear of the vehicle body. Fig. 17 is an external view of the door handle apparatus as viewed in a direction indicated by an arrow B in Fig. 16, that is, from the inside of a passenger compartment. In Figs. 16 and 17, a flexible cable-shaped piezoelectric sensor 404 is mounted on a frame portion 406 together with a sensor signal detecting unit 405. The piezoelectric sensor 4, a power supply and detection signal output cable 407a and a connector 407b are connected to the sensor signal detecting unit 405. As shown in Fig. 17, the piezoelectric sensor 404, an elastic element 408 made of a leaf spring and the sensor signal detecting unit 405 are molded together as an integrated unit to thereby constitute a sensor unit 450. Then, the sensor unit 450 is mounted on the frame portion 406 with machine screws 405c via metallic mounting fixtures 405a, 405b which are provided on the sensor signal detecting unit 405.

The piezoelectric sensor 404 is supported on and fixed to the elastic element 408 at an end portion (a support portion 408a in the figure) of the elastic element 408, which is made of a leaf spring, and at a distal end portion (a support portion 408b in the figure) of the piezoelectric sensor 404. In addition, the piezoelectric sensor 404 has a bent portion 404a in a direction in which the piezoelectric sensor 404 extends from the end portion (the support portion 408a) of the elastic element 408. The elastic element 408 is joined to the metallic mounting fixture 405a of the sensor signal detecting unit 405 by virtue of welding at the other end thereof which lies in a direction towards a fixing portion 408c, and the piezoelectric sensor 404 and the elastic element 408 are molded integrally with the sensor signal detecting unit 405 via the metallic mounting fixture 405a.

The elastic element 408 is fixed at the fixing portion 408c in a cantilever-like fashion. In addition, the elastic element 408 is brought into contact with an arm portion 409 as a movable portion which operates while linking with the door handle 403 at an end portion 409a. Here, while the elastic element 408 originally has a shape in which the elastic element 408 is bent towards the outside of the passenger compartment at a predetermined angle in the vicinity of the fixing portion 408c, since the elastic element 408 is biased to be pushed in towards the inside of the passenger compartment by the end portion 409a with a predetermined pressure while the door handle 403 is not in use (a normal state in which the elastic element 408 is simply mounted on the door panel without a contact of a human being or an object thereto and an opening operation and a closing operation which are performed thereby), a state results when the door handle 403 is not in use in which almost no bending exists in the vicinity of the fixing portion 408c of the elastic element 408.

Part of a bell crank arm 410 is brought into abutment with the arm portion 409, and part of a balance weight 411 is brought into abutment with the bell crank arm 410. Then, since a coil-shaped spring 412 biases the balance weight 411 with a predetermined spring pressure, the spring pressure of the spring 412 is applied to the arm portion 409 via the balance weight 411 and the bell crank arm 410, so that the door handle 403 is normally pressed in a closing direction (towards the inside of the vehicle). In addition, the aforesaid press biasing action to the elastic element 408 by the end portion 409a results from the spring pressure of the spring 412 applied to the end portion 409a via the arm portion 409, and the spring characteristics of the elastic element 408 are set such that the pressure which the end portion 409a applies to the elastic element 408 by virtue of the spring pressure of the spring 412 becomes larger than the resiliency of the elastic element 408 as a leaf spring.

An operation center arm portion 413 is provided on the door handle 403 on an opposite side to a side thereof where the arm portion 409 is provided, whereby when the door handle 403 is pulled towards the outside of the passenger compartment, the door handle 403 is rotated and displaced about the operation center arm portion 413 which acts substantially as a rotational center. A key cylinder 414 is provided on the arm portion 409 in such a manner as to be adjacent thereto.

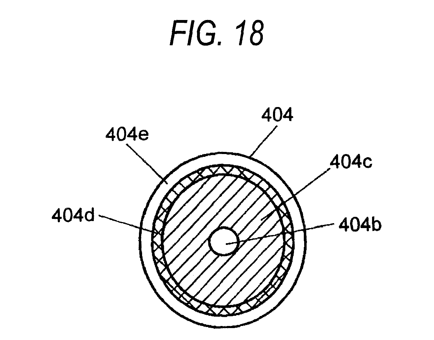

Fig. 18 is a sectional view of the piezoelectric sensor 404. The piezoelectric sensor 404 is such that a central electrode 404b, a piezoelectric element 404c, an outer electrode 404d and a covering layer 404e are molded coaxially and has a configuration which has superior flexibility as a whole. While a normal metallic solid conductor is used for the central electrode 404b, here, an electrode is used in which a metallic coil is wound around an insulating polymeric fiber. Polyester fiber which is commercially used for electric blankets and a copper-alloy which contains 5wt% silver are preferred as the insulating polymeric fiber and the metallic coil, respectively.

The piezoelectric element 404c is such as to be made by kneading together polyethylene resin and piezoelectric ceramic (here, lead titanate zirconate) powder and is continuously extruded together with the central electrode 404b to thereby form the flexible piezoelectric element 404c. Note that it is desirable in consideration of effect to the environment to use a non-lead material such as bismuth-sodium titanate based or niobate-alkali based piezoelectric ceramic material as the piezoelectric ceramics.

A DC voltage of several kilovolts is applied between the central electrode 404b and an artificial electrode which is brought into contact with a surface of the piezoelectric element 404c after the piezoelectric element 404c has been extruded around a circumference of the central electrode 404b so as to polarize the piezoelectric element 404c, whereby a piezoelectric effect is imparted to the piezoelectric element 404c. A belt-shaped electrode in which a metallic film is bonded on to a polymeric layer is used for the outer electrode 404d, and the belt-shaped electrode is made to be wound around a circumference of the piezoelectric element 404c. Polyethylene terephthalate (PET) is used as the polymeric layer, and since electrodes in which an aluminum film is bonded on to both sides of the polymeric layer have a high thermal stability at 120°C and are mass produced commercially, they are preferred for use as the outer electrode 404d. Note that in order to shield the electrode against noise in an external environment, it is preferable that the outer electrode 404d is wound around the circumference of the piezoelectric element 404c in such a manner as to overlap partially. Although vinyl chloride is preferred for use for the covering layer 4e in terms of reliability, it is preferable in consideration of effect to the environment to use non-vinyl-chloride based materials such as thermoplastic elastomer.

The sensor signal detecting unit 5 is made up of at least one band-pass filter which is made up, in turn, of an operational amplifier and peripheral components and, if necessary, a band elimination filter unit or a low-pass filter which is made up of an operational amplifier and peripheral components and is adapted to remove signal components including a natural vibration frequency of the door 401. In addition, the sensor signal detecting unit 405 includes a determination unit which detects at least one of a contact of an object to the door handle 403, an opening operation and a closing operation by the door handle 403 based on an output signal from the filter unit. A comparator is used as the determination unit. The filter unit and the determination unit use devices whose consumed currents are 1mA or lower, respectively.

As characteristics of the band-pass filter unit, the band-pass filter unit is set to have characteristics which allows for passage through a frequency area of, for example, 3Hz to 8Hz as a characteristic frequency band by analyzing the frequency of an output signal outputted from the piezoelectric sensor 404 when the door handle 403 is operated experimentally.

In addition, when setting the band elimination filter unit or the low-pass filter unit, a setting is implemented by verifying a characteristic frequency band by analyzing the frequency of an output signal outputted from the piezoelectric sensor 404 when the door 401 is intentionally knocked on, for example. For example, since when the door 401 is knocked on intentionally, a signal having a peak in a frequency area of, mainly, 10Hz or more can be verified from an output signal from the piezoelectric sensor 404, in this case, the low-pass filter is set to characteristics in which the frequency area of 10Hz or more is removed. In addition, in the event that the intensity of the natural vibration is so small that little influence is given to an output signal from the piezoelectric sensor 404, neither the band elimination filter unit nor the low-pass filter unit may be provided.

Furthermore, since it is assumed that the natural vibration characteristic differs depending on types of vehicles and sizes and weight of doors, it is preferred to optimize the setting of the band-pass filter unit, the band elimination filter unit and the low-pass filter unit based on the aforesaid experimental analysis.

The detecting unit 405 is preferably covered with a shield member so as to be electrically shielded in order to remove external electric noise. In addition, a feedthrough capacitor, an EMI filter or the like may be added to input and output portions of the detecting unit 405 as a countermeasures against a strong electric field.

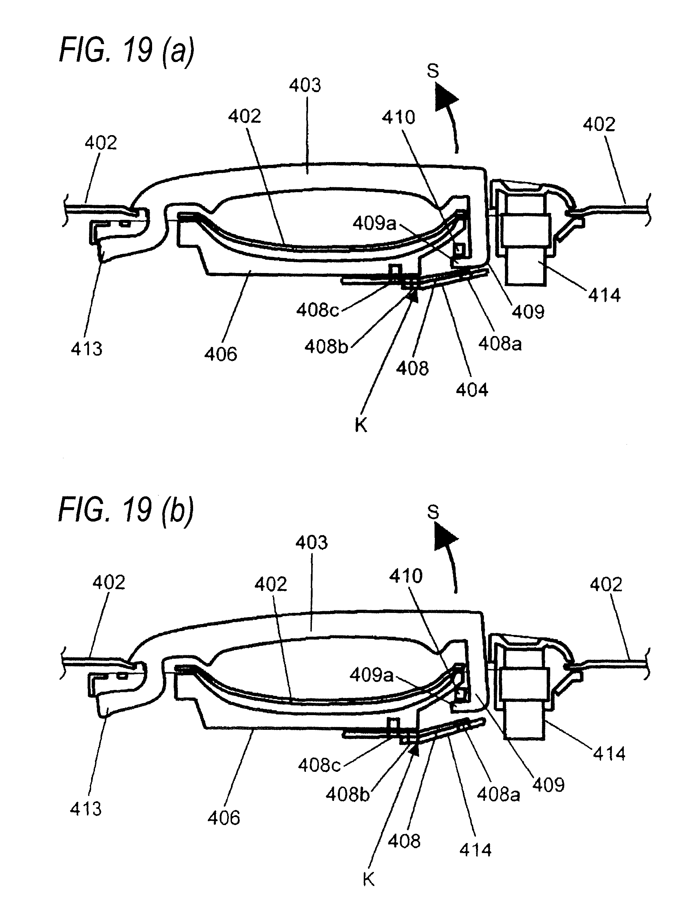

Next, the function will be described. When the door handle 403 is touched and gripped by the hand fingers to be pulled towards the outside of the passenger compartment, the door handle 403 is displaced towards the outside of the passenger compartment, and the arm portion 409 is displaced while linking with the door handle 403. Even when a passenger compartment side wall surface of the door handle 403 is lightly touched by the hand, a minute vibration is generated and then, a displacement is generated in the door handle 403, whereby the arm portion 409 is also displaced. Figs. 19(a), (b) are schematic diagrams which show how the door handle 403, the piezoelectric sensor 404, the elastic element 408 and the arm portion 409 are displaced when the door handle 403 is gripped by the hand fingers so as to perform a door opening operation. Here, Fig. 19(a) corresponds to the sectional view taken along the line A-A in Fig. 15 and is a schematic diagram which shows a state in which the elastic element 408 is displaced but still remains in contact with the arm portion 409, when the door handle 403 is pulled towards the outside of the passenger compartment (in a direction indicated by an arrow S in the figure), and Fig. 19(b) is a schematic diagram which shows a state in which the door handle 403 is pulled further towards the outside of the passenger compartment (in a direction indicated by an arrow S in the figure) from the state shown in Fig. 19(a), and the elastic element 408 has completed its displacement and is separated from the arm portion 409.

As shown in Figs. 19(a), when the door handle 403 is displaced towards the outside of the passenger compartment, the end portion 409a of the arm portion 409 is displaced towards the outside of the passenger compartment, and the elastic element 408, which is biased by the end portion 409a with the predetermined pressure, is displaced towards the outside of the passenger compartment on a support portion 408a side thereof centered at the vicinity of the fixing portion 408c while in contact with the end portion 409a. When the elastic element 408 is so displaced, the piezoelectric sensor 404, which is supported on the elastic element 408, is also bent and deformed at a point K in Fig. 19(a), and since a pulling force towards the outside of the passenger compartment is applied at the bent portion 404a, the piezoelectric sensor 404 is deformed in a direction in which the radius of curvature of the bent portion 404a is increased. Then, the piezoelectric sensor 404 generates an output signal which results from superposition of a voltage signal that is generated by virtue of a piezoelectric effect imposed by the bending deformation at the point K, and a voltage signal that is generated by virtue of a piezoelectric effect imposed by the deformation of the bent portion 404a.

The displacement of the elastic element 408 continues until the end portion 409a of the arm portion 409 is displaced further towards the outside of the passenger compartment when the door handle 403 is pulled further towards the outside of the passenger compartment, whereby the press biasing action to the elastic element 408 by the end portion 409a is lost, and as shown in Figs. 19(b), since the elastic element 408 is displaced no further when the press biasing action to the elastic element 408 by the end portion 409a is lost, the piezoelectric sensor 404 is not displaced, either. However, at this point in time, the piezoelectric sensor 404 has already received the displacement that has been generated as a result of the operation of the door handle 403 and outputted the signal sufficiently.

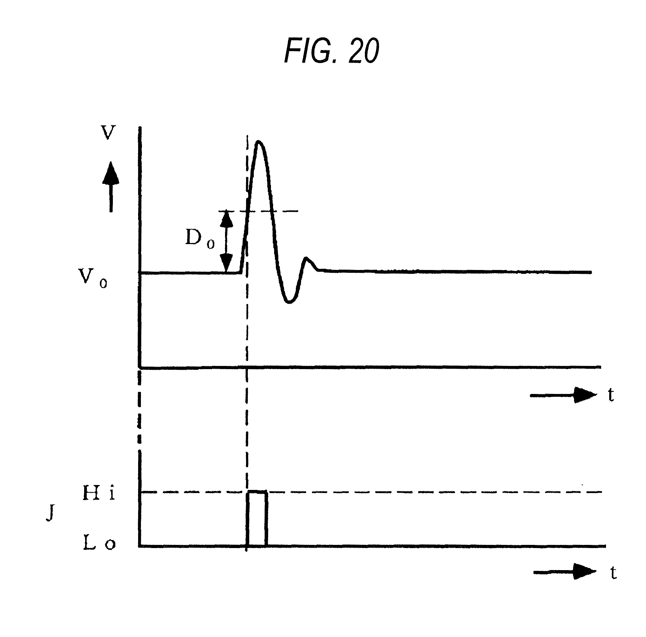

Fig. 20 is a characteristic chart which shows a signal V which is amplified and filtered within the sensor signal detecting unit 405 and a determination output J of the determination unit, both resulting when the piezoelectric sensor 404 outputs the signal as described above. In the figure, an axis of ordinate denotes sequentially from the top V, J, and an axis of abscissa denotes time t. When the piezoelectric sensor 404 is deformed by the aforesaid operation of the door handle 403, a signal is outputted from the piezoelectric sensor 404 by virtue of the piezoelectric effect in response to an acceleration with which the piezoelectric sensor 404 is deformed. As this occurs, a signal having a frequency of about 3 to 8Hz appears in the output signal, and the signal so appearing is amplified and filtered within the sensor signal detecting unit 405, whereby a signal as indicated by V in Fig. 20 is obtained.

The determination unit determines that at least one of a contact of a human being or an object to the door handle 403, and an opening operation and a closing operation by the door handle 403 has occurred and outputs a pulse signal of Lo→Hi→Lo as a determination output at time t1 in case an absolute value |V-V0| of an amplitude of V from V0 is D0 or more. The reason an absolute value of the amplitude is used is that there may occur a case where the polarity of the signal in Fig. 20 becomes opposite depending on the position and deformation state of the piezoelectric sensor 404, and to be specific, a window comparator may be used as the determination unit.

Note that also when the door handle 403 is pressed from the outside of the passenger compartment, the arm portion 409 is slightly deformed towards the inside of the passenger compartment and the elastic element 408 is pressed towards the inside of the passenger compartment, whereby the piezoelectric sensor 404 is deformed, and therefore, a similar detection is made possible in this case, as well.

By the function that has been described heretofore, in this door handle apparatus, the piezoelectric sensor 404 has such flexibility as to be annexed to the door handle 403, whereby a minute displacement of the door handle 403 can be detected with high sensitivity. Consequently, a sufficient signal output can be obtained only through a simple touch to the door handle 403, whereby at least one of the contact to the door handle 403, the opening operation by the door handle and the closing operation by the door handle can be detected. In addition, since electrodes do not have to be exposed to the outside, the piezoelectric sensor 404 is made difficult to be affected by disturbance, and dust, rain and snow that would otherwise adhere thereto. Furthermore, since the piezoelectric sensor 404 can be deformed with suppleness, there are imposed few limiting conditions on a setting place thereof, and a space where to dispose the piezoelectric sensor 404 is diminished.

In addition, when the door handle 403 is displaced minutely due to a human being or an object being brought into contact with the door handle 403, the arm portion 409 is displaced while linking with the door handle 403, and part of the elastic element 408 continues to be displaced while in contact with the end portion 409a of the arm portion 409 until the pressure applied thereto is lost. When the elastic element 408 is displaced, part of the piezoelectric sensor 404, which is supported on the elastic element 408, is also deformed together with the elastic element 408 and generates an output signal in response to the deformation. Then, it becomes possible to detect the minute displacement of the door handle 403 based on the output signal from the piezoelectric sensor 404 with high sensitivity.

In addition, since the piezoelectric sensor 404 receives the displacement of the arm portion 409 via the elastic element 408, there occurs no case where, for example, the piezoelectric sensor 404 comes into contact with the arm portion 409 to thereby get worn or is subjected to a direct impact that is generated by an abrupt operation of the door handle 403, reliability being thereby improved.

Additionally, since, when the pressure applied to the elastic element 408 is released in conjunction with an opening operation by the door handle 403, the elastic element 408 is displaced no further, the piezoelectric sensor 404 is not deformed, either, whereby there occurs no case where the piezoelectric sensor 404 disconnects due to an excessive deformation thereof.

In addition, since the elastic element 408 is molded substantially into a plate shape and is fixed at the one end thereof in a cantilever-like fashion, a configuration can be realized in which the predetermined pressure is applied thereto from the arm portion 409 in an extremely simple shape.

Additionally, the piezoelectric sensor 404 is such as to have the bent portion 404a in the direction in which the piezoelectric sensor 404 extends from the support portion 408a of the elastic element 408, and therefore, the bent portion 404a of the piezoelectric sensor 404 also deforms in association with the displacement of the elastic element 408, whereby the piezoelectric sensor 404 generates an output signal in response to the deformation of the bent portion 404a. Consequently, since the output signal in response to the deformation of the bent portion 404a is outputted while being superposed on an output signal generated in association with the deformation of the elastic element 408, the sensitivity of the piezoelectric sensor 404 is increased.

In addition, since the piezoelectric sensor 404, the elastic element 408 and the sensor signal detecting unit 405 are molded together so as to constitute the sensor unit 450 so that since the piezoelectric sensor 404, the elastic element 408 and the sensor signal detecting unit 405 can be mounted on the frame portion 406 as the sensor unit 450, the assembly of the door handle apparatus can be implemented with efficiency.

Note that in Embodiment 3, while the piezoelectric sensor 404 is configured so as to be brought into indirect contact with the arm portion 409 which operates while linking with the door handle 403 via the elastic element 408, a configuration may be adopted in which the piezoelectric sensor 404 is brought into direct or indirect contact with part of another constituent element which operates while linking with the door handle 403 such as the bell crank arm 410 or the balance weight 411, whereby the piezoelectric sensor 404 can be deformed by virtue of the displacement of the door handle 403.

In addition, the piezoelectric sensor 404 may be provided in such a manner as to be wound around the spring 412, so that a displacement of the spring 412 in the rotating direction by virtue of the operation of the door handle 403 be detected by the piezoelectric sensor 404.

Additionally, in the embodiment, since the flexible piezoelectric sensor is used, there is provided an advantage that the piezoelectric sensor itself can be deformed into an appropriate shape so as to easily be annexed to various configuration only with addition of a simple configuration without modifying largely the configurations of door handles which are currently available.

### (Embodiment 4)

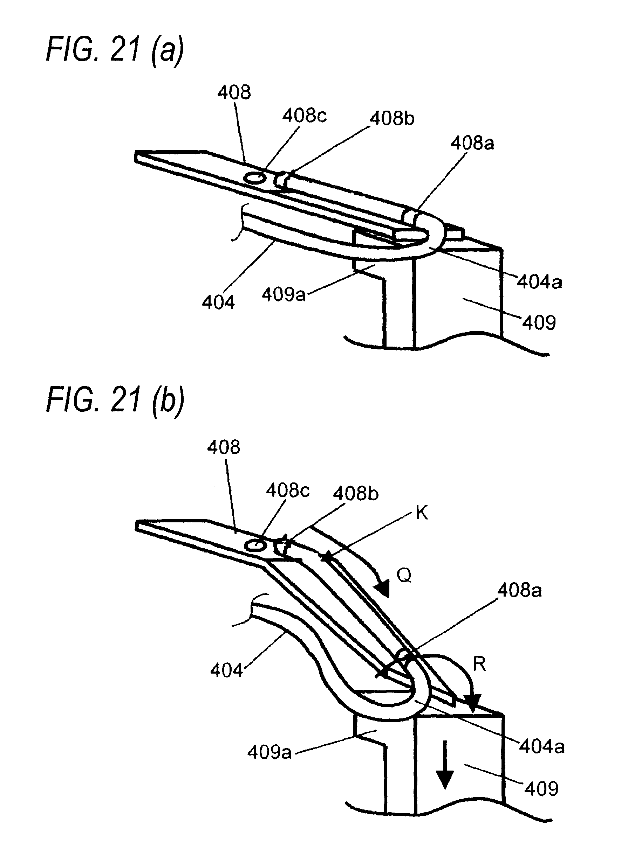

A fourth embodiment will be described by reference to Fig. 21.

What this embodiment differs from Embodiment 3 resides in a fact that part of an elastic element 408 is configured so as to be brought into contact with part (an end portion 409a) of an arm portion 409 so that a predetermined torsional stress is applied to the elastic element 408. Here, Fig. 21(a) is a schematic diagram which shows the elastic element 408 and a piezoelectric sensor 404 when a door handle 403 is not in use, and Fig. 12(b) is a schematic diagram which shows the elastic element 408 and the piezoelectric sensor 404 in such a state that the door handle 403 is pulled towards the outside of the vehicle. As shown in Figs. 21(a), (b), while the elastic element 408 originally has a shape in which the elastic element 408 is twisted in a direction indicated by an arrow R in Fig. 21(b) in the vicinity of a fixing portion 408c, as well as a shape in which the elastic element 408 is bent towards the outside of the passenger compartment at a predetermined angle in the vicinity of the fixing portion 408c, since the elastic element 408 is biased to be pushed in towards the inside of the passenger compartment by the end portion 409a with a predetermined pressure due to a spring pressure of a spring 412 while the door handle 403 is not in use (a normal state in which the elastic element 408 is simply mounted on the door panel without a contact of a human being or an object thereto and an opening operation and a closing operation which are performed thereby), a state results when the door handle 403 is not in use in which almost no twisting and bending exists in the vicinity of the fixing portion 408c of the elastic element 408. Here, the spring characteristics of the elastic element 408 are set such that the pressure which the end portion 409a applies to the elastic element 408 by virtue of the spring pressure of the spring 412 becomes larger than the resiliency of the elastic element 408 as a leaf spring.

From the same figure, as with Embodiment 3, when the door handle 403 is displaced minutely due to a human being or an object being brought into contact with the door handle 403, the arm portion 409 is displaced while linking with the door handle 403, and part of the elastic element 408 continues to be displaced while in contact with the end portion 409a of the arm portion 409 until the pressure applied thereto is lost. When the elastic element 408 is displaced, part of the piezoelectric sensor 404, which is supported on the elastic element 408, is also deformed together with the elastic element 408 and generates an output signal in response to the deformation.

Furthermore, when the door handle is not in use, part of the elastic element 408 is biased with a predetermined torsional stress to thereby be brought into contact with the end portion 409a of the arm portion 409, and when the door handle 403 is displaced minutely due to a human being or an object being brought into contact with the door handle 403, the arm portion 409 is displaced while linking with the door handle 403, and the part of the elastic element 408 continues to be displaced while in contact with the end portion 409a of the arm portion 409 until the torsional stress so applied thereto is lost. As this occurs, the part of the elastic element 408 is deformed in a direction in which the applied torsional stress is released, that is, a direction in which the part of the elastic element 408 attempts to restore its original shape from the twisted one. As this occurs, part of the piezoelectric sensor 404, which is supported by the elastic element 408, is also twisted and deformed together with the part of the elastic element 408, and the piezoelectric sensor 404 generates an output signal in response to the deformation.

Consequently, a superposed voltage signal corresponding to both bending and twisting is outputted from the piezoelectric sensor 404, whereby the minute displacement of the door handle 403 can be detected more reliably than a case where only bending is generated as with Embodiment 3.

Note that also when the door handle 403 is pressed from the outside of the passenger compartment, the arm portion 409 is slightly deformed towards the inside of the passenger compartment and the elastic element 408 is pressed towards the inside of the passenger compartment, whereby the piezoelectric sensor 404 is deformed, and therefore, a similar detection is made possible in this case, as well.

In addition, in Embodiment 4, a configuration may be adopted in which the elastic element 408 is not bent but is made to deform only torsionally.

Additionally, the configuration which applies the torsional deformation to the piezoelectric sensor 404 is not limited to that described in Embodiment 4, but other configurations may be adopted, provided that the torsional deformation is generated in the piezoelectric sensor 404 by at least one of a contact of a human being or an object to the door handle 403, and an opening operation and a closing operation by the door handle 403.

In addition, in Embodiments 3 and 4 which have been described heretofore, while the leaf springs are used as the elastic elements 408, other elastic elements such as coil springs and torsion bars may be used.

Additionally, in Embodiments 3 and 4 above, while the elastic elements 408 are used, the piezoelectric sensor 404 may be configured so as to be in direct abutment with part of the arm portion 409, and as this occurs, since the displacement of the arm portion 409 is transmitted directly to the piezoelectric sensor 404, the sensitivity is enhanced.

In addition, in place of the elastic elements 408, a covering layer 404e of the piezoelectric sensor 404 may be made of an elastic element having a predetermined modulus of elasticity, or a predetermined modulus of elasticity may be provided by changing the shape of the covering layer 404e, so that part of the piezoelectric sensor 404 exhibits a predetermined pressure so as to bias itself to be brought into contact with part of the arm portion 409 when the door handle is not in use.

Additionally, vehicles can be provided in which the door handle apparatuses according to Embodiments 3 and 4 are applied to a smart entry system for doors such as side doors and sliding doors, and tailgates, and buildings can be provided in which the same door handle apparatuses are applied to a smart entry system for doors such as front doors.

In addition, in Embodiments 3 and 4 above, while the flexible piezoelectric sensor is used, other sensors may be used which generated an output signal in response to a deformation based on the displacement of the door handle, and for example, a cable-shaped or belt-shaped sensor of a capacitance type may be used in which the electrostatic capacity changes by virtue of deformation or an optical sensor may be used in which the amount of transmitted light changes by virtue deformation.

### (Embodiment 5)

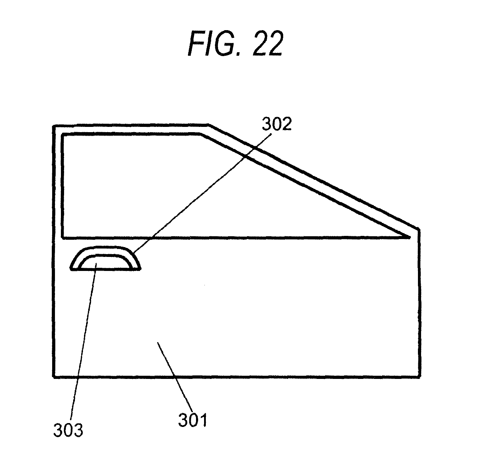

A fifth embodiment of the invention will be described by reference to Figs. 22 to 29.

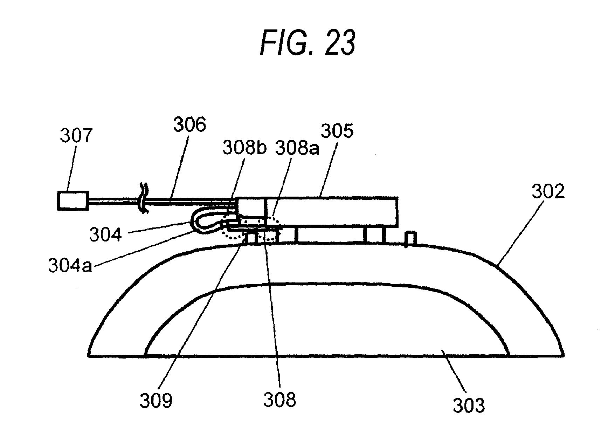

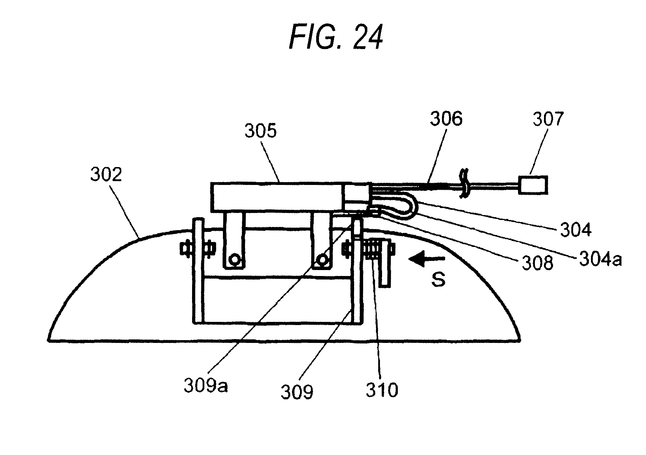

Fig. 22 is an external view of an automotive door which includes a door handle apparatus according to the fifth embodiment of the invention. In the figure, a handle bracket 302 as a frame portion is mounted on a door 301. The handle bracket 302 has a door knob 303 as a handle portion. Fig. 23 is an external view of the handle bracket 302 as viewed from the outside of a vehicle, and Fig. 24 is an external view of the handle bracket 2 as viewed from the inside of the vehicle. In the figures, a flexible cable-shaped piezoelectric sensor 304 is mounted on the handle bracket 302 together with a sensor signal detecting unit 305. The piezoelectric sensor 304, a power supply and detection signal output cable 306, and a connecter 307 are connected to the sensor signal detecting unit 305. The piezoelectric sensor 304 is supported on and fixed to a distal end portion of an elastic element 308 which is made of a leaf spring (a support portion 308b in the figures). The piezoelectric sensor 304 includes a bent portion 304a in a direction in which the piezoelectric sensor 304 extends from a distal end portion side of the elastic element 308. The elastic element is fixed to the detecting unit at the other end thereof in a cantilever fashion (308a in the figures). In addition, the elastic element 308 contacts an arm portion 309 as a movable portion which operates while linking with the door knob 303 at an upper end 309a. As this occurs, the elastic element 308 is biased with a predetermined pressure so as to be in contact with the upper end 309a when the door knob 303 is not in use. A predetermined spring pressure is applied to the arm portion 309 by a spring 310, whereby the door knob 303 is normally pressed in a closing direction.

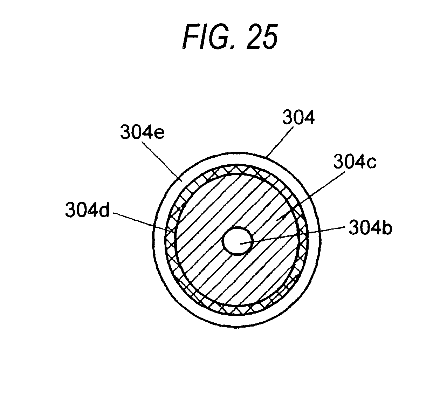

Fig. 25 is a sectional view of the piezoelectric sensor 304. The piezoelectric sensor 304 is such that a central electrode 304b, a piezoelectric element 304c, an outer electrode 304d and a covering layer 304e are molded coaxially and has a configuration which has superior flexibility as a whole. While a normal metallic solid conductor is used for the central electrode 304b, here, an electrode is used in which a metallic coil is wound around an insulating polymeric fiber. Polyester fiber which is commercially used for electric blankets and a copper-alloy which contains 5wt% silver are preferred as the insulating polymeric fiber and the metallic coil, respectively.

The piezoelectric element 304c is such as to be made by kneading together polyethylene resin and piezoelectric ceramic (here, lead titanate zirconate) powder and is continuously extruded together with the central electrode 304b to thereby form the flexible piezoelectric element 304c. Note that it is desirable in consideration of effect to the environment to use a non-lead material such as bismuth-sodium titanate based or niobate-alkali based piezoelectric ceramic material as the piezoelectric ceramics.

A DC voltage of several kilovolts is applied between the central electrode 304b and an artificial electrode which is brought into contact with a surface of the piezoelectric element 304c after the piezoelectric element 304c has been extruded around a circumference of the central electrode 304b so as to polarize the piezoelectric element 304c, whereby a piezoelectric effect is imparted to the piezoelectric element 304c. A belt-shaped electrode in which a metallic film is bonded on to a polymeric layer is used for the outer electrode 304d, and the belt-shaped electrode is made to be wound around a circumference of the piezoelectric element 304c. Polyethylene terephthalate (PET) is used as the polymeric layer, and since electrodes in which an aluminum film is bonded on to the polymeric layer have a high thermal stability at 120°C and are mass produced commercially, they are preferred for use as the outer electrode 304d. Note that in order to shield the electrode against noise in an external environment, it is preferable that the outer electrode 304d is wound around the circumference of the piezoelectric element 304c in such a manner as to overlap partially. Although vinyl chloride is preferred for use for the covering layer 304e in terms of reliability, it is preferable in consideration of the environment to use non-vinyl-chloride based materials such as thermoplastic elastomer.

The sensor signal detecting unit 305 is made up of at least one band-pass filter which is made up, in turn, of an operational amplifier and peripheral components and, if necessary, a band elimination filter unit or a low-pass filter which is made up of an operational amplifier and peripheral components and is adapted to remove signal components including a natural vibration frequency of the door 301. In addition, the sensor signal detecting unit 305 includes a determination unit which detects at least one of a contact of an object to the door knob 303, an opening operation and a closing operation by the door knob 303 based on an output signal from the filter unit. A comparator is used as the determination unit. The filter unit and the determination unit use devices whose consumed currents are 1mA or lower, respectively.

As characteristics of the band-pass filter unit, the band-pass filter unit is set to have characteristics which allows for passage through a frequency area of, for example, 3Hz to 8Hz as a characteristic frequency band by analyzing the frequency of an output signal outputted from the piezoelectric sensor 304 when the door knob 303 is operated experimentally.

In addition, when setting the band elimination filter unit or the low-pass filter unit, a setting is implemented so as to provide characteristics in which as a characteristic frequency band, for example, a frequency area of 10Hz or more is removed by analyzing the frequency of an output signal outputted from the piezoelectric sensor 304 when the door 301 is intentionally knocked on, for example. In addition, in the event that the intensity of the natural vibration is so small that little influence is given to an output signal from the piezoelectric sensor 304, neither the band elimination filter unit nor the low-pass filter unit may be provided.

Furthermore, since it is assumed that the natural vibration characteristic differs depending on types of vehicles and sizes and weight of doors, it is preferred to optimize the setting of the band-pass filter unit, the band elimination filter unit and the low-pass filter unit based on the aforesaid experimental analysis.

The sensor signal detecting unit 305 is preferably covered with a shield member so as to be electrically shielded in order to remove external electric noise. In addition, a feedthrough capacitor, an EMI filter or the like may be added to input and output portions of the sensor signal detecting unit 305 as a countermeasures against a strong electric field.

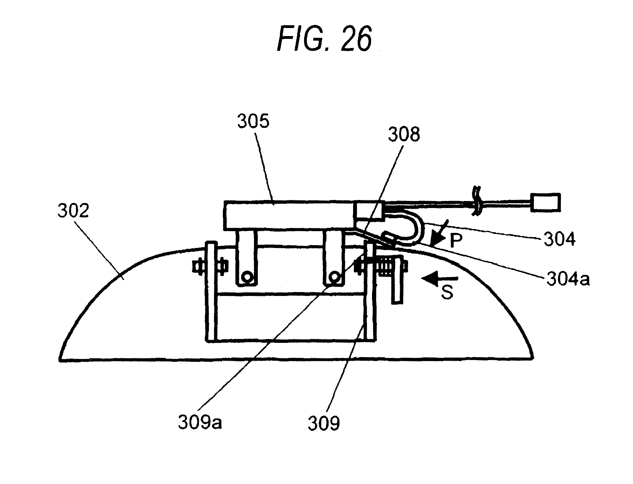

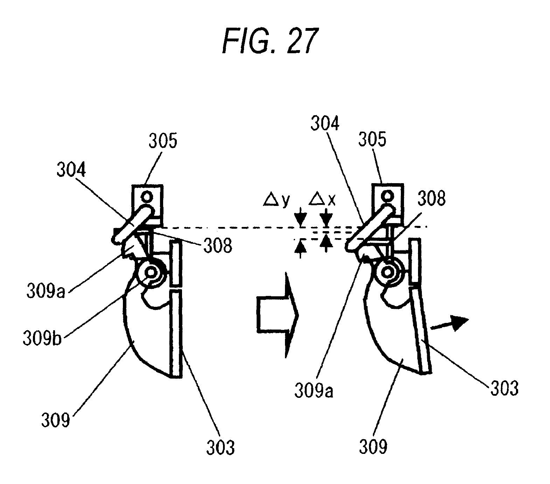

Next, the function will be described. When the door knob 303 is pulled towards the outside of the vehicle to open the door or an inner side of the door knob 303 is lightly touched with the hand, the door knob 303 is displaced towards the outside of the vehicle, and the arm portion 309 is displaced while linking with the door knob 303. Figs. 26 and 27 are schematic diagrams which show how the door knob 303, the piezoelectric sensor 304, the elastic element 308, and the arm portion 309 are displaced as that occurs. Here, Fig. 27 is a schematic view which results when Fig. 26 is viewed in a direction indicated by an arrow S. As shown in the figures, when the door knob 303 is displaced towards the outside of the vehicle, the upper end 309a of the arm portion 309 is lowered, and the elastic element 308, which is biased to the upper end 309a with the predetermined pressure, is also displaced downwards centered at the fixing portion to the maximum extent thereof while the distal end portion side thereof rotates about a fixing shaft 9b. Due to this, the piezoelectric sensor 304 is also deformed in a direction in which the radius of curvature of the bent portion 304a is increased.

In this case, for example, as shown in Fig. 27, from a relationship of contact position between the upper end 309a and the elastic element 308, a displacement Δx at the upper end 309a becomes Δy at the distal end portion of the elastic element 308, which is larger than Δx, whereby the larger displacement than the direct displacement of the upper end 309a is provided on the elastic element 308.

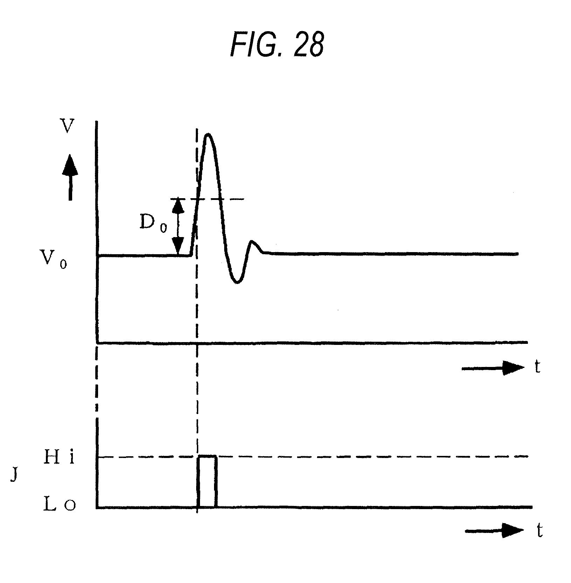

Fig. 28 is a characteristic chart which shows a signal V which is amplified and filtered within the sensor signal detecting unit 305 and a detection output J of a determination unit, which result when the elastic element 308 and the arm portion are so displaced. In the figure, an axis of ordinate denotes V, J sequentially from the top, and an axis of abscissa denotes time t. When the displacements occur as a result of the operation of the door knob 303 and the piezoelectric sensor 304 is deformed, a signal in response to an acceleration at which the piezoelectric sensor 304 deforms is outputted from the piezoelectric sensor 304 by virtue of a piezoelectric effect. As this occurs, a signal having a frequency of about 3 to 8Hz appears in the output signal, and the signal so appearing is amplified and filtered within the sensor signal detecting unit 305, whereby a signal indicated by V in Fig. 28 is obtained.

The determination unit determines that at least one of a contact of an object to the door knob 303, and an opening operation and a closing operation by the door knob 303 has occurred and outputs a pulse signal of Lo→Hi→Lo as a determination output at time t1 in case an amplitude V-V0 of V from V0 is D0 or more.

In addition, since the piezoelectric sensor 304 is deformed via the arm portion 309 and the elastic element 308 (in the direction in which the radius of curvature is reduced) also when the door knob 303 is pressed from the outside of the vehicle, a similar detection is made possible also in this case.

By the function that has been described heretofore, in this door handle apparatus, the piezoelectric sensor 304 has such flexibility as to be annexed to the door knob 303, whereby a minute displacement of the door knob 303 can be detected with high sensitivity. Consequently, a sufficient signal output can be obtained only through a simple touch to the door knob 303, whereby a contact to the door knob 303 can be detected. In addition, since electrodes do not have to be exposed to the outside, the piezoelectric sensor 304 is made difficult to be affected by disturbance, and dust, rain and snow that would otherwise adhere thereto. Furthermore, since the piezoelectric sensor 304 can be deformed with suppleness, there are imposed few limiting conditions on a setting place thereof, and a space where to dispose the piezoelectric sensor 304 is diminished.

In addition, the piezoelectric sensor 304 is supported by the substantially plate-shaped elastic element 308 which is fixed at the one end thereof in the cantilever-like fashion, and part of the elastic element 308 is biased with the predetermined pressure so as to be brought into contact with the arm portion 309 upper end when the door knob 303 is not in use, whereby since the piezoelectric sensor 304 is brought into contact with the arm portion 309 upper end via the elastic element 309, there occurs no case where, for example, the piezoelectric sensor 304 comes into contact with the arm portion 309 to thereby get worn or receives a direct impact due to operation, reliability being thus increased. In addition, since part of the elastic element 308 is biased with the predetermined pressure to thereby be brought into contact with the arm portion 309 upper end when the door knob 303 is not in use, the elastic element 308 and the piezoelectric sensor 304 are displaced while following the arm portion 309 upper end when the door knob 303 operates an opening operation, and since the elastic element is displaced no further after a predetermined displacement has been attained, there occurs no case where the piezoelectric sensor 304 disconnects due to excessive displacement.

Additionally, from the relationship of contact position between the arm portion 309 upper end and the elastic element 308, the displacement at the distal end portion of the elastic element 308 becomes larger than the displacement at the arm portion 309 upper end, whereby the displacement of the piezoelectric sensor 304 is increased further, so as to increase the sensitivity.

In addition, the piezoelectric sensor 304 is such as to have the bent portion 304a in the direction in which the piezoelectric sensor 304 extends from the distal end portion side of the elastic element 308, and since a larger output signal relative to deformation is obtained at the bent portion than a straight portion when the respective portions are subjected to the same displacement, the sensitivity of the piezoelectric sensor 304 is enhanced.

Additionally, the piezoelectric sensor 304 and the elastic element 308 are such as to be molded together with the sensor signal detecting unit 305, whereby the assembly of the door handle apparatus can be implemented with efficiency.

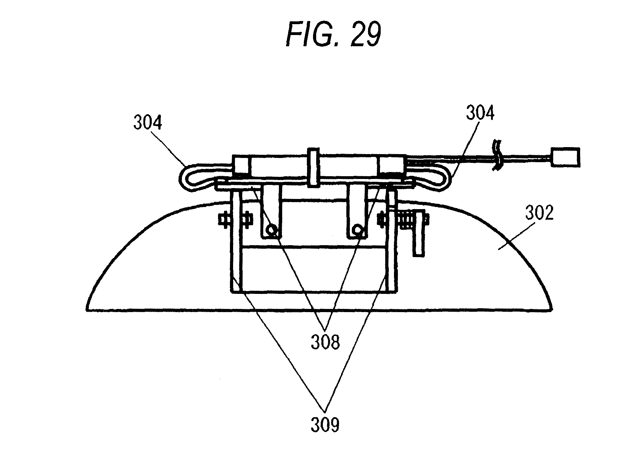

Note that a configuration as shown in Fig. 29 may be adopted as another embodiment of the invention in which two elastic elements 308 are provided in such a manner as to correspond, respectively, to two arm portions 309 which operate while linking with a door knob 303, so that piezoelectric sensors 304 may be supported on and fixed to the elastic elements 308, respectively, whereby since the displacement of the door knob is detected a at a plurality of locations, the redundancy of detection is increased, detection reliability being thereby enhanced.

In addition, vehicles can be provided in which the door handle apparatus according to the embodiment is applied to a smart entry system for doors such as side doors and sliding doors, and tailgates, and buildings can be provided in which the same door handle apparatuses are applied to a smart entry system for doors such as front doors.

### (Embodiment 6)

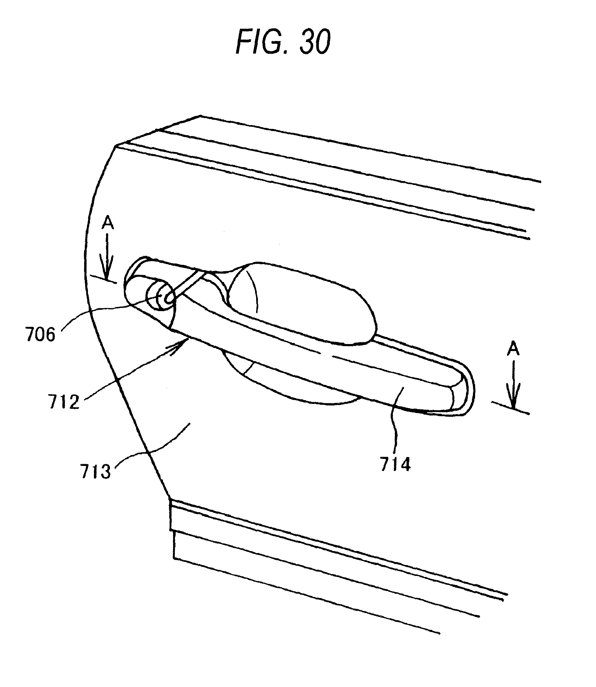

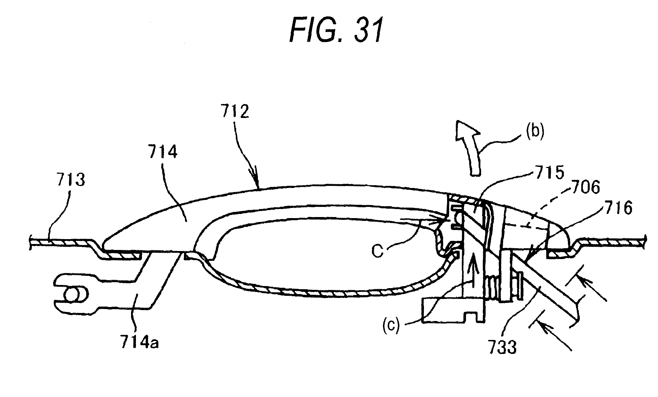

Fig. 30 is an external perspective view of an embodiment of a vehicle door which includes a vehicle door handle according to the invention, and Fig. 31 is a sectional view of the vehicle door handle shown in Fig. 30 which is taken along the line A-A in the same figure.

A vehicle door handle 712 of this embodiment is made up of a handle main body 714 as a handle portion which is assembled to a door (a door outer panel) 713 of a vehicle so as to constitute a grip portion used when a door 713 is operated to open and close, a movable portion 715 which is displaced to a predetermined extent together with the handle main body 714 when the driver or the like grips the handle main body 714 with the hand fingers to open or close the door and a handle operation detecting sensor 716 which detects a displacement of the movable portion 715 and outputs an electric signal.

Note that an arm 714a, which extends from a front portion of the handle main body 714, is connected to the side of the door in such a manner that the handle main body 714 can oscillate to be displaced in a direction indicated by an arrow (b) in Fig. 31. In addition, a key cylinder casing 706 is equipped at a rear side the handle main body 714.
In addition, in the case of this embodiment, the movable portion 715 is a rod-shaped ring component which protrudes from a rear end side of the handle main body 714 into the door 713, and is connected to the handle main body 714 at one end, while being made to be engaged with and disengaged from a door lock apparatus at the other end thereof, so that the handle main body 714 is pulled out in a direction indicated by the arrow (b) while sliding to be displaced in a direction indicated by an arrow (c).

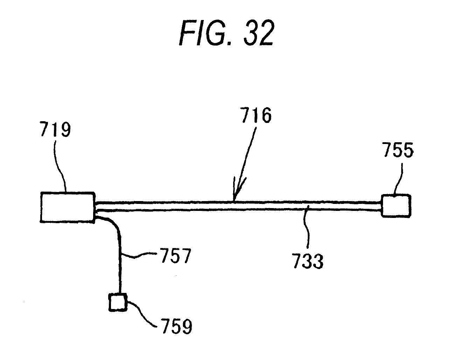

The handle operation detecting sensor 716 is, as shown in Fig. 32, made up of a piezoelectric device 733 as a cable-shaped piezoelectric sensor of a predetermined length, a disconnection detecting resistor 755 connected to one end of the piezoelectric device 733, a sensor signal detecting unit 719 connected to the other end of the piezoelectric device 733, a cable 757 connected to the sensor signal detecting unit 719 and a connector 759 connected to a distal end of the cable 757.
The cable 757 connected to the sensor signal detecting unit 719 is for power supply and detection signal output and is connected to a power supply and a communication terminal via the connector 759 which is equipped at the distal end thereof.

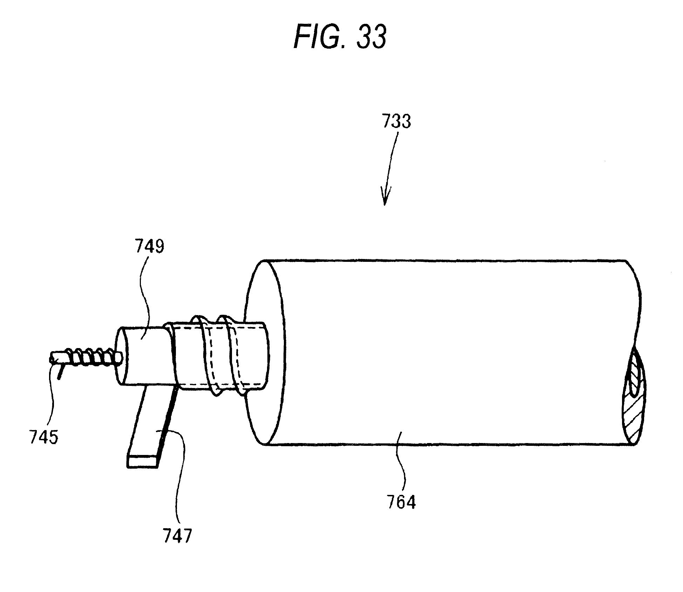

The cable-shaped piezoelectric device 733 which is used in the handle operation detecting sensor 716 is such as to have a construction shown in Fig. 33 and is made up of a core wire (a center electrode) 745 which is arranged at an axial center, a piezo device material 749 which is a piezoelectric ceramic which covers a circumference of the center electrode 745, an outer electrode 747 which is provided around a circumference of the piezo device material 749 and a PVC (a polyvinyl chloride) 751 which covers an outermost circumference of the piezoelectric device 733.
This cable-shaped piezoelectric device 733 has superior flexibility and generates an output signal in response to a deforming acceleration at the time of deformation.
As the piezoelectric ceramic, for example, a sintering powder of lead titanate or lead titanate-zirconate and a non-lead piezoelectric ceramic sintering powder such as sodium niobate.

In addition, in the cable-shaped piezoelectric device 733, a resin material, which was developed only by the applicant and which has a heat resistance enabling a working temperature of on the order of 120°C, is used for the piezoelectric device material 749, and hence, the cable-shaped piezoelectric device 733 can be used in a higher temperature area (120° or lower) than the highest working temperature of 90°C of the related representative materials such as a polymeric piezo device material (stretched polyvinylidene fluoride) and a piezo device material (a piezo device material from chloroprene and piezoelectric ceramic powder). Then, since the piezo device material 749 is made up of a flexible resin and a piezoelectric ceramic and is also made up by using a flexible electrode which is made up of a coil-shaped metallic center electrode and a film-shaped outer electrode, the cable-shaped piezoelectric device 733 has a flexibility which equals a normal vinyl cord.

The piezo device material 749 is made up of a composite material of a resin based material and a piezoelectric ceramic powder of 10 µm or smaller, whereby vibration detecting characteristics and flexibility are realized by the ceramic and the resin, respectively. This piezo device material 749 uses a chlorine based polyethylene as the resin based material, whereby a high heat resistance (120°C) and a suppleness that facilitates formation are realized and a simple production process requiring no crosslinking is enabled.

Since the cable-shaped piezoelectric device 733 which is obtained as described above has no piezoelectric performance with the piezo device material 749 simply left molded, a treatment (a polarizing treatment) is necessary which imparts a piezoelectric performance to the piezo device material 749 by applying a high DC voltage of several kilovolts/mm.
In the event that a fine defect such as a crack exists inside the piezo device material 749, since discharge occurs at the defect portion to facilitate a short-circuit between both electrodes, a sufficient polarizing voltage cannot be applied. In the invention, however, by establishing a unique polarizing process which uses an auxiliary electrode which can be bonded to the piezo device material 749 of a certain length, such a defect can be detected and eliminated so as to realize a stable polarization, whereby the piezo device material can be elongated to several tens meters or longer.

In addition, in the piezoelectric device 733, a coil-shaped metallic center electrode is used for the center electrode 745, and a film-shaped electrode (a three-layer laminate film of aluminum, polyethylene terephthalate, and aluminum) for the outer electrode 747, whereby the bonding characteristics between the piezo device material 749 and the electrode is secured, and the connection of an external lead wire is facilitated, thereby making it possible to enable a flexible cable-shaped installing configuration.

The center electrode 745 uses a copper-silver alloy coil, the outer electrode 747 uses the three layer laminate film of aluminum-polyethylene terephthalate-aluminum, the piezo device material 749 uses the composite of polyethylene based resin + piezoelectric ceramic powder, and the covering layer 751 uses a thermoplastic plastic, whereby a specific permittivity of 55, an electric charge generation of 10 to 13C (coulomb)/gf and a highest working temperature of 120°C can be realized.

The piezoelectric device 733 that has been described above is produced through the following process as an example. Firstly, a chlorine based polyethylene sheet and 40 to 70% by volume of piezoelectric ceramic (here, lead titanate-zirconate) powder are mixed uniformly into a sheet shape by a roll method. The sheet so formed is then cut into fine pellets, and thereafter, these pellets are continuously extruded together with the center electrode 745, whereby the piezo device material 749 is formed. Then, an auxiliary electrode is brought into contact with an outer circumference of the piezo device material 749, and a polarizing treatment is implemented by applying a high voltage between the auxiliary electrode and the piezo device material 749. Thereafter, the outer electrode 747 is wound around a circumference of the piezo device material 749. The covering layer 751 is also continuously extruded in such a manner as to encompass the outer electrode 747.

When the piezoelectric ceramic powder is added to the chlorinated polyethylene, it is preferable that the piezoelectric ceramic powder is submerged in a solution of titan coupling agent and is then dried. A surface of the piezoelectric ceramic powder is covered with hydrophilic group and hydrophobic group which are contained in the titan coupling agent.
The hydrophilic group prevents the agglomeration of piezoelectric ceramic powders and the hydrophobic group enhances the wetting characteristics of chlorinated polyethylene and piezoelectric ceramic powder. As a result, a large amount of piezoelectric ceramic powder can uniformly be added to the chlorinated polyethylene up to 70% by volume at maximum. It was found that the same effect as that described above was able to be obtained by adding the titan coupling agent when rolling the chlorinated polyethylene and the piezoelectric ceramic powder instead of submersion in the titan coupling agent. This treatment is superior in that the necessity of an extra submersion treatment in the titan coupling agent is obviated. Thus, the chlorinated polyethylene also plays a role of a binder resin when the piezoelectric ceramic powder is mixed.

In the case of this embodiment, a solid conductor of copper based metal is used for the center electrode 745.
In addition, a belt-shaped electrode in which an aluminum metallic film is caused to adhere to a polymeric layer is used for the outer electrode 747, and the outer electrode 747 is configured so as to be wound around the circumference of the piezo device material 749. In addition, since an electrode in which polyethylene terephthalate (PET) is used as a polymeric layer and an aluminum thin film is caused to adhere is commercially mass produced and inexpensive, such an electrode is preferable for use for the outer electrode 747. When this electrode is connected to the sensor signal detecting unit 719, the electrode can be so connected by virtue of crimping or using grommets.
In addition, a configuration may be adopted in which a metallic solid coil or a metallic braided wire is soldered to a circumference of the aluminum thin film of the outer electrode 747 for connection of the sensor signal detecting unit 719 thereto, and since soldering is made possible, the working efficiency can be realized.
Note that in order to shield the piezoelectric device 733 from electric noise in the external environment, the outer electrode 747 is preferably wound around the circumference of the piezo device material 749 while being overlapped.

A rubber material which is superior to the aforesaid polyvinyl chloride in heat resistance and waterproofness can also be used as the covering layer 751. As this rubber material, a rubber may be preferred which has higher suppleness and flexibility than those of the piezo device material 749 so as to facilitate the deformation of the piezo device material 749 by virtue of a pressure applied thereto by an article which is brought into contact therewith.
The rubber material should be selected in consideration of heat resistance and cold resistance as an on-board component and to be specific, a rubber material is preferably selected whose flexibility is less reduced in a temperature range of -30°C to 85°C. As such a rubber material, for example, ethylene propylene rubber (EPDM), chloroprene rubber (CR), butyl rubber (IIR), silicone rubber (Si), thermoplastic elastomer and the like may be used. From the above configuration, a minimum radius of curvature of the piezoelectric device 733 can be reduced to a radius of 5mm, and when compared to the related polyvinyl chloride, more superior heat resistance and waterproofness can be secured.

As has been described above, since the piezo device material 749 of the piezoelectric device 733 has both the flexibility inherent in chlorinated polyethylene and a high temperature durability inherent in piezoelectric ceramic, the reduction in sensitivity at higher temperatures does not occur which is characteristic of the related piezoelectric sensor which uses polyvinylidene fluoride, and since the piezo device material 749 has good high temperature durability and needs no vulcanization process at the time of molding, which is characteristic of EPDM, there can be provided an advantage that a good production efficiency is attained.

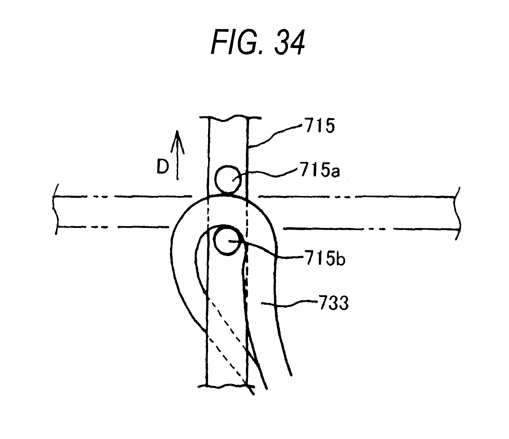

The handle operation detecting sensor 716 of the embodiment is such that the piezoelectric device 733 is assembled to a door of a vehicle in such a manner that the piezo device material 749 of the piezoelectric device 733 is deformed by virtue of displacement of the movable portion 715 that occurs in association with the operation of the handle main body 714.
To be specific, the cable-shaped piezoelectric device 733 is, as partially shown also in Fig. 34, wound around the outer circumference of the movable portion 715 and positioned on an outer circumferential surface of the movable portion 715 by a pair of projections 715a, 715b which are provided on the outer circumference of the movable portion 715 in such a manner as to project therefrom, whereby when the movable portion 715 is displaced in a direction indicated by an arrow D in Fig. 34 in conjunction with the operation of the handle main body 714, the pair of projections 715a, 715b presses against the outer circumferential surface of the piezoelectric device 733 to thereby generate deformation in the piezo device material 749.

The disconnection detecting resistor 755 connected to the one end of the piezoelectric device 733 is connected between the center electrode 745 of the piezoelectric device 733 and the outer electrode 747 and doubles as a discharge unit which discharges electric charge generated in the piezoelectric device 733 due to pyroelectric effect, thereby contributing to rationalization of components.

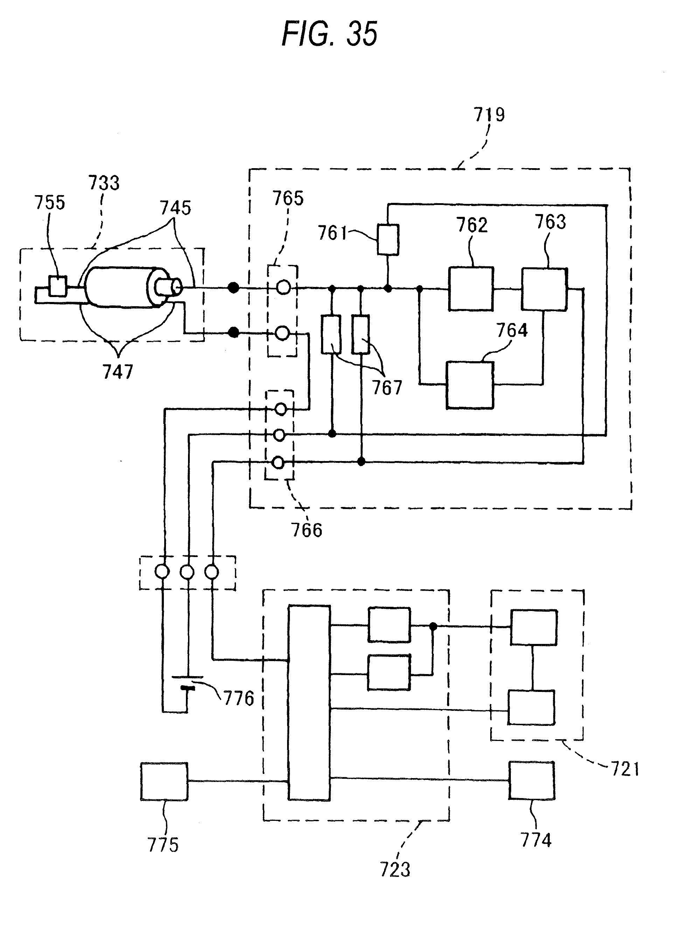

As shown in Fig. 35, an opening/closing drive means 721 which performs locking/unlocking of a lock apparatus of the door and an opening/closing control means 723 which controls the operation of the opening/closing drive means 721 are equipped in the sensor signal detecting unit 719 which detects whether or not the door has been operated to open or close from an output signal from the piezoelectric device 733, constituting thereby a related keyless entry system.

The sensor signal detecting unit 719 includes a voltage dividing resistor 761 used when detecting disconnection of the piezoelectric device 831, a filter unit 762 which permits the passage of only a predetermined frequency component from an output signal from the piezoelectric device 733, a determination unit 763 which determines on contact of an object to the piezoelectric device 733 based on an output signal from the filter unit 762 and an abnormality determination unit 764 which determines on disconnection abnormality between the center electrode 745 of the piezoelectric device 733 and the outer electrode 747 from a voltage value that is formed by the disconnection detecting resistor 755 and the voltage dividing resistor 761.
In addition, the center electrode 745 and the outer electrode 747 are connected to the sensor signal detecting unit 719, and a signal input unit 765 which inputs an output signal from the piezoelectric device 733 into the sensor signal detecting unit 719 and a signal output unit 766 which outputs a determination signal from the determination unit 763 are provided in adjacent to each other within the sensor signal detecting unit 719. A power supply line to the sensor signal detecting unit 719 and a ground line are also connected to the signal output unit 766. Furthermore, the sensor signal detecting unit 719 has a bypass unit such as a capacitor which is provided between the signal input unit 765 and the signal output unit 766 to bypasses a high frequency signal.

In addition, an informing unit 774 which informs of the result of a determination at the sensor signal detecting unit 719 via a predetermined light placed on a front panel in a passenger compartment and an opening/closing switch 775 which opens and closes the door are connected to the opening/closing control means 723. In addition, a power supply 776 is provided which is made up of a battery of an automobile for supply power through the sensor signal detecting unit 719.

The filter unit 762 has filtering characteristics in which unnecessary signals attributed to vibration of a body of the automobile are removed from output signals from the piezoelectric device 733 and only a specific frequency component that appears in output signals from the piezoelectric device 733 is extracted. To determine on filtering characteristics, vibration characteristics of bodies of automobiles and vibration of the bodies while running are analyzed for optimization.

In order to remove external electric noise, the sensor signal detecting unit 719 is totally covered with a shield member so as to be electrically shielded. In addition, the outer electrode 747 electrically communicates with the shield member of the sensor signal detecting unit 719, and the piezoelectric device 733 is also electrically shielded. Note that a feedthrough capacitor, an EMI filter or the like may be added to input and output portions of the circuit as a countermeasures against a strong electric field.

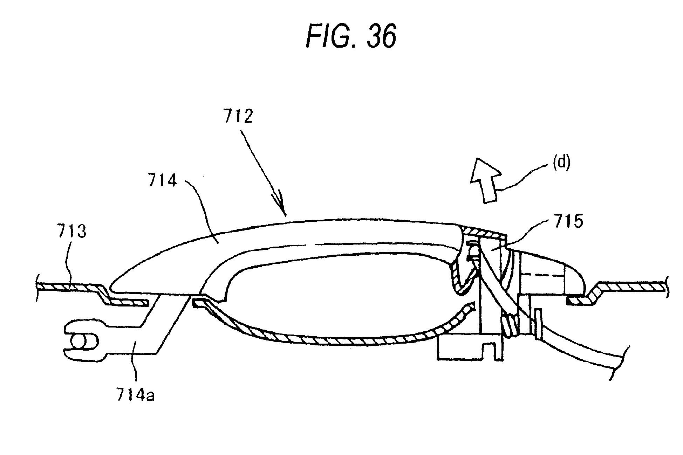

In the aforedescribed vehicle door handle 712, as shown in Fig. 36, when the hand fingers are placed on the handle main body 714 to pull out the handle main body 714 in a direction indicated by an arrow (d), the piezoelectric device 733 which is wound around the movable portion 715 is pressed to thereby be deformed by the pair of projections 715a, 715b, and the sensor signal detecting unit 719 determines whether or not the door has been operated to open or close based on an output signal outputted then from the piezoelectric device 733, so as to control the operation of the opening/closing drive means 721.

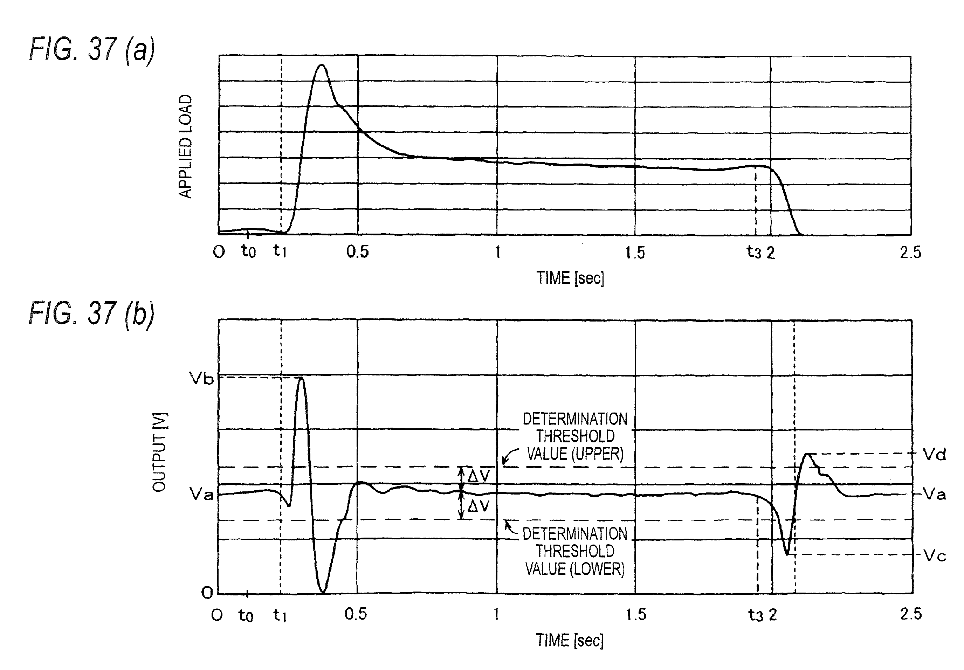

Fig. 37(a) is a diagram which shows a load applied to the handle operation detecting sensor 716 and sensor output characteristics. As a result of experiments by the applicant on a relationship between a load applied to the handle operation detecting sensor 716 and a sensor output, when a bending load shown in (a) is applied to the handle operation detecting sensor 716, a sensor output exhibits a variation as shown in (b).

(1) when no load is applied to the handle operation detecting sensor 716 at time t0, the sensor output indicates a voltage Va.
(2) When a bending load is applied to the handle operation detecting sensor 716 in a certain direction at time t1, the sensor output increases to Vb momentarily the bending load is so applied and immediately thereafter reverses to be 0(V), and thereafter, the sensor output returns to Va.
(3) Thereafter, even in the event that the handle operation detecting sensor 716 is left bent, the sensor output remains indicating Va.
(4) When the handle operation detecting sensor 716 is restored to its original state at time t3, the sensor output decreases to Vc momentarily and immediately thereafter reverses to be Vd, and thereafter, the censor output returns to Va.
   Thus, since the handle operation detecting sensor 716 can detect an output in response to the acceleration with high sensitivity, the handle operation detecting sensor 716 can detect with good accuracy and output minute vibration. Note that to detect a load application timing, a determination threshold of a predetermined voltage width ΔV centered at, for example, the voltage Va shown is provided and a determination may be made that there has occurred a change in load when the determination threshold is exceeded.

In the vehicle door handle 712 of the embodiment which has been described heretofore, the handle operation detecting sensor 716 can detect whether or not the door has been operated to open or close in the event that the piezoelectric device 733, which is the constituent element thereof, is deformed by virtue of displacement of the movable portion 715 which operates while linking with the handle main body 714, and hence, the handle operation detecting sensor 716 itself does not have to be incorporated within the handle main body 714. Consequently, a hollow portion of a predetermined size does not have to be provided in the handle main body 714 for incorporation therein of the handle operation detecting sensor 716, whereby the shape and dimensions of the handle main body 714 can be designed arbitrarily while paying attention to gripping characteristics when operated and external design, and the degree of freedom in designing shapes and dimensions for the handle main body 714 is increased.

Moreover, the handle operation detecting sensor 716 is such as to detect whether or not the door has been operated to open or close when the piezo device material 749 of the piezoelectric device 733 is deformed by the movable portion 715 which is displaced to a predetermined extent together with the handle main body 714 when the door is operated to open or close, and hence, provides no risk that an approach of an apparatus or the like which has nothing to do with opening and closing operations of the door is erroneously detected compared to the related capacitance type handle operation detecting sensor.
Consequently, by setting high the detection sensitivity, whether or not an opening or closing operation of the door has been carried out can be detected quickly through a slight displacement of the movable portion 715 which is displaced together with the handle main body 714, whereby even in the event that the contact of the hand fingers to the handle main body 714 when the door is operated to open or close is weak, it is possible to detect whether or not an opening or closing operation of the door has been carried out in an ensured fashion.

Additionally, in the handle operation detecting sensor 716, since no detection signal is outputted as long as the piezo device material 749 is not deformed by the displacement behavior of the movable portion 715 which is displaced together with the handle main body 714, the emission of noise to the surrounding environments by the transmission of useless signals can also be prevented.

In addition, since the handle operation detecting sensor 716 which uses the piezoelectric device 733 can be operated stably with a consumed current of 1mA or lower, when compared to the related capacitance type handle operation detecting sensor 716, the consumed current can be reduced so as to alleviate a load applied to an on-board battery.

Note that the movable portion 715 which is displaced together with the handle main body 714 when the handle main body 714 is operated to open or close the door is not limited to that described in the embodiment. For example, an arm 714a which is displaced together with the handle main body 714 and other movable portions may be used.
In addition, the engagement form between the piezoelectric device 733 and the movable portion 715 which generates a deformation in the piezoelectric device 733 is also not limited to that described in the embodiment.
In the embodiment, while the cable-shaped piezoelectric device 733 is wound around the outer circumference of the rod-shaped movable portion 715, the piezoelectric device 733 can, for example, be laid out (refer to chain double-dashed lines in Fig. 34) in such a manner as to simply traverse the movable portion instead of being wound therearound.

### (Embodiment 7)

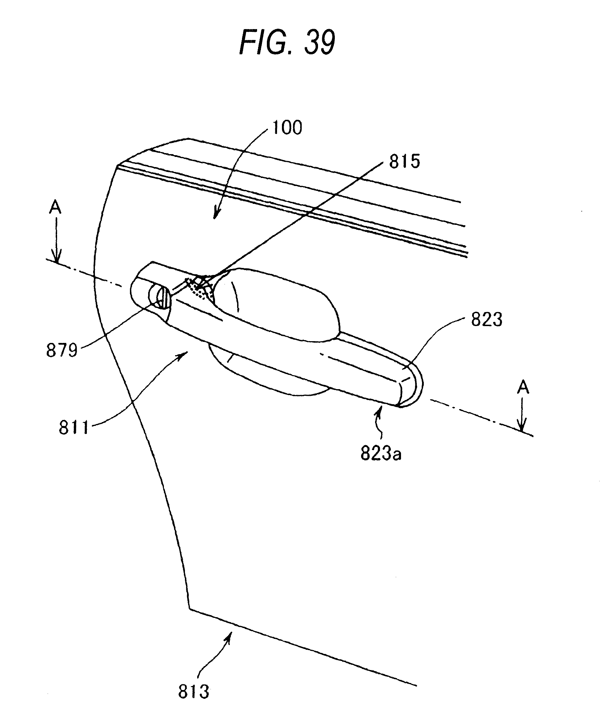

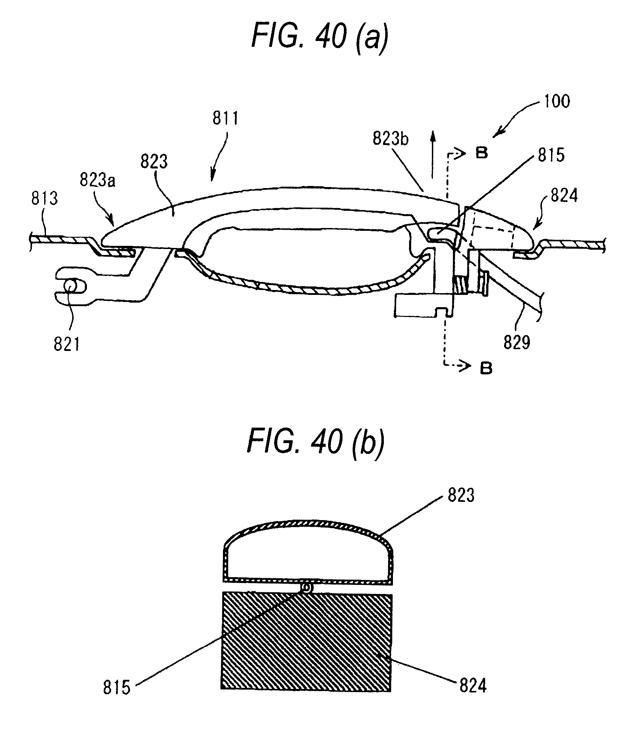

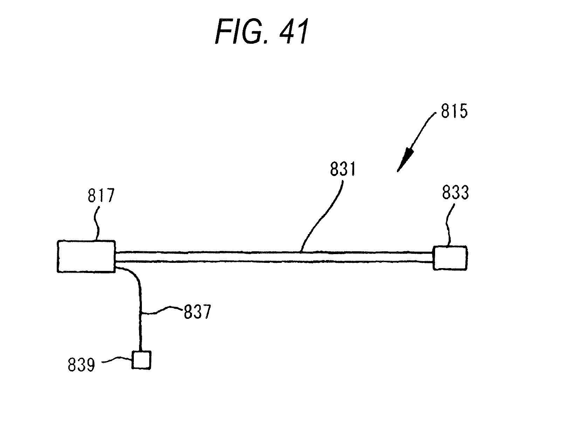

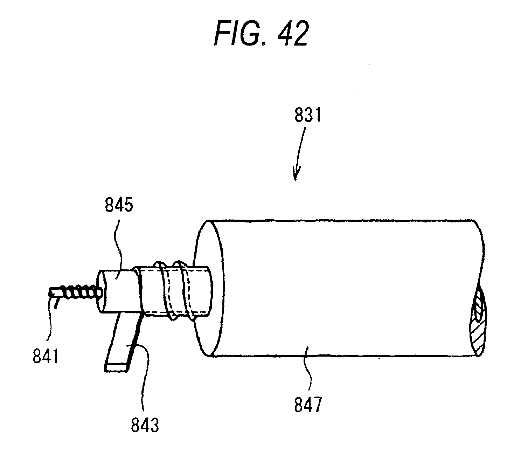

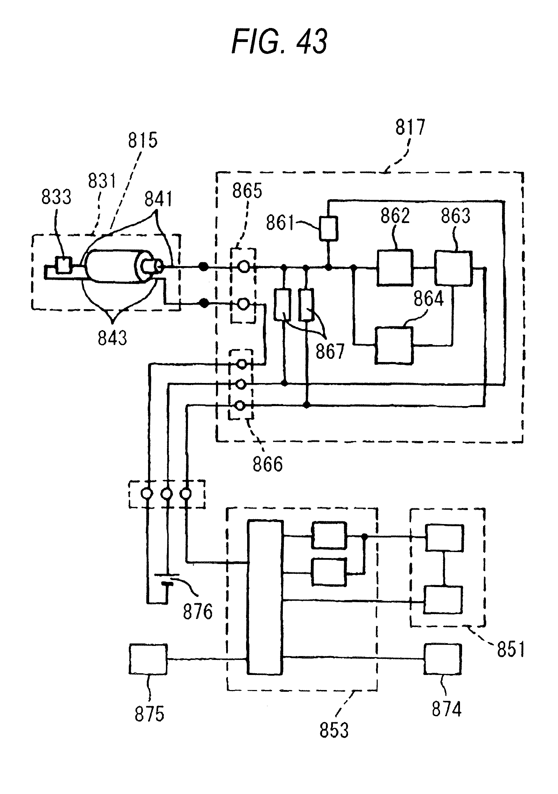

Fig. 39 is an external perspective view which shows a door handle apparatus of a seventh embodiment according to the invention, Fig. 40(a) is a sectional view taken along the line A-A in Fig. 39, Fig. 40 (b) is a sectional view taken along the line B-B in Fig. 40(a), Fig. 41 is a schematic diagram of a piezoelectric sensor shown in Fig. 40, Fig. 42 is a diagram which shows the configuration of a piezoelectric device and Fig. 43 is a block diagram of the door handle apparatus.

A door handle apparatus 100 according to a seventh embodiment of the invention is as shown in Fig. 39, provided on a door 813 which has a handle main body 811 which is operated to open and close the door 813, so as to enable the undoing of a door locking device, not shown, which locks the door 813 so as not to be opened by operating the handle main body 811. The door handle apparatus 100 is mainly made up of a piezoelectric sensor 815 which is provided on the handle main body 811 and includes a flexible piezoelectric device and a sensor signal detecting unit 817 (refer to Figs. 41, 43) which is a control unit for undoing the door lock when receiving a detection signal which is generated from the piezoelectric sensor 815 based on a contact load applied when a grip portion 823 as a handle portion is touched and gripped by the hand inserted between the door 813 and the grip portion, the sensor signal detecting unit 817 being to be described later on.

The door handle apparatus 100 is assembled to the door (door outer panel) 813 of a vehicle. The handle main body 811 has the grip portion 823 which is supported on the door 813 at one end side 823a thereof via a support shaft 821 in such a manner as to freely oscillate thereon, whereby the grip portion 823 is allowed to move in a direction in which it is pulled out at the other end thereof through oscillation. Namely, the grip portion 823 constitutes the handle main body 811 of a pull-rise type with the one end thereof acting as a hinge. The piezoelectric sensor 815 is provided between parts of a handle fixing portion 824 which contacts the grip portion 823 so as to enable the detection of deformation of the piezoelectric sensor 815 triggered by a gripping operation of the grip portion 823. Note that in Fig. 39, reference numeral 879 denotes a key cylinder casing equipped at a rear of the handle main body 811.

In the embodiment, the piezoelectric sensor 815 is, as shown in Fig. 40(b), securely affixed to the handle fixing portion 824 and is formed between the handle fixing portion 824 and the grip portion 823. The piezoelectric sensor 815 is connected to the sensor signal detecting unit 817 when a cable portion 829 led out of the handle fixing portion 824 is pulled into the door 813 so as to be connected to the sensor signal detecting unit 817.

The piezoelectric sensor 815 is such that the grip portion 823 is displaced when the user touches the grip portion 823 by his or her hand to open the door 813, whereby vibration generated by the displacement of the grip portion 823 is transmitted to the piezoelectric sensor 815. The piezoelectric sensor 815 is deformed by virtue of the vibration to thereby obtain an electric signal. Namely, the piezoelectric sensor 815 can detect that the user operates the grip portion 823.

The piezoelectric sensor 815 is, as shown in Fig. 41, made up of a cable-shaped piezoelectric device 831 of a predetermined length, a disconnection detecting resistor 833 which is connected to one end of the piezoelectric device 831, the sensor signal detecting unit 817 which is connected to the other end of the piezoelectric sensor 831, a cable 837 which is connected to the sensor signal detecting unit 817 and a connector 839 which is connected to a distal end of the cable 837. The cable 837, which is connected to the sensor signal detecting unit 817, is for power supply and detection signal output and is connected to a power supply and a communication terminal via the connector 839 equipped at the distal end thereof.

The piezoelectric device 831 which is used in the piezoelectric sensor 815 has a construction as shown in Fig. 42 and is formed by arranging a core wire (also referred to as a center electrode) 841 at an axial center, covering a circumference of the center electrode 841 with a piezo device material (a composite piezoelectric element layer) 845 which is a piezoelectric ceramic, and furthermore, providing an outer electrode 843 around a circumference of the piezo device material 845 and covering an outermost circumference of the piezoelectric device 831 with a covering layer 847 such as a PVC (a polyvinyl chloride). This piezoelectric device 831 has superior flexibility and generates an output signal in response to a deforming acceleration at the time of deformation. As the piezoelectric ceramic, for example, a sintering powder of lead titanate or lead titanate-zirconate and a non-lead piezoelectric ceramic sintering powder such as sodium niobate.

In the cable-shaped piezoelectric sensor 815, a resin material, which was developed only by the applicant and which has a heat resistance enabling a working temperature of on the order of 120°C, is used for the piezoelectric device material 845, and hence, the piezoelectric device 831 can be used in a higher temperature area (120° or lower) than the highest working temperature of 90°C of the related representative materials such as a polymeric piezo device material (stretched polyvinylidene fluoride) and a piezo device material (a piezo device material from chloroprene and piezoelectric ceramic powder). Then, the piezo device material 845 is made up of a flexible resin and a piezoelectric ceramic and is also made up by using a flexible electrode which is made up of a coil-shaped metallic center electrode and a film-shaped outer electrode, whereby the cable-shaped piezoelectric device 831 has a flexibility which equals a normal vinyl cord.

The piezo device material 845 is made up of a composite material of a resin based material and a piezoelectric ceramic powder of 10 µm or smaller, whereby vibration detecting characteristics and flexibility are realized by the ceramic and the resin, respectively. This piezo device material 845 uses a chlorine based polyethylene as the resin based material, whereby a high heat resistance (120°C) and a suppleness that facilitates formation are realized and a simple production process requiring no crosslinking is enabled.

Since the cable-shaped piezoelectric sensor 815 which is obtained as described above has no piezoelectric performance with the piezo device material 845 simply left molded, a treatment (a polarizing treatment) is necessary which imparts a piezoelectric performance to the piezo device material 845 by applying a high DC voltage of several kilovolts/mm. In the event that a fine defect such as a crack exists inside the piezo device material 845, since discharge occurs at the defect portion to facilitate a short-circuit between both electrodes, a sufficient polarizing voltage cannot be applied. In the invention, however, by establishing a unique polarizing process which uses an auxiliary electrode which can be bonded to the piezo device material 845 of a certain length, such a defect can be detected and eliminated so as to realize a stable polarization, whereby the piezo device material can be elongated to several tens meters or longer.

In addition, in the piezoelectric cable sensor, a coil-shaped metallic center electrode is used for the center electrode 841, and a film-shaped electrode (a three-layer laminate film of aluminum, polyethylene terephthalate, and aluminum) for the outer electrode 843, whereby the bonding characteristics between the piezo device material 845 and the electrode is secured, and the connection of an external lead wire is facilitated, thereby making it possible to enable a flexible cable-shaped installing configuration.

The center electrode 841 uses a copper-silver alloy coil, the outer electrode 843 uses the three layer laminate film of aluminum - polyethylene terephthalate - aluminum, the piezo device material 845 uses the composite of polyethylene based resin + piezoelectric ceramic powder, and the covering layer uses a thermoplastic plastic, whereby a specific permittivity of 55, an electric charge generation of 10 to 13C (coulomb)/gf and a highest working temperature of 120°C can be realized.

The piezoelectric device 831 that has been described above is produced through the following process as an example. Firstly, a chlorine based polyethylene sheet and 40 to 70% by volume of piezoelectric ceramic (here, lead titanate-zirconate) powder are mixed uniformly into a sheet shape by a roll method. The sheet so formed is then cut into fine pellets, and thereafter, these pellets are continuously extruded together with the center electrode 841, whereby the composite piezoelectric element layer 845 is formed. Then, an auxiliary electrode is brought into contact with an outer circumference of the composite piezoelectric element layer 845, and a polarizing treatment is implemented by applying a high voltage between the auxiliary electrode and the center electrode 841. Thereafter, the outer electrode 845 is wound around a circumference of the composite piezoelectric layer element 845. The covering layer 847 is also continuously extruded while encompassing the outer electrode 843.

When the piezoelectric ceramic powder is added to the chlorinated polyethylene, it is preferable that the piezoelectric ceramic powder is submerged in a solution of titan coupling agent and is then dried. A surface of the piezoelectric ceramic powder is covered with hydrophilic group and hydrophobic group which are contained in the titan coupling agent. The hydrophilic group prevents the agglomeration of piezoelectric ceramic powders and the hydrophobic group enhances the wetting characteristics of chlorinated polyethylene and piezoelectric ceramic powder. As a result, a large amount of piezoelectric ceramic powder can uniformly be added to the chlorinated polyethylene up to 70% by volume at maximum.

It was found that the same effect as that described above was able to be obtained by adding the titan coupling agent when rolling the chlorinated polyethylene and the piezoelectric ceramic powder instead of submersion in the titan coupling agent. This treatment is superior in that the necessity of an extra submersion treatment in the titan coupling agent is obviated. Thus, the chlorinated polyethylene also plays a role of a binder resin when the piezoelectric ceramic powder is mixed.

In the case of this embodiment, a solid conductor of copper based metal is used for the center electrode 841. In addition, a belt-shaped electrode in which an aluminum metallic film is caused to adhere to a polymeric layer is used for the outer electrode 843, and the outer electrode 843 so formed is configured so as to be wound around the circumference of the composite piezoelectric element layer 845. In addition, since an electrode in which polyethylene terephthalate (PET) is used as a polymeric layer and an aluminum thin film is caused to adhere is commercially mass produced and inexpensive, such an electrode is preferable for use for the outer electrode 843. When this electrode is connected to the sensor signal detecting unit 817, the electrode can be so connected by virtue of crimping or using grommets. In addition, a configuration may be adopted in which a metallic solid coil or a metallic braided wire is soldered to a circumference of the aluminum thin film of the outer electrode 843 for connection of the sensor signal detecting unit 817 thereto, and since soldering is made possible, the working efficiency can be realized. Note that in order to shield the piezoelectric device 831 from electric noise in the external environment, the outer electrode 843 is preferably wound around the circumference of the composite piezoelectric element layer 845 while being overlapped.

A rubber material which is superior to the aforesaid polyvinyl chloride in heat resistance and waterproofness can also be used as the covering layer 847. As this rubber material, a rubber may be preferred which has higher suppleness and flexibility than those of the composite piezoelectric element layer 845 so as to facilitate the deformation of the composite piezoelectric element layer 845 by virtue of a pressure applied thereto by an article which is brought into contact therewith. The rubber material should be selected in consideration of heat resistance and cold resistance as an on-board component and to be specific, a rubber material is preferably selected whose flexibility is less reduced in a temperature range of -30°C to 85°C. As such a rubber material, for example, ethylene propylene rubber (EPDM), chloroprene rubber (CR), butyl rubber (IIR), silicone rubber (Si), thermoplastic elastomer and the like may be used. From the above configuration, a minimum radius of curvature of the piezoelectric device 831 can be reduced to a radius of 5mm, and when compared to the related polyvinyl chloride, more superior heat resistance and waterproofness can be secured.

As has been described above, since the composite piezoelectric element layer of the piezoelectric device 831 has both the flexibility inherent in chlorinated polyethylene and a high temperature durability inherent in piezoelectric ceramic, the reduction in sensitivity at higher temperatures does not occur which is characteristic of the related piezoelectric sensor which uses polyvinylidene fluoride, and since the composite piezoelectric element layer has good high temperature durability and needs no vulcanization process at the time of molding, which is characteristic of EPDM, there can be provided an advantage that a good production efficiency is attained.

As shown in Fig. 43, an opening/closing drive means 851 which performs locking/unlocking of a lock apparatus of the door and an opening/closing control means 853 which controls the operation of the opening/closing drive means 851 are equipped in the sensor signal detecting unit 817 which detects whether or not the door has been operated to open or close from an output signal from the piezoelectric device 831, constituting thereby a related keyless entry system.

The sensor signal detecting unit 817 includes a voltage dividing resistor 861 used when detecting disconnection of the piezoelectric device 831, a filter unit 862 which permits the passage of only a predetermined frequency component from an output signal from the piezoelectric device 831, a determination unit 863 which determines on contact of an object to the piezoelectric device 831 based on an output signal from the filter unit 862 and an abnormality determination unit 864 which determines on disconnection abnormality between the center electrode 841 of the piezoelectric device 831 and the outer electrode 843 from a voltage value that is formed by the disconnection detecting resistor 833 and the voltage dividing resistor 861.

In addition, the center electrode 841 and the outer electrode 843 are connected to the sensor signal detecting unit 817, and a signal input unit 865 which inputs an output signal from the piezoelectric device 831 into the sensor signal detecting unit 817 and a signal output unit 866 which outputs a determination signal from the determination unit 863 are provided in adjacent to each other within the sensor signal detecting unit 817. A power supply line to the sensor signal detecting unit 817 and a ground line are also connected to the signal output unit 866. Furthermore, the sensor signal detecting unit 817 has a bypass unit such as a capacitor which is provided between the signal input unit 865 and the signal output unit 866 to bypasses a high frequency signal.

In addition, an informing unit 874 which informs of the result of a determination at the sensor signal detecting unit 817 via a predetermined light placed on a front panel in a passenger compartment and an opening/closing switch 875 which opens and closes the door are connected to the opening/closing control means 853. In addition, a power supply 876 is provided which is made up of a battery of an automobile for supply power through the sensor signal detecting unit 817.

The filter unit 862 has filtering characteristics in which unnecessary signals attributed to vibration of a body of the automobile are removed from output signals from the piezoelectric device 831 and only a specific frequency component that appears in output signals from the piezoelectric device 831 is extracted. To determine on filtering characteristics, vibration characteristics of bodies of automobiles and vibration of the bodies while running are analyzed for optimization.

In order to remove external electric noise, the sensor signal detecting unit 817 is totally covered with a shield member so as to be electrically shielded. In addition, the outer electrode 843 electrically communicates with the shield member of the sensor signal detecting unit 817, and the piezoelectric device 831 is also electrically shielded. Note that a feedthrough capacitor, an EMI filter or the like may be added to input and output portions of the circuit as a countermeasures against a strong electric field.

In the aforedescribed door handle apparatus 100, as shown in Fig. 40(a), when the hand fingers are placed on the grip portion 823 to pull out the grip portion 823 in a direction indicated by an arrow (b), the piezoelectric sensor 815 is deformed by vibration due to this displacement, and the sensor signal detecting unit 817 determines whether or not the door has been operated to open or close based on an output signal outputted from the piezoelectric device 831 by the deformation, so as to control the operation of the opening/closing drive means 851.

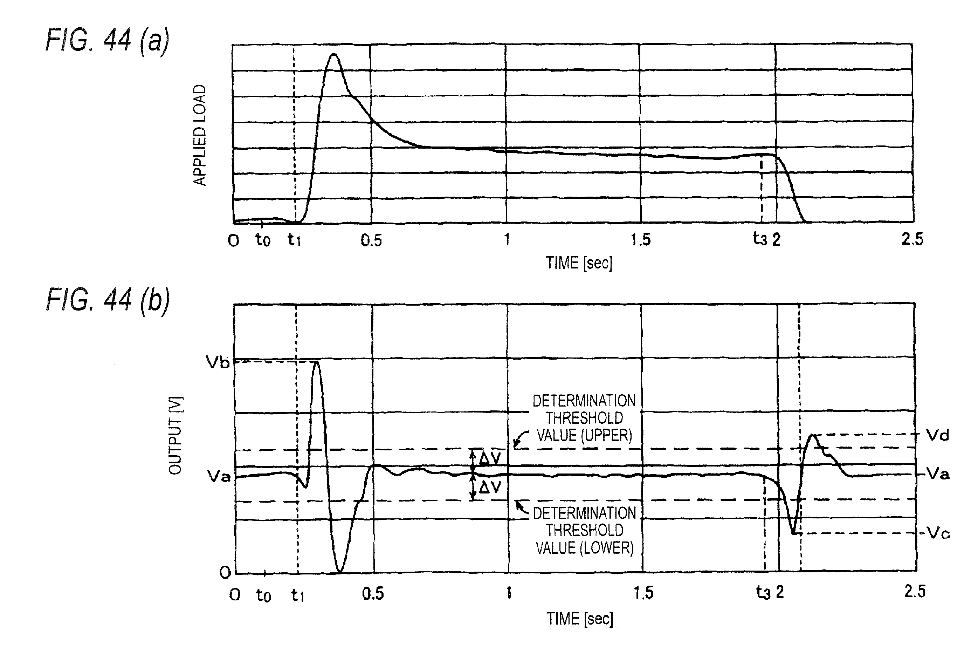

Fig. 44(a) is a diagram which shows a load applied to the piezoelectric sensor 815 and sensor output characteristics. As a result of experiments by the applicant on a relationship between a load applied to the piezoelectric sensor 815 and a sensor output, when a bending load shown in Fig. 44(a) is applied to the piezoelectric sensor 815, a sensor output exhibits a variation as shown in Fig. 44(b). Namely,
(1) when no load is applied to the piezoelectric sensor 815 at time t0, the sensor output indicates a voltage Va.

(2) When a bending load is applied to the piezoelectric sensor 815 in a certain direction at time t1, the sensor output increases to Vb momentarily the bending load is so applied and immediately thereafter reverses to be 0(V), and thereafter, the sensor output returns to Va.

(3) Thereafter, even in the event that the piezoelectric sensor 815 is left bent, the sensor output remains indicating Va.

(4) When the piezoelectric sensor 815 is restored to its original state at time t3, the sensor output decreases to Vc momentarily and immediately thereafter reverses to be Vd, and thereafter, the censor output returns to Va.

Thus, since the piezoelectric sensor 815 can detect an output in response to the acceleration with high sensitivity, the piezoelectric sensor 815 can detect with good accuracy and output minute vibration. Note that to detect a load application timing, a determination threshold of a predetermined voltage width ΔV centered at, for example, the voltage Va shown is provided and a determination may be made that there has occurred a change in load when the determination threshold is exceeded.

In the door handle apparatus 100 of the seventh embodiment which has been described heretofore, the piezoelectric sensor 815 can detect whether or not the door has been operated to open or close in the event that the piezoelectric device 831, which is the constituent element thereof, is deformed by virtue of the displacement generated by gripping the grip portion 823 by the hand, and hence, the piezoelectric sensor 815 itself does not have to be incorporated within the grip portion 823. Consequently, a hollow portion of a predetermined size does not have to be provided in the grip portion 823 for incorporation therein of the piezoelectric sensor 815, whereby the shape and dimensions of the handle main body 811 can be designed arbitrarily while paying attention to gripping characteristics when operated and external design, and the degree of freedom in designing shapes and dimensions for the handle main body 811 is increased.

Moreover, the piezoelectric sensor 815 is such as to detect whether or not the door has been operated to open or close when the piezo device material 845 of the piezoelectric device 831 is deformed due to the grip portion 823 being gripped by the hand when the door is operated to open or close, and hence, provides no risk that an approach of an apparatus or the like which has nothing to do with opening and closing operations of the door is erroneously detected compared to the related capacitance type handle operation detecting sensor.

Consequently, by setting high the detection sensitivity, whether or not an opening or closing operation of the door has been carried out can be detected quickly through a slight displacement generated in the piezoelectric sensor 815 when the grip portion 823 is gripped, whereby even in the event that the contact of the hand to the grip portion 823 when the door is operated to open or close is weak, it is possible to detect whether or not an opening or closing operation of the door has been carried out in an ensured fashion.

In particular, in this embodiment, since the piezoelectric sensor 815 is provided at the handle fixing portion 824 which contacts the grip portion 823, the piezoelectric sensor 815 is allowed to detect even a slight displacement of the grip portion 823, whereby whether or not an opening or closing operation of the door has occurred is detected in a more ensured fashion.

Additionally, in the piezoelectric sensor 815, since no detection signal is outputted as long as the piezo device material 849 of the piezoelectric device 831 is not deformed due to the grip portion 823 being gripped by the hand, the emission of noise to the surrounding environments by the transmission of useless signals can also be prevented.

In addition, since the piezoelectric sensor 815 which uses the piezoelectric device 831 can be operated stably with a consumed current of 1mA or lower, when compared to the related capacitance type piezoelectric sensor 815, the consumed current can be reduced so as to alleviate a load applied to an on-board battery.

Additionally, since the piezoelectric sensor 815 is not exposed to the outside due to the piezoelectric sensor 815 being formed between the grip portion 823 and the handle fixing portion 824, the handle apparatus can be provided whose aesthetic appearance is not damaged.

Note that while in this embodiment, the piezoelectric sensor 815 is provided between the grip portion 823 and the handle fixing portion 824, the invention is such that the displacement of the grip portion 823 can be detected in a more ensured fashion by providing, for example, a soft rubber based damping material either between the grip portion 823 and the piezoelectric sensor 815 or between the piezoelectric sensor 815 and the handle fixing portion 824.

### (Embodiment 8)

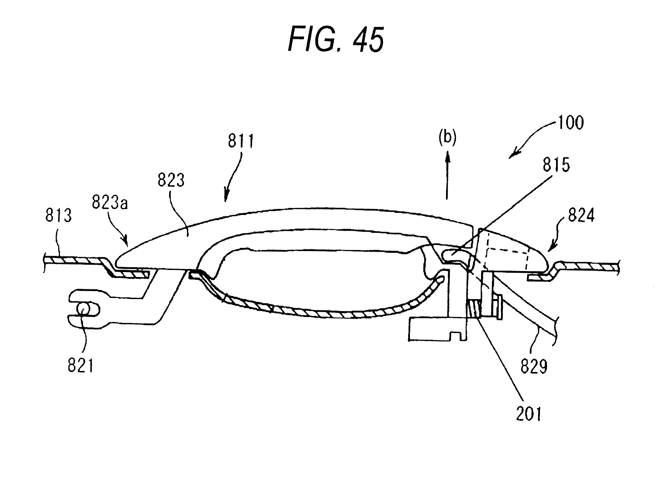

Fig. 45 is a diagram which shows an internal configuration of a door handle apparatus of an eighth embodiment according to the invention. In this embodiment, like reference numerals are imparted to constituent components which have like configurations and provides like function and advantage to those of the seventh embodiment, and a description will be centered at what the eighth embodiment differs from the seventh one, omitting repeated descriptions.

What the eighth embodiment of the invention differs from the seventh one resides in a feature that stress is applied to a piezoelectric sensor 815 constantly. Then, as a configuration in which stress is applied to the piezoelectric sensor 815 constantly, a spring 201 is provided which is formed on a handle fixing portion 824 for pulling back a grip portion 823 in an opposite direction to a direction indicated by an arrow (b). Consequently, in this embodiment, except for the configuration that has just been described, the other configurations and function and advantage are the same as those of Embodiment 7 shown in Figs. 39, 40(a), 41, 42, 43, 44, and hence, the description of the relevant portions of the seventh embodiment can be made use of, repetition of the description being omitted here.

The operation and function of the handle apparatus 100 that is configured as described above will be described below. The spring 201 is connected to the handle fixing portion 824 at one end thereof and to the grip portion 823 at the other end. In addition, the spring 201 applies a force which pulls back the grip portion so as to be brought into close contact with the handle fixing portion 824. After having been pulled out, the grip portion can be pulled back to be in close contact with the handle fixing portion 824 automatically by means of the spring 201.

The piezoelectric sensor 815 is provided between the grip portion 823 and the handle fixing portion 824 and is put in a compressed state by virtue of the spring force of the spring 201. Consequently, in a normal state where the handle grip portion 823 is not operated, the piezoelectric sensor 815 is in the compressed state and stress is applied thereto. Then, when the user manipulates the grip portion 823 so as to be pulled in a direction indicated by an arrow (b), the stress is reduced from the compressed state and the piezoelectric sensor 815 is displaced. The piezoelectric sensor 815 outputs a signal as a result of the displacement, and the operation of the grip portion 823 is detected at a sensor signal detection unit 817 shown in Fig. 43, whereby a door 813 can be opened by an opening/closing control means 853 and an opening/closing drive means 851.

Thus, in the embodiment, a minute displace of the grip portion 823 can be detected by applying the stress to the piezoelectric sensor 815 constantly, whereby whether or not the grip portion 823 has been operated can be detected with high sensitivity.

### (Embodiment 9)

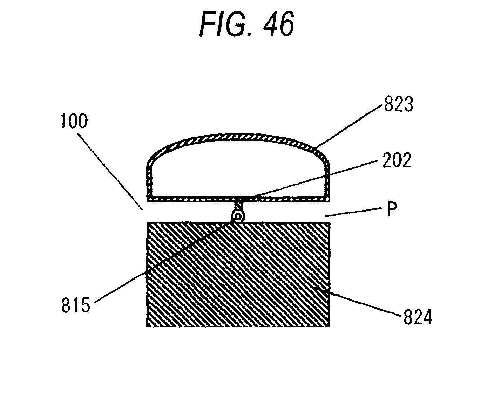

Fig. 46 is a sectional view which shows a door handle apparatus of a ninth embodiment according to the invention.
What this embodiment differs from Embodiments 7 and 8 resides in the configuration of a grip portion 823, in which a raised portion 202 is proved at a location thereof where the grip portion 823 contacts a piezoelectric sensor 815, so that the piezoelectric sensor 815 detects vibration. Consequently, in this embodiment, except for the configuration that has just been described, the other configurations and function and advantage are the same as those of Embodiments 7 and 8 shown in Figs. 39, 40(a), 41, 42, 43, 44, 45, and hence, the description of the relevant portions of the relevant embodiments can be made use of, repetition of the description being omitted here.

The operation and function of the handle apparatus 100 that is configured as described above will be described below. The raised portion 202 is held on the grip portion 823 and is in contact with the piezoelectric sensor 815. By this contact, stress can be applied to the piezoelectric sensor 815 so as to put it in a compressed state. On the other hand, the grip portion 823 is such as to be gripped and pulled by the user, and as shown in Fig. 46, a gap P is physically produced between the grip portion 823 and a handle fixing portion 824. In general, a fitting deviation is generated in the grip portion by this gap P, in which case, a predetermined stress is not applied to the piezoelectric sensor 815.

In this embodiment, however, since the raised portion 202 is provided on the grip portion 823 at the location where the grip portion 823 contacts the piezoelectric sensor 815, and therefore, the raised portion 202 never fails to contact the piezoelectric sensor 815. Consequently, even in the event that the fitting deviation occurs in the grip portion 823 due to the gap P, since the raised portion 202 can contact the piezoelectric sensor 815, the state can be maintained in which the predetermined stress is applied.

Note that while in the embodiment, the raised portion 202 is made up of a single raised portion, for example, a plurality of raised portions are provided so as to be brought into contact with the piezoelectric sensor, similar function and advantage to those of this embodiment will be obtained. In addition, a recessed portion (not shown) can be provided in a handle fixing portion 824 so as to position the piezoelectric sensor 815, thereby making it possible to further ensure the contact of the raised portion 202 with the piezoelectric sensor 815.

Thus, in the embodiment, by providing the raised portion 202 on the grip portion 823 at the location where the grip portion 823 contacts the piezoelectric sensor 815, since stress can be applied to the piezoelectric sensor 815 even in the event that the fitting deviation occurs in the grip portion 823, a highly sensitive detection of operation of the grip portion 823 is made possible.

### (Embodiment 10)

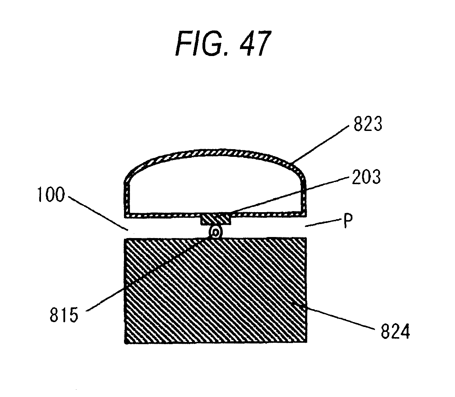

Fig. 47 is a sectional view which shows a door handle apparatus of a tenth embodiment according to the invention. What the tenth embodiment differs from Embodiments 7 and 8 resides in the configuration of a grip portion 823, in which a raised portion 203 which is proved at a location thereof where the grip portion 823 contacts a piezoelectric sensor 815 is made larger in size than the diameter of the piezoelectric sensor 815. Consequently, in this embodiment, except for the configuration that has just been described, the other configurations and function and advantage are the same as those of Embodiments 7 and 8 shown in Figs. 39, 40(a), 41, 42, 43, 44, 45, and hence, the description of the relevant portions of the relevant embodiments can be made use of, repetition of the description being omitted here.

The operation and function of the handle apparatus 100 that is configured as described above will be described below. The raised portion 203 is held on the grip portion 823 and is formed into a shape which is larger than a line width of the piezoelectric sensor 815. Even in the event that the fitting deviation described in Embodiments 8 and 9 occurs, the raised portion 203 ensures the contact of the grip portion 823 with the piezoelectric sensor 815.

Note that while in the embodiment, the raised portion 203 is made up of a single raised portion, for example, a plurality of raised portions are provided so as to be brought into contact with the piezoelectric sensor, similar function and advantage to those of this embodiment will be obtained.

Thus, in the embodiment, by making the raised portion 203 provided on the grip portion 823 larger in size than the line width of the piezoelectric sensor 815, since stress can be applied to the piezoelectric sensor 815 even in the event that the fitting deviation occurs in the grip portion 823, a highly sensitive detection of operation of the grip portion 823 is made possible.

### (Embodiment 11)

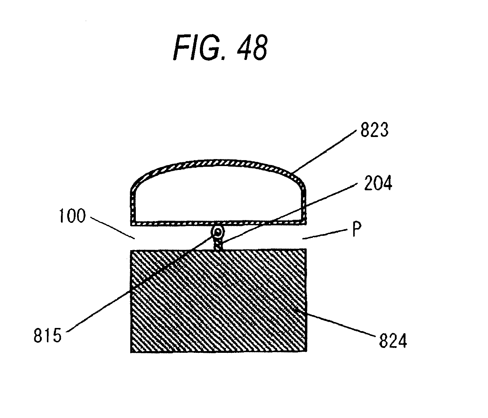

Fig. 48 is a sectional view which shows a door handle apparatus of an eleventh embodiment according to the invention. What the eleventh embodiment differs from Embodiments 7 and 8 resides in the configuration of a handle fixing portion 824, in which a raised portion 204 is proved at a location thereof where a piezoelectric sensor 815 is provided, and a piezoelectric sensor 815 is provided on this raised portion 204, so that the piezoelectric sensor 815 detects vibration. Consequently, in this embodiment, except for the configuration that has just been described, the other configurations and function and advantage are the same as those of Embodiments 7 and 8 shown in Figs. 39, 40(a), 41, 42, 43, 44, 45, and hence, the description of the relevant portions of the relevant embodiments can be made use of, repetition of the description being omitted here.

The operation and function of the handle apparatus that is configured as described above will be described below. The raised portion 204 is held on the handle fixing portion. Then, the piezoelectric sensor 815 is formed on the raised portion 204, whereby the piezoelectric sensor 815 protrudes, so that a grip portion 823 and the piezoelectric sensor 815 are brought into contact with each other. Even in the event that a fitting deviation between the grip portion 823 and the handle fixing portion 824 occurs, since the piezoelectric sensor 815 is made to protrude by the raised portion 204, the contact between the grip portion 823 and the piezoelectric sensor 815 can be ensured.

Note that while in the embodiment, the raised portion 204 is made up of a single raised portion, for example, a plurality of raised portions are provided so as to be brought into contact with the piezoelectric sensor, similar function and advantage to those of this embodiment will be obtained.

Thus, in the embodiment, by providing the raised portion 204 on the handle fixing portion 824 which causes the piezoelectric sensor 815 to protrude, even in the event that the fitting deviation described in Embodiments 8, 9 occurs between the grip portion 823 and the handle fixing portion 824, stress can be applied to the piezoelectric sensor 815.

### (Embodiment 12)

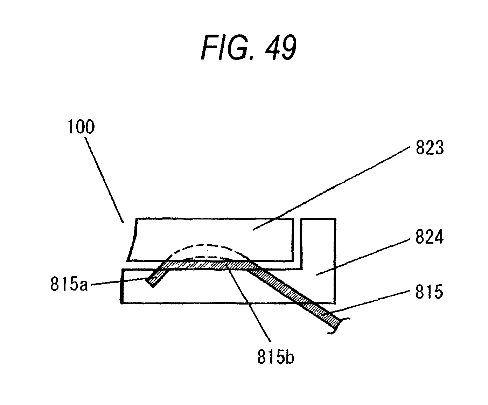

Fig. 49 is a sectional view which shows a door handle apparatus of a twelfth embodiment according to the invention. What the twelfth embodiment differs from Embodiments 7 and 8 is that a piezoelectric sensor 815 is mounted on a handle fixing portion 824 in such a manner as to be curved. Namely, the piezoelectric sensor 815 is made to penetrate through the handle fixing portion 824 so as to oppositely face a grip portion 823, and a distal end 815a thereof is inserted into the handle fixing portion 824 so as to be fixed in place therein to thereby prevent the vibration thereof, whereas on the outside of the handle fixing portion 824, a portion of the piezoelectric sensor 815 which faces the grip portion is formed into a curve 815b (a curved portion). Consequently, in this embodiment, except for the configuration that has just been described, the other configurations and function and advantage are the same as those of Embodiments 1 and 2 shown in Figs. 39, 40(a), 41, 42, 43, 44, 45, and hence, the description of the relevant portions of the relevant embodiments can be made use of, repetition of the description being omitted here.

The operation and function of the handle apparatus 100 that is configured as described above will be described below. By forming the curve 815b on the piezoelectric sensor 815, stress is applied to the curved location by virtue of bending. A minute displace of the grip portion 823 can be detected by virtue of the stress. Namely, in a normal case where the grip portion 823 is not operated, the piezoelectric sensor 815 is in a state where the curve 815b is being formed as indicated by broken lines with stress applied thereto and is also deformed by the grip portion 823 as indicated by solid lines. Then, when the grip 823 is operated to be pulled in the direction indicated by the arrow (b) in Fig. 40(a) by the user, the stress at the curved portion 15b is reduced, and the piezoelectric sensor 815 is displaced. The piezoelectric sensor 815 outputs a signal when so displaced, and the operation of the grip portion 823 is detected at the sensor signal detecting unit 817 shown in Fig. 43, whereby a door 813 can be opened by the opening/closing unit 853 and the opening/closing drive means 851.

Note that while in the embodiment, the piezoelectric sensor 815 is made to penetrate through the handle fixing portion 824 to thereby be held, the invention is not limited thereto, and provided that the function and advantage can be obtained by curving the piezoelectric sensor 815, the curved piezoelectric sensor 815 may be mounted on the handle fixing portion 824.

In addition, while in this embodiment, the portion of the piezoelectric sensor 815 which is outside the handle fixing portion 824 is formed into the curve 815b, stress acting to bend the piezoelectric sensor 815 is also applied to the portion which is outside the handle fixing portion 824 on both sides of the curve 815b, and hence, the portion defined between the bending stress applied portions which includes the relevant portions may be formed into any shape including curved, rectilinear and wavy shapes, provided that the shape can produce stress that is to be applied thereto.

Thus, in this embodiment, by mounting the piezoelectric sensor 815 on the handle fixing portion 824 with the location of the former which oppositely faces the grip portion 823 formed into the curve 815b, stress can be applied to the curved location, thereby making it possible to detect a minute displacement of the grip portion 823.

### (Embodiment 13)

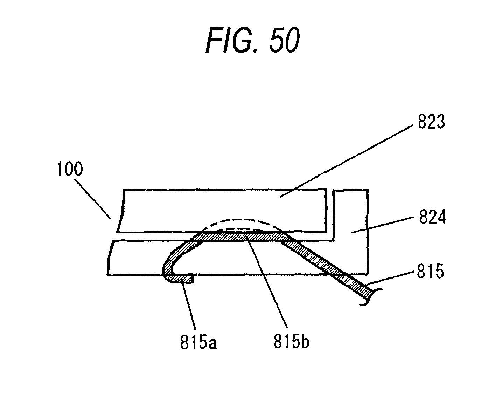

Fig. 50 is a sectional view which shows a door handle apparatus of a thirteenth embodiment according to the invention. What the thirteenth embodiment of the invention differs from Embodiments 7 and 8, and Embodiment 12 resides in the configuration of a piezoelectric sensor 815, in which a distal end 815a of the piezoelectric sensor 815 is made to penetrate through a handle fixing portion 824 to be held so that vibration from other sources than the handle fixing portion 824 is made difficult to be detected. Consequently, in this embodiment, except for the configuration that has just been described, the other configurations and function and advantage are the same as those of Embodiments 7 and 8 shown in Figs. 39, 40(a), 41, 42, 43, 44, 45, and Embodiment 12 shown in Fig. 49, and hence, the description of the relevant portions of the relevant embodiments can be made use of, repetition of the description being omitted here.

The operation and function of the handle apparatus that is configured as described above will be described below. In the event that the distal end 815a of the piezoelectric sensor 815 is not fixed with a curve 815b, it is considered that the piezoelectric sensor 815 oscillates due to the vibration of the vehicle body. The piezoelectric sensor 815 is displayed by this oscillation, and a signal is outputted which is similar to one outputted when a grip portion 823 is operated.

In this embodiment, however, since the distal end 815a of the piezoelectric sensor 815 is fixed to and held on the handle fixing portion 824, the displacement of the piezoelectric sensor 815 due to the vibration of the vehicle body is alleviated, and therefore, the effect of disturbance such as the vibration of the vehicle body can be reduced. In addition, since vibration that the piezoelectric sensor 815 detects can be limited to vibration from the grip portion 823 and the handle fixing portion by holding the distal end 815a of the piezoelectric sensor 815 by the handle fixing portion 824, a configuration can be realized in which vibration from other sources than the handle fixing portion is made difficult to be detected.

Thus, in the embodiment, the effect of disturbance such as vibration resulting from other sources than the handle fixing portion 824 can be reduced by holding the distal end 815a of the piezoelectric sensor 815 by the handle fixing portion 824.

### (Embodiment 14)

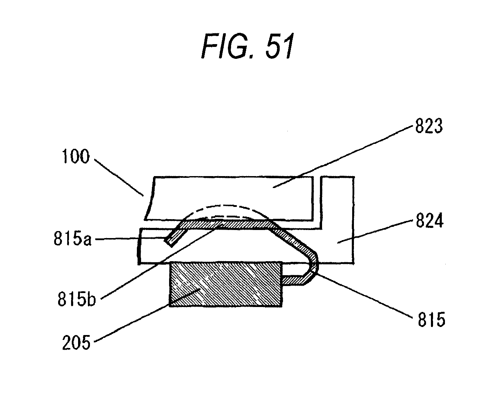

Fig. 51 is a sectional view which shows a door handle apparatus of a fourteenth embodiment according to the invention. What the fourteenth embodiment of the invention differs from Embodiments 7 and 8, and Embodiment 12 resides in the configuration of a piezoelectric sensor 815, in which a sensor circuit case 205 is held by a handle fixing portion 824 so that vibration from other sources than the handle fixing portion 824 is made difficult to be detected. Namely, the sensor circuit case 205 is a case which is made of a sheet metal covering a sensor circuit, not shown, which is connected to the piezoelectric sensor 815. The sensor circuit, which is made up of an operational amplifier and the like, is such as to convert vibration to an electric signal. Consequently, in this embodiment, except for the configuration that has just been described, the other configurations and function and advantage are the same as those of Embodiments 7 and 8 shown in Figs. 39, 40(a), 41, 42, 43, 44, 45, and Embodiment 12 shown in Fig. 49, and hence, the description of the relevant portions of the relevant embodiments can be made use of, repetition of the description being omitted here.

The operation and function of the handle apparatus that is configured as described above will be described below. The piezoelectric sensor 815 is such as to detect vibration even at a location where the sensor is connected to the sensor circuit case 205. Vibration applied to the location where the sensor circuit case 205 is connected with the piezoelectric sensor 815 becomes vibration transmitted from the handle fixing portion 824 by holding the sensor circuit case 205 by the handle fixing portion 824. Namely, since vibration transmitted to the sensor circuit case 205 is limited to vibration from the handle fixing portion 824, effect of vibration from other sources than the handle fixing portion 824 can be reduced.

Thus, in the embodiment, by holding the sensor circuit case 205 by the handle fixing portion 824, disturbance vibration from other sources than the handle fixing portion is reduced, thereby making it possible to detect displacement of a grip portion in an ensured fashion.

### (Embodiment 15)

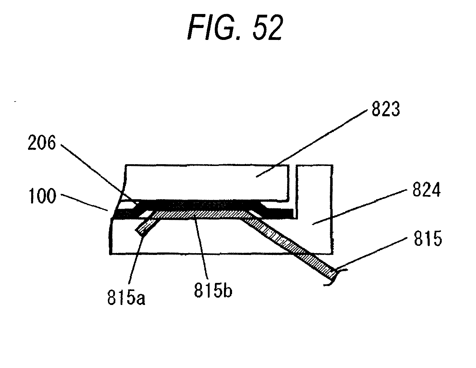

Fig. 52 is a sectional view which shows a door handle apparatus of a fifteenth embodiment according to the invention.

What the fifteenth embodiment of the invention differs from Embodiments 7 and 8, and Embodiment 12 resides in the configuration of a piezoelectric sensor 815, in which a waterproofing means 206 is provided which covers a curve 815b of the piezoelectric sensor 815 which lies outside a handle fixing portion 824 with a view to preventing water such as rain from entering from the outside. The waterproofing means 206 is made of a rubber based resin material and is formed into a thin thickness, so as to cover the curve 815b of the piezoelectric sensor 815 which is exposed from the handle fixing portion 824. In addition, while the piezoelectric sensor can be displaced more easily when the thickness of the waterproofing means 206 is thin, in case it is thin, the device tends to be broken, and hence, the thickness is preferably in the range of on the order of about 0.5mm to 1mm in consideration of durability. In addition, while a natural rubber material and a plastic material can be used as materials for the waterproofing means 206, an EPDM rubber material is suitable when considering durability.

Consequently, in this embodiment, except for the configuration that has just been described, the other configurations and function and advantage are the same as those of Embodiments 7 and 8 shown in Figs. 39, 40(a), 41, 42, 43, 44, 45, and Embodiment 12 shown in Fig. 49, and hence, the description of the relevant portions of the relevant embodiments can be made use of, repetition of the description being omitted here.

The operation and function of the handle apparatus that is configured as described above will be described below. The curve 815b of the piezoelectric sensor 815 which is formed outside the handle fixing portion 824 is prevented from being exposed by the waterproofing means 206, whereby dust, rain, snow and the like which come to adhere thereto can be prevented from entering. Consequently, there is eliminated a case where water such as rain and snow enters and a location on the piezoelectric sensor 815 where the curve 815a lies gets frozen to thereby prevent the displacement of the piezoelectric sensor 815, whereby the piezoelectric sensor 815 is allowed to detect a displacement of a grip portion 823.

Thus, in the embodiment, the piezoelectric sensor 815 does not have to be exposed due to the waterproofing means 206, thereby making it possible to render the piezoelectric sensor 815 difficult to be affected by dust, rain, snow and the like which come to adhere thereto.

### (Embodiment 16)

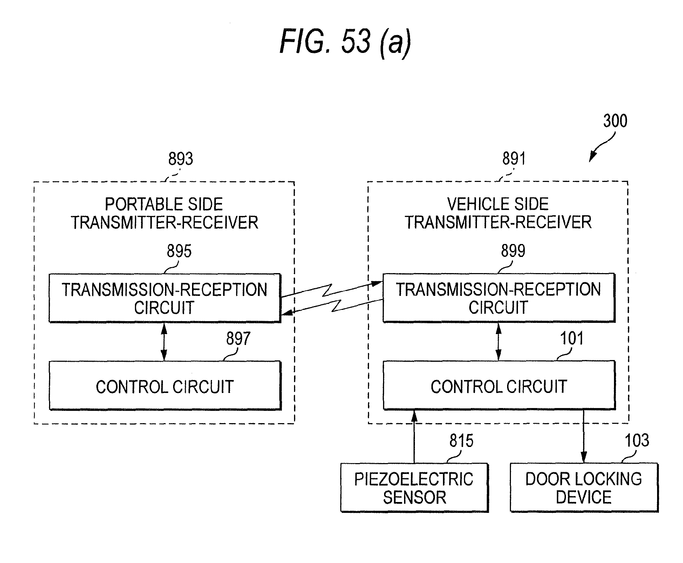

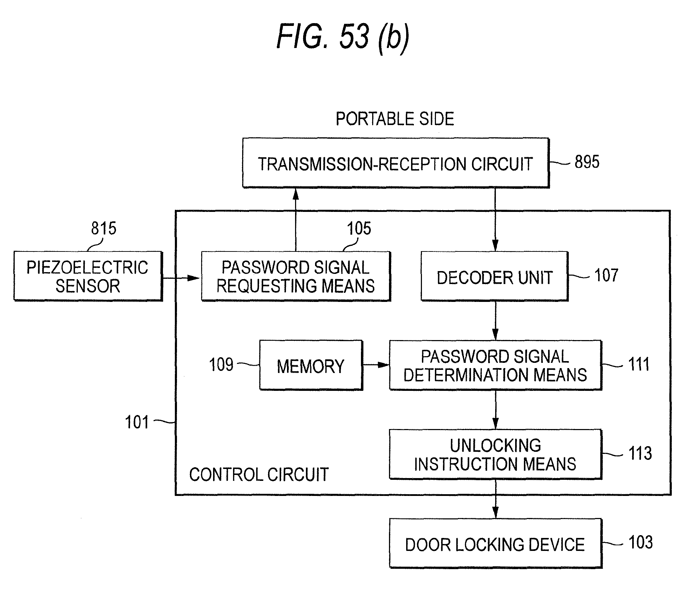

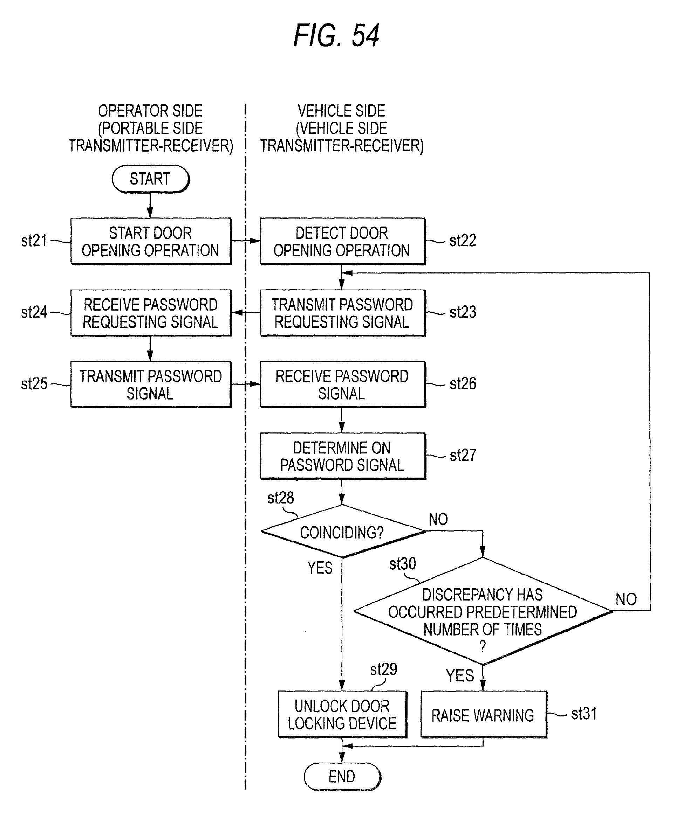

Next, a keyless entry apparatus according to a tenth embodiment of the invention will be described. Fig. 53(a) s a block diagram which shows schematically the configuration of a keyless entry apparatus which installs therein any of the door handle apparatuses 100 of Embodiments 7 to 15 according to the invention, Fig. 53 (b) is a block diagram which shows in detail the configuration of a main part of the keyless entry apparatus, and Fig. 54 is a flowchart which an operation procedure of the keyless entry apparatus shown in Figs. 53(a), (b). Consequently, the configuration and function and advantage of Embodiment 7 shown in Figs. 39, 40(a), 41, 42, 43, 44, and hence, the description of the relevant portions of the seventh embodiment can be made use of, repetition of the description being omitted here.

A keyless entry apparatus 300 according to the embodiment includes at least any door handle apparatus (for example, the door handle apparatus 100) of the door handle apparatuses described in the seventh to fifteenth embodiments above with the functions which overlap excluded, a transmitter-receiver 891 shown in Fig. 53(a) as being installed on a vehicle side and a transmitter-receiver 893 which is carried by an operator. The keyless entry apparatus 300 operates basically such that the portable side transmitter-receiver 893 receives a password requesting signal transmitted by the vehicle side transmitter-receiver 891, and thereafter, the vehicle side transmitter-receiver 891 receives a password signal transmitted by the portable side transmitter-receiver 893, whereby a lock which locks a door 813 is released or unlocked.

The portable side transmitter-receiver 893 is made up of a transmission-reception circuit 895 which transmits and receives a radio wave having the same frequency as the vehicle side transmitter-receiver 891, a control circuit 897 which controls the transmission-reception circuit 895 and a power supply circuit, not shown. The control circuit 897 is configured so as to have a CPU, not shown, and a non-volatile memory in which a program and a password are written which are used to control the CPU, whereby when a password requesting code from the vehicle side transmitter-receiver 891, which will be described later on, is received by the transmission-reception circuit 895, the control circuit 897 instructs the transmission-reception circuit 895 to transmit the password written in the non-volatile memory. Note that an antenna coil, not shown, is provided on the transmission-reception circuit 895. In addition, as a power supply for the portable side transmitter-receiver 893, a primary battery such as a primary cell may be used or a configuration may be adopted in which energy may be used which is induced at the antenna coil by a carrier signal from the vehicle side transmitter-receiver 891.

The vehicle side transmitter-receiver 891 is configured so as to have a transmission-reception circuit 899 which transmits and receives a radio wave having the same frequency as the portable side transmitter-receiver 893 and a control circuit 101 which is a control unit which controls the transmission-reception circuit 899. Note that an antenna coil, not shown, is provided on the transmission-reception circuit 899. A piezoelectric sensor 815 of the door handle apparatus 100 and a door locking device 103 are connected to the control circuit 101. The control circuit 101 monitors vibration resulting from contact by the operator to a handle main body 811 through the piezoelectric sensor 815 and is on when a change value on the monitored vibration reaches or exceeds a predetermined value. When the control circuit 101 is on, power is supplied to the vehicle side transmitter-receiver 891 from a battery via a relay box, not shown.

The control circuit 101 of the vehicle side transmitter-receiver 891 is basically configured so as to have a CPU and a non-volatile memory in which a program and a password code are written which are used to control the CPU. To be specific, as shown in Fig. 53(b), the control circuit 101 is made up of a password signal requesting means 105 which receives a detection signal from the piezoelectric sensor 815 and instructs the vehicle side transmitter-receiver 891 to transmit a password requesting signal, a decoder unit 107 which interprets a password signal received by the vehicle side transmitter-receiver 891, a password signal determination means 111 which determines whether or not the password signal, which is so interpreted, is a normal signal stored in the memory 109, and an unlocking instruction means 113 which instructs the door locking device 103 to perform unlocking when the password signal is determined to be the normal signal.

In this keyless entry apparatus 300, as shown in Fig. 54, when the operator inserts his or her hand between the door 813 and the handle main body 811 to attempt to open the door 813 by gripping a grip portion 823 (step (hereinafter, referred to as "st" in all cases) 21), a door opening operation is detected by the control circuit 101 (st22), and a password requesting signal is transmitted from the password signal requesting means 105 (st23). When receiving the password requesting signal (st24), the control circuit 897 of the portable side transmitter-receiver 893 transmits a password signal from the transmission-reception circuit 895 (st25). When receiving the password signal (st26), in the control circuit 101, after the password signal is interpreted by the decoder unit 107, a determination of the password signal is performed by the password signal determination means 111 (st27), and when the password signal so interpreted coincides with a password signal stored in the memory 109 (st28), an unlocking signal is transmitted to the door locking device 103 by the unlocking instruction means 113 (st29). On the contrary, when the password signal does not coincide and the password signal is determined not to coincide a predetermined number of times or more (st30), an alarm is raised (st31).

According to the keyless entry apparatus 300 of the sixteenth embodiment, since the door handle apparatus 100 is provided as a main constituent member which enables a highly sensitive detection, which is difficult to be affected by disturbance, which would otherwise affect the apparatus with exposed electrodes and which has few limiting conditions on a setting place and a stroke for contacts joining, which is inherent in the contact joining switch, does not exist, there exists no time lag from the moment the door opening or closing operation is initiated until the switch is activated. Consequently, a time from the moment the door opening or closing operation is initiated until the unlocking instruction means 113 of the control circuit 101 instructs the door locking device 103 to perform unlocking can be reduced largely, thereby making it possible to unlock the door locking device 103 in such a way as to enable an abrupt door opening.

### (Embodiment 17)

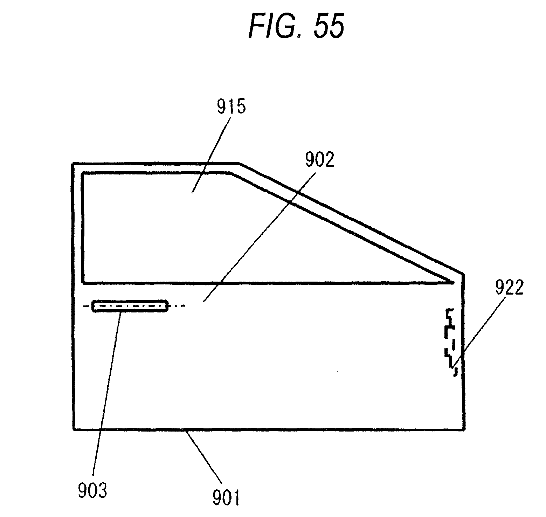

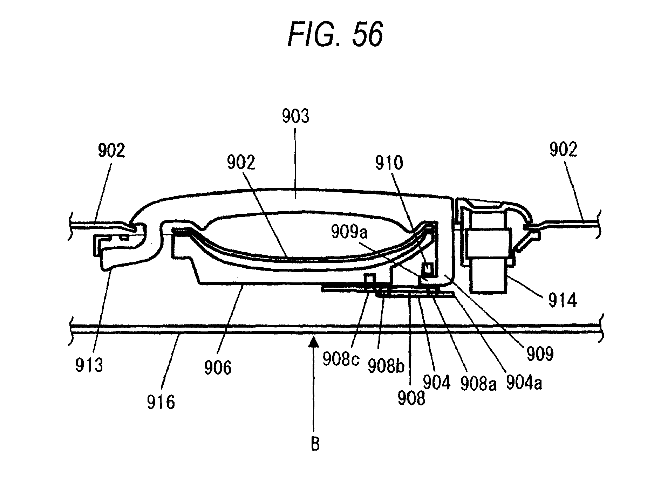

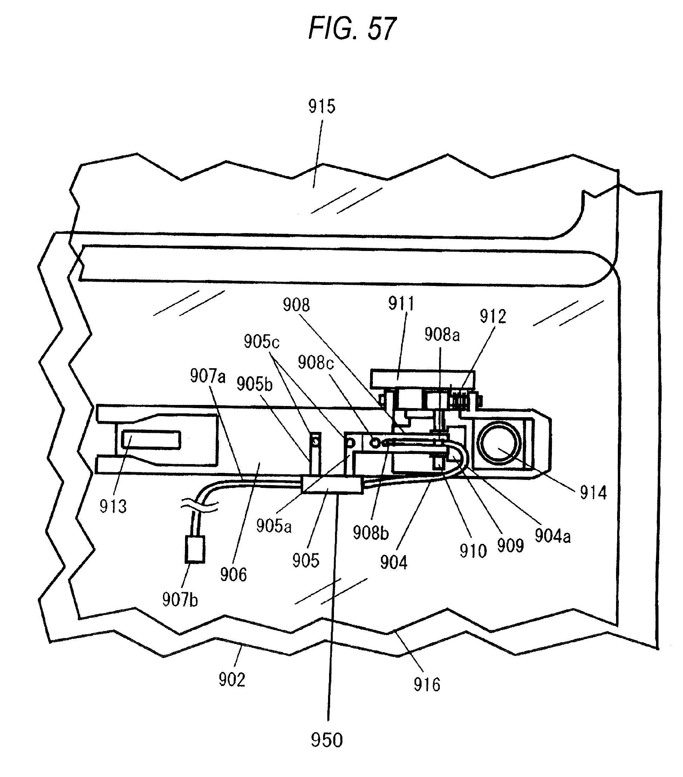

Fig. 55 is an external view of an automotive door including a door handle apparatus according to Embodiment 17 of the invention. In the figure, a door handle 903 as a handle portion is mounted on an outer panel (a door panel) 902 of a door 901. Fig. 56 is a sectional view (as viewed from a top side of a vehicle body) of the door handle apparatus taken along the line A-A in Fig. 55, and in the figure, a left side denotes a front of the vehicle body, whereas a right side denotes a rear of the vehicle body. Fig. 57 is an external view of the door handle apparatus as viewed in a direction indicated by an arrow B in Fig. 56, that is, from an inside of a passenger compartment.

In Figs. 56 and 57, a flexible cable-shaped piezoelectric sensor 904 is mounted on a frame portion 906 together with a sensor signal detecting unit 905. The piezoelectric sensor 904, a power supply and detection signal output cable 907a and a connector 907b are connected to the sensor signal detecting unit 905. The piezoelectric sensor 904 is supported on and fixed to an elastic element 908 made of a leaf spring at an end portion (a support portion 908a in the figure) of the elastic element 908 and at a portion (a support portion 908b in the figure) of the elastic element 908 which lies in the vicinity of a distal end of the piezoelectric sensor 904. In addition, the piezoelectric sensor 904 has a bent portion 904a in a direction in which the piezoelectric sensor 904 extends from the end portion (the support portion 908a in the figure) of the elastic element 908. As shown in Fig. 57, the elastic element 908 is joined to a metallic mounting fixture 905a of the sensor signal detecting unit 905 by virtue of welding at the other end thereof which lies in a direction towards a fixing portion 908c to the frame portion 906, and the piezoelectric sensor 904 and the elastic element 908 are molded integrally with the sensor signal detecting unit 905 via the metallic mounting fixtures 905a so as to form a sensor unit 950. In addition, the sensor unit 950 is fixed to the frame portion 906 via the metallic mounting fixtures 905a, 905b provided on the sensor signal detecting unit 905 with machine screws 905c.

The elastic element 908 is fixed at the fixing portion 908c in a cantilever-like fashion. In addition, the elastic element 908 is brought into contact with an arm portion 909 as a movable portion which operates while linking with the door handle 903 at an end portion 909a. Here, while the elastic element 908 originally has a shape in which the elastic element 908 is bent towards the outside of the passenger compartment at a predetermined angle in the vicinity of the fixing portion 908c, since the elastic element 908 is biased to be pushed in towards the inside of the passenger compartment by the end portion 909a with a predetermined pressure while the door handle 903 is not in use (a state in which a contact thereto by a human being or an object, or neither opening operation nor closing operation is performed thereby), a state results when the door handle 903 is not in use in which almost no bending exists in the vicinity of the fixing portion 908c of the elastic element 908 and a pressure exists due to the elastic element 908 pressing against the end portion 908a. Part of a bell crank arm 910 is brought into abutment with the arm portion 909, and part of a balance weight 911 is brought into abutment with the bell crank arm 910. Then, since a coil-shaped spring 912 biases the balance weight 911 with a predetermined spring pressure, the spring pressure of the spring 912 is applied to the arm portion 909 via the balance weight 911 and the bell crank arm 910, so that the door handle 903 is normally pressed in a closing direction (towards the inside of the passenger compartment). In addition, the aforesaid press biasing action to the elastic element 908 by the end portion 909a results from the spring pressure of the spring 912 applied to the end portion 909a via the arm portion 909, and the spring characteristics of the elastic element 908 are set such that the pressure which the end portion 909a applies to the elastic element 908 by virtue of the spring pressure of the spring 912 becomes larger than the resiliency of the elastic element 908 as a leaf spring. An operation center arm portion 913 is provided on the door handle 903 on an opposite side to a side thereof where the arm portion 909 is provided, whereby when the door handle 903 is pulled towards the outside of the passenger compartment, the door handle 903 is rotated and displaced about the operation center arm portion 913 which acts substantially as a rotational center. A key cylinder 914 is provided on the arm portion 909 in such a manner as to be adjacent thereto.

In Fig. 57, a general window 915 of a door 901 is provided above the door handle 903, and a protection window 916 is provided on a passenger compartment side of the window 915 which constitute a double glazing together with the window 915. In the figure, the window 915 is in a closed state, whereas the protection window 916 is in a completely opened state, and in a state in which both are in the opened state, the windows are situated on a passenger compartment side of the door handle 903.

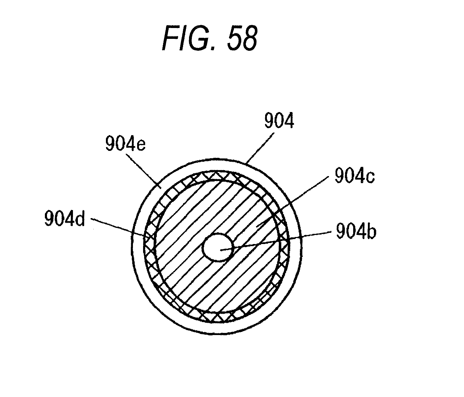

Fig. 58 is a sectional view of the piezoelectric sensor 904. The piezoelectric sensor 904 is such that a central electrode 904b, a piezoelectric element 904c, an outer electrode 904d and a covering layer 904e are molded coaxially and has a configuration which has superior flexibility as a whole. While a normal metallic solid conductor is used for the central electrode 904b, here, an electrode is used in which a metallic coil is wound around an insulating polymeric fiber. Polyester fiber which is commercially used for electric blankets and a copper-alloy which contains 5% by weight of silver are preferred as the insulating polymeric fiber and the metallic coil, respectively.

The piezoelectric element 904c is such as to be made by kneading together polyethylene resin and piezoelectric ceramic (here, lead titanate zirconate) powder and is continuously extruded together with the central electrode 904b to thereby form the flexible piezoelectric element 904c. Note that it is desirable in consideration of effect to the environment to use a non-lead material such as bismuth-sodium titanate based or niobate-alkali based piezoelectric ceramic material as the piezoelectric ceramics.

A DC voltage of several kilovolts is applied between the central electrode 904b and an artificial electrode which is brought into contact with a surface of the piezoelectric element 904c after the piezoelectric element 904c has been extruded around a circumference of the central electrode 904b so as to polarize the piezoelectric element 904c, whereby a piezoelectric effect is imparted to the piezoelectric element 904c. Abelt-shaped electrode in which a metallic film is bonded on to a polymeric layer is used for the outer electrode 904d, and the belt-shaped electrode is made to be wound around a circumference of the piezoelectric element 904c. Polyethylene terephthalate (PET) is used as the polymeric layer, and since electrodes in which an aluminum film is bonded on to both sides of the polymeric layer have a high thermal stability at 120°C and are mass produced commercially, they are preferred for use as the outer electrode 904d. Note that in order to shield the electrode against noise in an external environment, it is preferable that the outer electrode 904d is wound around the circumference of the piezoelectric element 904c in such a manner as to overlap partially. Although vinyl chloride is preferred for use for the covering layer 904e in terms of reliability, it is preferable in consideration of effect to the environment to use non-vinyl-chloride based materials such as thermoplastic elastomer.

By the configuration that has just been described above, the piezoelectric sensor 904 has superior flexibility and generates an output signal in response to a deforming acceleration at the time of deformation.

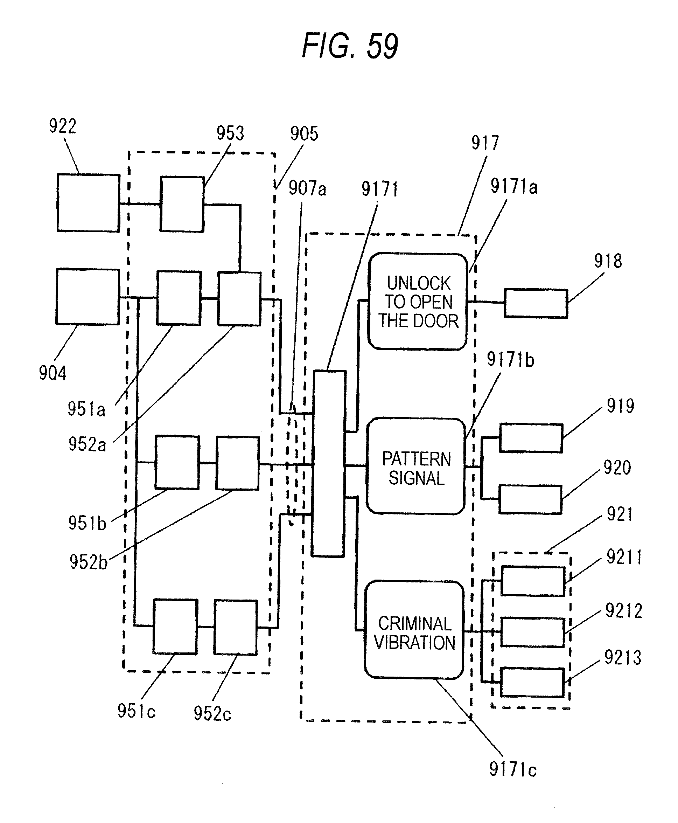

Fig. 59 is a block diagram which controls related portions of an automobile which includes the door handle apparatus according to Embodiment 17 of the invention. In Fig. 59, the sensor signal detecting unit 905 includes a plurality of filter units 951 (951a, 951b, ...) and a plurality of comparison units 952 (952a, 952b, ...). Since the filter unit 951 filters an output signal from the piezoelectric sensor 904 with predetermined filtering characteristics and amplifies the same with a predetermined amplification degree, the filter unit 951 has at least one band-pass filter, not shown, which is made up, for example, of an operational amplifier and peripheral components and, if necessary, a band elimination filter unit or a low-pass filter which is made up of an operational amplifier and peripheral components and is adapted to remove signal components including a natural vibration frequency of the door 901. The comparison unit 952 compares the output signal from the filter unit 951 to a set value which is preset and then makes determination. Namely, at least either of a contact of a human being or an object to the door handle 903 and an opening operation by the door handle 903 based on an output signal from the filter unit 951. A comparator is used as the comparison unit 952. The filter units 951 and the comparison units use devices whose consumed currents are 1mA or lower, respectively.

In the filter unit 951a, the band-pass filter unit is set to have characteristics which are set so as to allow for passage through a frequency area of, for example, 3Hz to 8Hz as a characteristic frequency band by analyzing the frequency of an output signal outputted from the piezoelectric sensor 904 when the door handle 903 is operated experimentally. When setting the band elimination filter unit or the low-pass filter unit, a setting is implemented by verifying a characteristic frequency band by analyzing the frequency of an output signal outputted from the piezoelectric sensor 904 when the door 901 is intentionally knocked on, for example. For example, since when the door 901 is knocked on intentionally, a signal having a peak in a frequency area of, mainly, 10Hz or more can be verified from an output signal from the piezoelectric sensor 904, in this case, the low-pass filter is set to characteristics in which the frequency area of 10Hz or more is removed. In addition, in the event that the intensity of the natural vibration is so small that little influence is given to an output signal from the piezoelectric sensor 904, neither the band elimination filter nor the low-pass filter may be provided. Since it is assumed that the natural vibration characteristic differs depending on types of vehicles and sizes and weight of doors, it is preferred to optimize the setting of the band-pass filter unit, the band elimination filter unit and the low-pass filter unit based on the aforesaid experimental analysis.

In addition, the filter unit 951b has a band pass filter which passes a frequency area which is different from the filter unit 951a. For example, the band pass filter is set to have characteristics which allow for passage through a frequency area of 10Hz to 30Hz based on an experimental frequency analysis, so that a characteristic signal can be determined which is outputted when the outer panel 902 of the door 901 and the door handle 903 are knocked on or the window 916 is attempted to be shattered.

The detecting unit 905 is preferably covered with a shield member so as to be electrically shielded in order to remove external electric noise. In addition, a feedthrough capacitor, an EMI filter or the like may be added to input and output portions of the detecting unit 905 as a countermeasures against a strong electric field.

In addition, the plurality of comparison units 952 of the sensor signal detecting unit 905 are connected to a control unit 917 via the detection signal output cable 907a. A determination unit 9171 is provided on the control unit 917, and the determination unit 9171 determines based on a signal from the comparison units 952 on any of an unlock-to-open-the-door mode 9171a, a pattern signal mode 9171b and a criminal vibration mode 9197c. Furthermore, the determination unit 9171 is connected a locking/unlocking means 918 for the door 901, an opening/closing device 919 for the window 915, a switching device 920 for a room lamp and a security means 921, and the security means 921 is made up of an informing device, a communication means 9212 and a locking reinforcement means 9213.

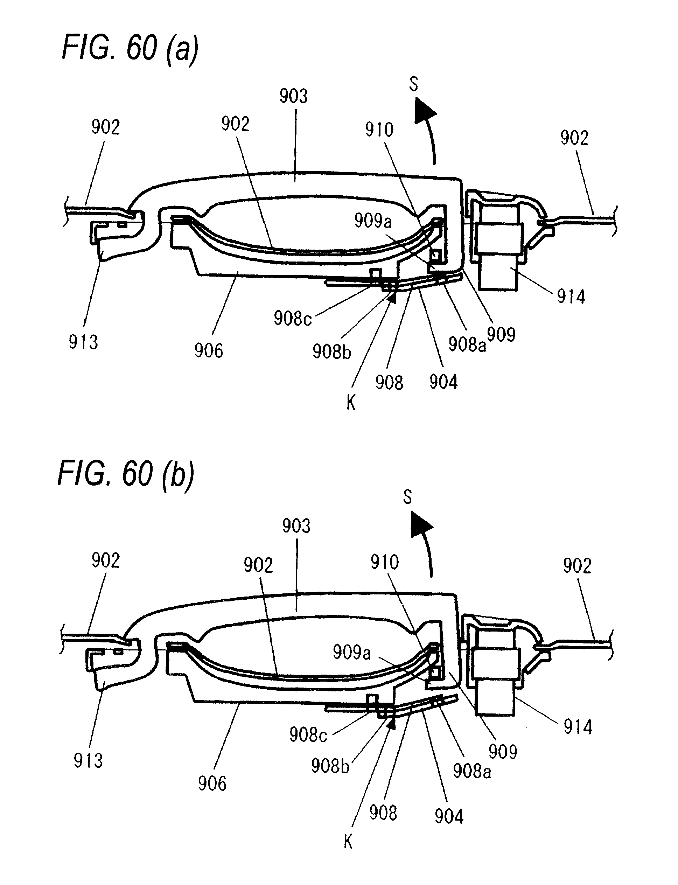

Next, the function will be described. When the door handle 903 is gripped to be pulled towards the outside of the passenger compartment, or a passenger compartment side wall surface of the door handle 903 is touched lightly, the door handle 903 is displaced towards the outside of the passenger compartment, and the arm portion 909 is displaced while linking with the door handle 903. Figs. 60(a) and (b) are schematic diagrams which show how the door handle 903, the piezoelectric sensor 904, the elastic element 908 and the arm portion 909 are then displaced. Here, Fig. 60(a) corresponds to the sectional view taken along the line A-A in Fig. 55 and is a schematic diagram which shows a state in which the elastic element 908 is displaced but still remains in contact with the arm portion 909, when the door handle 903 is pulled towards the outside of the passenger compartment (in a direction indicated by an arrow S in the figure), and Fig. 60(b) is a schematic diagram which shows a state in which the door handle 903 is pulled further towards the outside of the passenger compartment (in a direction indicated by an arrow S in the figure) from the state shown in Fig. 60(a), and the elastic element 908 has completed its displacement and is separated from the arm portion 909.

Firstly, as shown in Figs. 60(a), when the door handle 903 is displaced towards the outside of the passenger compartment, the end portion 909a of the arm portion 909 is displaced towards the outside of the passenger compartment, and the elastic element 908, which is biased by the end portion 909a with the predetermined pressure, is displaced towards the outside of the passenger compartment on a support portion 908a side thereof centered at the vicinity of the fixing portion 908c while in contact with the end portion 909a. When the elastic element 908 is so displaced, the piezoelectric sensor 904, which is supported on the elastic element 908, is also bent and deformed at a point K in Fig. 60(a), and since a pulling force towards the outside of the passenger compartment is applied at the bent portion 904a, the piezoelectric sensor 904 is deformed in a direction in which the radius of curvature of the bent portion 904a is increased. Then, the piezoelectric sensor 904 generates an output signal which results from superposition of a voltage signal that is generated by virtue of a piezoelectric effect imposed by the bending deformation at the point K, and a voltage signal that is generated by virtue of a piezoelectric effect imposed by the deformation of the bent portion 904a. The displacement of the elastic element 908 continues until the end portion 909a of the arm portion 909 is displaced further towards the outside of the passenger compartment when the door handle 903 is pulled further towards the outside of the passenger compartment, whereby the press biasing action to the elastic element 908 by the end portion 909a is lost, and as shown in Figs. 60(b), since the elastic element 908 is displaced no further when the press biasing action to the elastic element 908 by the end portion 909a is lost, the piezoelectric sensor 904 is not displaced, either. Note that also when the door handle 903 is pressed from the outside of the passenger compartment, the arm portion 909 is slightly deformed towards the inside of the passenger compartment and the elastic element 908 is pressed towards the inside of the passenger compartment, whereby the piezoelectric sensor 904 is deformed, and therefore, a similar detection is made possible in this case, as well.

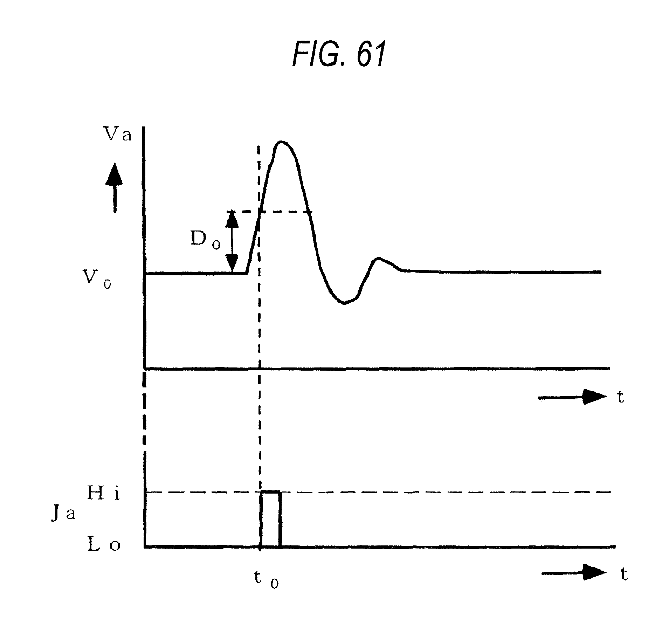

Fig. 61 is a characteristic chart which shows a signal Va of the filter unit 951a which is amplified and filtered within the sensor signal detecting unit 905 and a determination output Ja of the comparison unit 952a, both resulting when the piezoelectric sensor 904 outputs the signal as described above. In the figure, an axis of ordinate denotes sequentially from the top Va, Ja, and an axis of abscissa denotes time t. When the piezoelectric sensor 904 is deformed by the aforesaid operation of the door handle 903, a signal is outputted from the piezoelectric sensor 904 by virtue of the piezoelectric effect in response to an acceleration with which the piezoelectric sensor 904 is deformed. As this occurs, a signal having a frequency of about 3 to 8Hz appears in the output signal, and the signal so appearing is amplified and filtered within the sensor signal detecting unit 905, whereby a signal as indicated by Va in Fig. 61 is obtained.

The comparison unit 952a determines that at least either of a contact of a human being or an object to the door handle 903, and an opening operation by the door handle 903 has occurred and outputs a pulse signal of Lo→Hi→Lo as a determination output at time t0 in case an absolute value |V-V0| of an amplitude of Va from a reference potential V0 is D0 or more. The reason an absolute value of the amplitude is used is that there may occur a case where the polarity of the signal in Fig. 61 becomes opposite depending on the position and deformation state of the piezoelectric sensor 904, and to be specific, a window comparator may be used as the comparison unit 952.

By the function that has been described heretofore, in this door handle apparatus, the piezoelectric sensor 904 has such flexibility as to be annexed to the door handle 903, whereby a minute displacement of the door handle 903 can be detected with high sensitivity. Consequently, a sufficient signal output can be obtained only through a simple touch to the door handle 903, whereby at least either of the contact to the door handle 903 and the opening operation by the door handle can be detected. In addition, since electrodes do not have to be exposed to the outside, the piezoelectric sensor 904 is made difficult to be affected by disturbance, and dust, rain and snow that would otherwise adhere thereto. Furthermore, since the piezoelectric sensor 904 can be deformed with suppleness, there are imposed few limiting conditions on a setting place thereof, and a space where to dispose the piezoelectric sensor 904 is diminished.

In addition, when the door handle 903 is displaced minutely due to a human being or an object being brought into contact with the door handle 903, the arm portion 909 is displaced while linking with the door handle 903, and part of the elastic element 908 continues to be displaced while in contact with the end portion 909a of the arm portion 909 until the pressure applied thereto is lost. When the elastic element 908 is displaced, part of the piezoelectric sensor 904, which is supported on the elastic element 908, is also deformed together with the elastic element 908 and generates an output signal in response to the deformation. Then, it becomes possible to detect the minute displacement of the door handle 903 based on the output signal from the piezoelectric sensor 904 with high sensitivity. Since the piezoelectric sensor 904 receives the displacement of the arm portion 909 via the elastic element 908, there occurs no case where, for example, the piezoelectric sensor 904 comes into contact with the arm portion 909 to thereby get worn or is subjected to a direct impact that is generated by an abrupt operation of the door handle 903, reliability being thereby improved. Additionally, since, when the pressure applied to the elastic element 908 is released in conjunction with an opening operation by the door handle 903, the elastic element 908 is displaced no further, the piezoelectric sensor 904 is not deformed, either, whereby there occurs no case where the piezoelectric sensor 904 disconnects due to an excessive deformation thereof. In addition, since the elastic element 908 is molded substantially into a plate shape and is fixed at the one end thereof in a cantilever-like fashion, a configuration can be realized in which the predetermined pressure is applied thereto from the arm portion 909 in an extremely simple shape.

The piezoelectric sensor 904 is such as to have the bent portion 904a in the direction in which the piezoelectric sensor 904 extends from the support portion 908a of the elastic element 908, and therefore, the bent portion 904a of the piezoelectric sensor 904 also deforms in association with the displacement of the elastic element 908, whereby the piezoelectric sensor 904 generates an output signal in response to the deformation of the bent portion 904a. Consequently, since the output signal in response to the deformation of the bent portion 904a is outputted while being superposed on an output signal generated in association with the deformation of the elastic element 908, the sensitivity of the piezoelectric sensor 904 is increased. In addition, since the piezoelectric sensor 904, the elastic element 908 and the sensor signal detecting unit 905 are molded together so as to constitute the sensor unit 950 so that since the piezoelectric sensor 904, the elastic element 908 and the sensor signal detecting unit 905 can be mounted on the frame portion 906 as the sensor unit 950, the assembly of the door handle apparatus can be implemented with efficiency.

On the other hand, in the event that vibration is generated due to effect of disturbance such as a construction carried out near the vehicle or a collision of an object thereagainst, as shown in Figs. 55 and 59, a sensor, which has substantially the same characteristics as those of the piezoelectric sensor 904, is provided on a hinge side of the door 901 as a disturbance detecting device 922, and an output signal thereof is designed to enter the sensor signal detecting unit 905 and then enter the comparison unit 952a via a converting unit 953 having signal filtering and signal converting functions, and for example, the converting unit 953 is configured such that a signal V which has passed a filter having the same characteristics as those of 951a is converted in such a manner that an amplitude (V-V0) thereof is reversed from positive to negative or vice versa based on the reference potential V0, whereby vibrations transmitted similarly to both the piezoelectric sensor 904 and the disturbance detecting device 922 can be removed as a disturbance vibration by comparing both the vibrations. In addition, a plurality of doors are mounted on the vehicle body, and by mounting the door handle apparatus on each of the doors so provided, a plurality of piezoelectric sensors 904 are provided, and therefore, in the event that the plurality of piezoelectric sensors 904 are made to operate while linking with each other so as to compare output signals therefrom, the disturbance vibration can be removed without providing the disturbance detecting device 922.

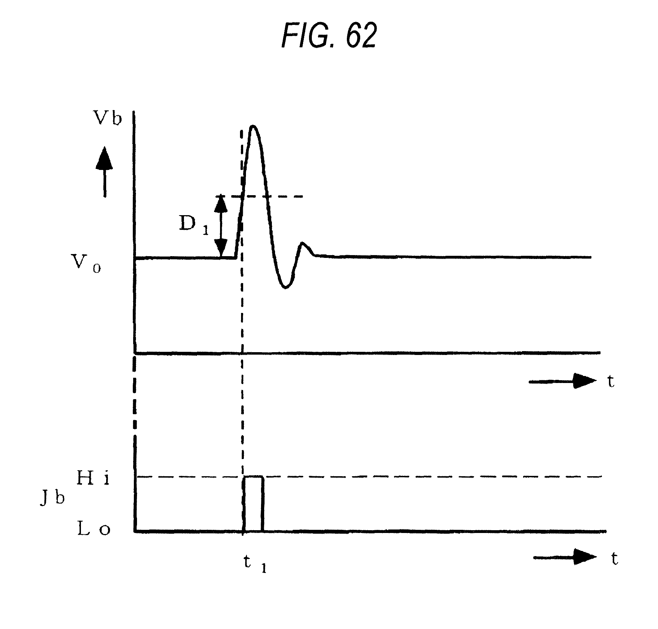

Next, an output is shown in Fig. 62 which is outputted in the event that the user knocks on the door 901 or the door handle 903, or in the event that a burglar knocks on the window 916 in an attempt to break the lock. Fig. 62 is a characteristic chart which shows an output signal Vb of the filter unit 951b which is amplified and filtered within the sensor signal detecting unit 905 and a determination output Jb of the comparison unit 952b when the aforesaid event occurs. When vibration is transmitted to the piezoelectric sensor 904 provided on the door handle 903 as a result of the knocking action to thereby deform the piezoelectric sensor 904, a signal in response to a deforming acceleration is outputted. As this occurs, due to the characteristics of the band pass filter of the filter unit 951b, a signal having a frequency of about 10 to 30Hz appears in the output signal, and the signal so appearing is amplified and filtered within the sensor signal detecting unit 905 to thereby obtain a signal like one denoted by Vb in Fig. 62 which has a shorter wavelength than that of Va in Fig. 61. The comparison unit 952b determines that vibration resulting from a knocking action or the like has been generated and outputs a pulse signal of Lo→Hi→Lo at time t1 as a determination output in case an absolute value |Vb-V0| is D1 or more.

In addition, in the event that the user knocks on the door 901 or the door handle 903 with a predetermined knocking pattern (for example, a pattern of three continuous knocking rhythms of, for example, ta-ta-tan, or twice two continuous knocking rhythms of ta-tan-ta-tan with a pause in between), a signal vibration results which has a predetermined pattern of a predetermined number of times of peak and a predetermined time interval, and when this signal vibration is detected at the piezoelectric sensor 904, a pulse signal outputted from the comparison unit 952b is transmitted to the determination unit 9171 with a specific number of times and time interval. In the determination unit 9171, when the pulse signal is inputted thereinto, the pulse signal so inputted is compared to a set value which is stored therein in advance and which has the predetermined number of times of the pulse signal and a predetermined time interval which is set with an error contained, and when the pulse signal coincides with the set value, the determination unit 9171 determines on the pattern signal mode. Even in the event that the user operates the door handle 903 in the aforesaid predetermined pattern, when a displace of the arm portion 909, which is the movable portion or a minute displacement and vibration are detected at the piezoelectric sensor 904, a pulse signal outputted from the comparison unit 952a is transmitted to the determination unit 9171 with a specific number of times and time interval. In the determination unit 9171, when the pulse signal is inputted thereinto, the pulse signal so inputted is compared to a set value which has the predetermined number of times and the predetermined time interval of the pulse signal, and when the pulse signal coincides with the set value, the determination unit 9171 is allowed to determine on the pattern signal mode.

In addition, in the event that the pulse signal outputted from the comparison unit 952a has a single number of time and hence does not coincide with the set value of the pattern signal, the determination unit 9171 is allowed to determine on the unlock-to-open-the-door mode. In addition, in the event of the unlock-to-open-the-door mode, the locking/unlocking means 918 is activated to perform a unlocking operation, but, in the event that automatic unlocking is performed, since it is more convenient in case the automatic unlocking is implemented momentarily the door starts to be operated, it is preferred to have only the pattern signal mode based on the knocking operation without setting a pattern signal mode using the door handle operation. In case the pattern signal mode is set only to the knocking operation on the door 901 and the door handle 903, all pulse signals outputted from the comparison unit 952a may be determined as the unlock-to-open-the-door mode by the determination unit 9171.

Then, in the event that the determination unit 9171 determines on the unlock-to-open-the-door mode, when, as with a keyless entry apparatus, which will be described later on, the door may be unlocked if a predetermined condition is met, the control unit 917 activates the locking/unlocking means 918 to unlock the door. On the contrary, in the event that the determination unit 9171 determines on the pattern signal mode, that is, when in summer, the user attempts to open the closed window or windows slightly for ventilation after he or she has got out of the vehicle and locked the doors using a specific knocking rhythm that only the user knows as a password, in case the user operates the apparatus using some predetermined password signal (for example, ta-ta-tan), the control unit 917 activates the opening/closing device 919 to open the window or windows a predetermined amount which is so slight that the hand of nobody can get inside. Alternatively, when the user realizes that he or she has failed to turn off the room lamp after he or she has got out of the vehicle, in case the user operates the apparatus with another predetermined password signal (for example, ta-tan-ta-tan), the control unit 917 activates the switching device 920 to turn off the room lamp.

Thus, by detecting displacement of the movable portion by the displacement detecting unit, a minute displacement of the door handle which results when a human body or an object is brought into contact with the door handle can be detected with high sensitivity. Consequently, a sufficient signal output can be obtained even when the door handle is simply touched, and it becomes possible to detect at least either the contact to the door handle or the opening operation by the door handle, thereby making it possible to obtain a sensation of touch which reacts when only touched lightly and a good operation feeling felt when opening the door. In addition, by detecting various types of vibration by detecting minute displacement, the determination unit can determine whether the vibration in question has resulted from a vibration generated by a door opening operation or another vibration such as a vibration having an intentional pattern, an erroneous vibration or a disturbance-attributed vibration, whereby a predetermined action can be taken which corresponds to the vibration so determined, thereby making it possible to realize the door handle apparatus which has the multiple functions and superior convenience.

In addition, since the piezoelectric sensor can detect a minute displacement with high sensitivity and the sensor can be deformed with suppleness, there are imposed few limiting conditions on a setting place, and a space where the piezoelectric sensor is disposed can be diminished.

In addition, when the user knocks on the door or operates the door handle in the predetermined pattern having the predetermined number of times and predetermined time interval, this vibration waveform is detected and interpreted at the displacement detecting device, and in the event that this knocking or other action (rhythm) is the predetermined action, the predetermined user requesting operation is carried out. Namely, with the specific knocking or striking rhythm that only the user knows acting as the password signal, the user can carry out the predetermined operations such as turning off the room light when he or she realizes that he or she has failed to turn it off and opening the door window or windows slightly at the top thereof for ventilation in summer time, thus making it possible to realize the door handle apparatus which has the multiple functions and superior convenience.

Note that while in Embodiment 17, the piezoelectric sensor 904 is configured so as to be brought into indirect contact with the arm portion 909 which operates while linking with the door handle 903 via the elastic element 908, a configuration may be adopted in which the piezoelectric sensor 904 is brought into direct or indirect contact with part of the bell crank arm 910 or the balance weight 911, so that the piezoelectric sensor 904 can be deformed by virtue of the displacement of the door handle 903.

In addition, in Embodiment 17 described above, a configuration may be adopted in which the elastic element 908 is made not to bend but to deform torsionally.

Additionally, while in Embodiment 17 described above, the leaf spring is used as the elastic element 908, other elastic elements such as a coil spring and a torsion bar may be used.

In addition, while in Embodiment 17 described above, the elastic element 908 is used, other configurations may be adopted such as one in which the piezoelectric sensor 904 is inserted into the interior of the arm portion 909 so as to be deformed by virtue of movement of the arm portion 909 or a configuration in which the piezoelectric sensor 904 is brought into direct abutment with part of the arm portion 909, and in this event, since the displacement of the arm portion 909 is transmitted directly to the piezoelectric sensor 904, the sensitivity is improved.

Additionally, a configuration may be adopted in which instead of using the elastic element 908, the covering layer 904e of the piezoelectric sensor 904 is made up of an elastic element having a predetermined modulus of elasticity or the shape of the piezoelectric sensor 904 is modified to have a predetermined modulus of elasticity, so that when the door handle is not in use, part of the piezoelectric sensor 904 comes into contact with part of the arm portion while applying thereto a predetermined pressure. Thus, since the use of the cable-shaped flexible piezoelectric sensor makes it possible for the sensor to easily be mounted on doors, even when they have other configurations, by adapting itself to the respective configurations, a space-saving mounting is made possible.

In addition, while in Embodiment 17 described above, the flexible piezoelectric sensor is used, other sensors may be used which generate output signals in response to a deformation based on the displacement of the door handle, including, for example, a capacitance type cable-shaped or belt-shaped sensor in which the electrostatic capacity is changed by deformation and an optical fiber type sensor in which the amount of transmitted light is changed by deformation.

Additionally, it is possible to provide a vehicle in which the door handle apparatus of Embodiment 17 described above is applied to a smart entry system at doors such as side doors and the tailgate and a building in which the same door handle apparatus is applied to a smart entry system at doors such as a front door.

### (Embodiment 18)

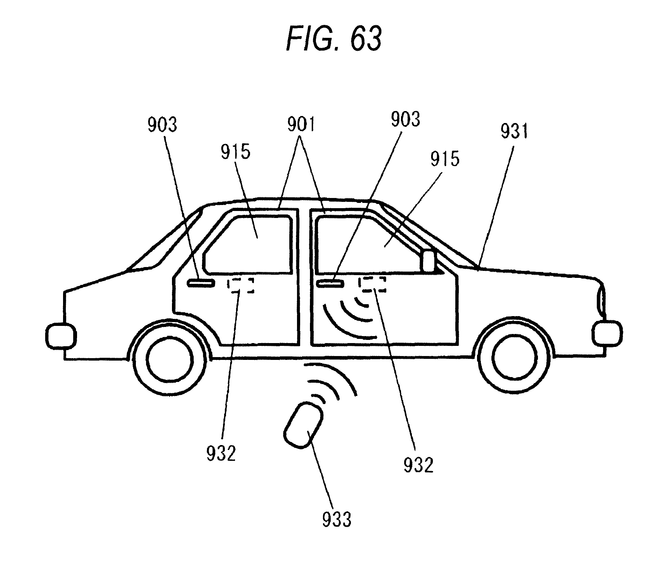

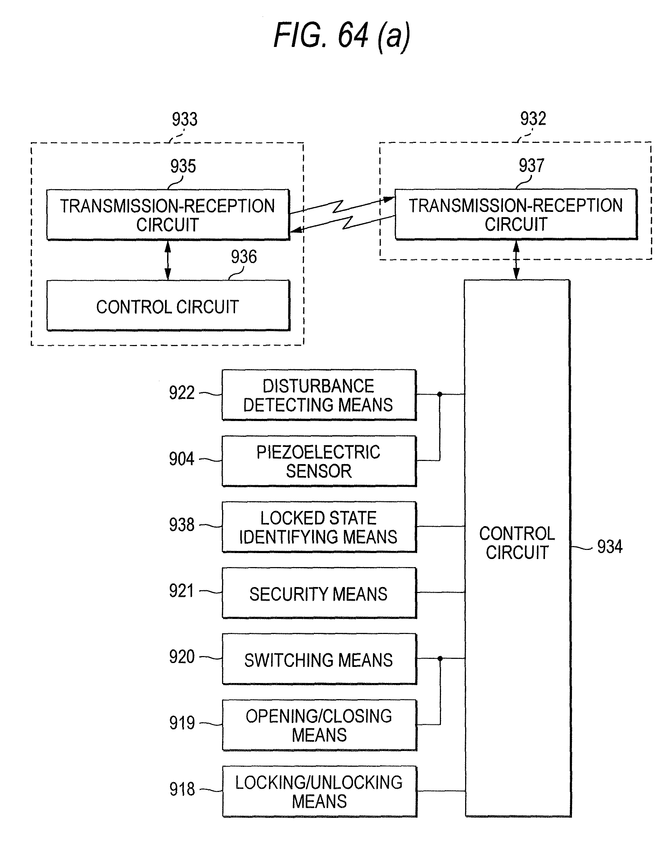

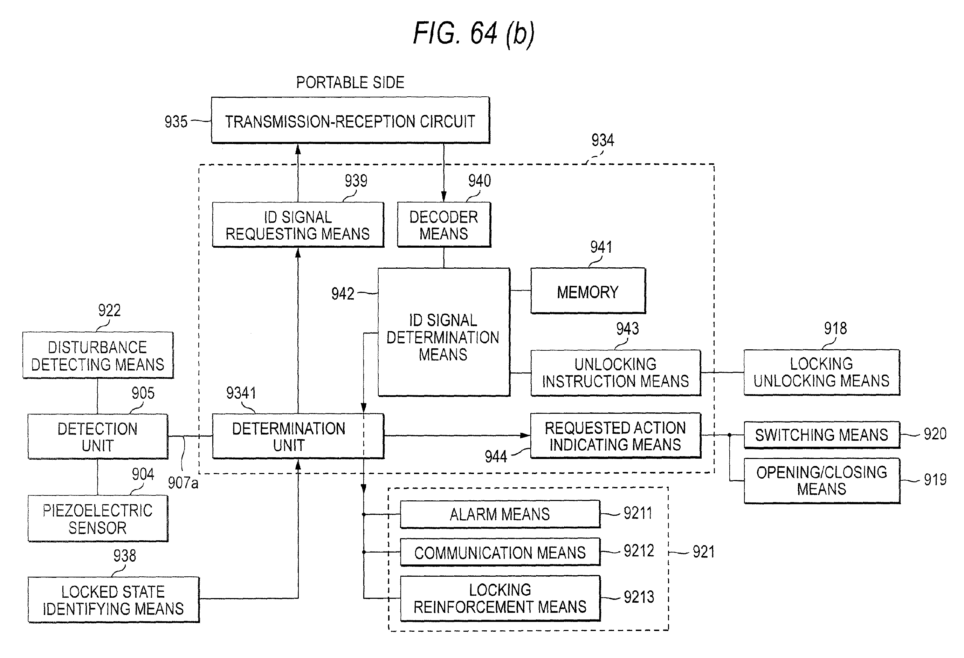

Fig. 63 is an external view of an automobile which installs a keyless entry apparatus having a door handle apparatus according to Embodiment 18 of the invention, Fig. 64 is a block diagram of the keyless entry apparatus according to Embodiment 18, in which (a) shows a brief configuration of the keyless entry apparatus and (b) shows a detailed configuration of a main part of the keyless entry apparatus. Note that like reference numerals are imparted to constituent members having like constructions to those of Embodiment 17, and the description thereof will be omitted. In Figs. 63 and 64, a door handle 903 equipped with a piezoelectric sensor 904 is provided on each of a total of four side doors provided at left front and rear and right front and rear of a vehicle 931, and a vehicle side transmitter-receiver 932 is installed inside an outer panel 902 of each door. A basic operation of this keyless entry apparatus is that when a portable side transmitter-receiver 933 carried by the user approaches the vehicle side transmitter-receiver 932 and enters a transmission-reception enabling range (for example, about 1m), the portable side transmitter-receiver 933 receives an ID requesting signal transmitted by the vehicle side transmitter-receiver 932, and then, the vehicle side transmitter-receiver 932 receives an ID signal transmitted by the portable side transmitter-receiver 933, whereupon a control circuit 934 unlocks the door 901.

The portable side transmitter-receiver 933 is configured so as to have a portable side transmission-reception circuit 935 which transmits and receives a radio wave having the same frequency as the vehicle side transmitter-receiver 932, a portable side control circuit which controls the portable transmission-reception circuit 935 and a power supply circuit, not shown. The portable side control circuit 936 has a CPU, not shown, and a non-volatile memory in which a program and a password code which control the CPU are written and instructs the portable side transmission-reception circuit 935 to transmit the password code written in the non-volatile memory when an ID requesting signal from the vehicle side transmitter-receiver 932 is received at the portable side transmission-reception circuit 935. Note that an antenna coil, not shown, is provided on the portable side transmission-reception circuit 935. In addition, as a power supply for the portable side transmitter-receiver 933, a primary battery such as a primary cell may be used or a configuration may be adopted in which energy is used which is induced at the antenna coil of the portable side transmitter-receiver 933 by a carrier signal from the vehicle side transmitter-receiver 932.

The vehicle side transmitter-receiver 932 is configured so as to have a transmission-reception circuit 937 which transmits and receives a radio wave having the same frequency of the portable side transmitter-receiver 933, and this transmission-reception circuit 937 is controlled by a control circuit 934 which is a control unit provided on the vehicle 931. Note that an antenna coil, not shown, is provided on the transmission-reception circuit 937. Connected to the control circuit 934 are the piezoelectric sensor 904, a locking/unlocking means 918, a opening/closing device 919 of a window 915, a switching device 920, a security means 921 (which is made up of an alarm means 9211, a communication means 9212 and a locking reinforcement means 9213), a disturbance detecting device 922 and a locked state identifying means 938, which are provided on each door. The control circuit 934 monitors vibration generated by contact of the user to the door handle 903 through a piezoelectric sensor 915 and is switched on when a change value on the monitored vibration reaches or exceeds a predetermined value. When the control circuit 934 is on, power is supplied to the vehicle side transmitter-receiver 932 from a battery via a relay box, not shown.

The control circuit 934 of the vehicle side transmitter-receiver 9321 is basically configured so as to have a CPU and a non-volatile memory in which a program and a password code are written which are used to control the CPU. To be specific, as shown in Fig. 64(b), the control circuit 934 includes a determination unit 9341 which determines on any of an unlock-to-open-the-door mode, a pattern signal mode, and a criminal vibration mode when receiving a detection signal from the piezoelectric sensor 904, an ID signal requesting unit 939 which causes an ID requesting signal to be transmitted from the vehicle side transmitter-receiver 932, a decoder unit 940 which interprets an ID signal received by the vehicle side transmitter-receiver 932, an ID signal determination unit 942 which determines whether or not the ID signal, which is so interpreted, is a normal signal stored in the memory 941, and an unlocking instruction means 943 which instructs the locking/unlocking means 918 to perform unlocking when the password signal is determined to be the normal signal. Furthermore, the control circuit 934 includes a requested action indicating unit 944, and in the determination unit 9341, a specific knocking or striking rhythm that only the user knows is interpreted as a password signal based on a detection signal from the piezoelectric sensor 914, and it is determined whether or not the password signal, which is so interpreted, is a normal signal which is stored in advance so as to indicate a requested action for the user.

Next, the function will be described. In the keyless entry apparatus according to Embodiment 18 of the invention, firstly, when the user touches the door handle 903, the touch or contact is detected by the control circuit 934, and when the determination unit 9341 determines on the unlock-to-open-the-door mode due to contact to or operation of the door handle 903 to open the door based on a vibration signal of about 3 to 8Hz from the piezoelectric sensor 904, an ID request signal is transmitted from the ID signal requesting unit 939. When receiving the ID request signal, the portable side control circuit 936 of the portable side transmitter-receiver 933 transmits an ID signal from the portable side transmission-reception circuit 935. In the control circuit 934, when receiving the ID signal, the ID signal so received is interpreted by the decoder unit 940, and thereafter, the determination of the ID signal so interpreted is made by the ID signal determination unit 942, and in the event that the ID signal coincides with a stored ID signal, the unlocking instruction means 943 sends out an unlocking signal to the locking/unlocking means 918, so as to unlock the door 901.

Next, when the user realizes that he or she has failed to turn off the room lamp after he or she has got out of the vehicle and locked the doors, in the event that the user operates the door handle 903 by knocking or striking the door handle 903 using as the password signal the specific knocking rhythm such a rhythm as ta-tan-ta-tan, the vibration is detected by the control circuit 934, and the locked state identifying means 938 identifies that the locked state exists. Then, when the determination unit 9341 determines based on a vibration signal of about 10 to 30Hz from the piezoelectric sensor 904 on the pattern signal mode as a password signal having a predetermined pattern of a predetermined number of times of peak and a predetermined time interval, the control circuit 934 instructs the requested action indicating unit 944 to send out a turn-off-the-room-lamp signal to the switching device 920, whereby the room lamp is turned off.

Thus, when the user strikes the door in the predetermined pattern having the predetermined number of times and time interval, the waveform of vibration generated then is detected and interpreted by the displacement detecting device, and in the event that the striking rhythm is the predetermined action, the predetermined user requested operation is performed. Namely, the specific striking rhythm can constitute the password signal to enable the predetermined operation, whereby the door handle apparatus can be realized which has the multiple functions and superior convenience, and by applying the door handle apparatus to the keyless entry apparatus of the vehicle, the operability of the door handle portion of the keyless entry apparatus can be improved, thereby making it possible to realize the keyless entry apparatus which has the multiple functions and superior convenience.

Furthermore, when a burglar strikes the window 916 or touches the door handle 903 with impact in an attempt to break the lock so as to enter the vehicle, steal the vehicle or steal items installed or left in the vehicle, vibration generated is detected by the control circuit 934, and when with the locked state identifying means 938 identifying the locked state, the determination unit 9341 determines on a mode (which is possibly the criminal vibration mode) which is other than the unlock-to-open-the-door mode and the pattern signal mode based on the vibration signal of about 10 to 30Hz from the piezoelectric sensor 904, an ID requesting signal is transmitted from the ID signal requesting unit 939. The portable side transmitter-receiver 933 receives the ID requesting signal and transmits an ID signal. In the control circuit 934, when receiving the ID signal, the decoder unit 940 interprets the ID signal so received, and thereafter, the ID signal determination unit 942 determines whether or not the ID signal so interpreted is the normal signal stored in the memory 941 in advance. A result of the determination on whether or not the ID signal is the normal signal is returned to the determination unit 9341, and if the ID signal is the normal signal, understanding that the vibration generated was due to disturbance, no further process is carried out. On the contrary, if the ID signal is not the normal one, the determination unit 9341 decides on the criminal vibration mode. Thus, when the vibration signal of about 10 to 30Hz is determined to be the criminal mode by the determination unit 9341, an alarm sound is raised for a certain period of time from the alarm means 9211 or the existence of the burglar is informed of to the user, a telephone on the outside line, a guarding company, a police station and the like by a messaging means 9212, and a locking reinforcement means 9213 is activated so as to perform protecting actions such as locking a stowage compartment such as a glove box, not shown, activating the ignition key hole and a storing apparatus of on-board AV equipment inside the passenger compartment so as to cover them with protection walls, respectively, and closing quickly the protecting window 916 of glass (or metal) on the inside of the general door window 915 so as to produce a double glazing state. Note that while an example has been taken for description here in which the criminal vibration to be determined on is limited to the vibration having the relatively short wavelengths, the apparatus may be programmed such that the determination unit 9341 determines on criminal vibration which includes the vibration signal of about 3 to 8Hz which results when the key hole of the door is pried or the door handle is operated in an attempt to enter the vehicle.

Thus, when the displacement detecting device detects the vibration waveform and the vibration is determined as not a disturbance vibration occurring while locked but a vibration specific to the criminal vibration which results when the burglar attempts to break the lock to enter the vehicle, steal the vehicle itself or steal items installed or left inside the vehicle, the alarm means is activated so as to perform the predetermined protecting actions such as, in the event of the vehicle, locking the stowage compartment such as the glove box, activating the ignition key hole and the storing apparatus of on-board AV equipment inside the passenger compartment so as to cover them with protection walls, respectively, and closing quickly the protecting window 916 of glass (or metal) on the inside of the general door window 915 so as to produce a double glazing state, thereby making it possible to realize the door handle apparatus which has the multiple functions and superior convenience.

In addition, the information device is provided which sends information based on the determination of the criminal vibration mode by the determination unit, and by raising an alarm, the burglary occurring can be informed of to the user, who is nearer to the site, and other people. In addition, in the event that an alarming sound is used as the alarming mode, not only people nearby can be informed of but also the burglar or the like can be frightened to give up the criminal action. In addition, the apparatus includes the communication means which can communicate with external communication equipment based on the determination of the criminal vibration mode by the determination unit, so that the fact of a vehicle burglary is being carried out or a burglar is attempting to enter the vehicle can be informed of to an in-house alarm terminal and an external telephone, a guarding company, a police station and the like, thereby making it possible to quickly react against a criminal intrusion into the vehicle when it actually happens.

Note that while in Embodiment 18 described above, the door handle apparatus is described as being applied to the vehicle door, the keyless entry apparatus having the door handle apparatus of the invention may be applied to front doors of an office, house or condominium, and in the event that the apparatus is applied to a house door, as with the automobile, when the determination unit 9341 determines a vibration signal as the criminal mode, an alarm sound is raised for a certain period of time from the alarm means 9211 or the existence of the burglar is informed of to the user, a telephone on the outside line, a guarding company, a police station and the like by the messaging means 9212, and the locking reinforcement means 9213 is activated so as to reinforce the locking of the house to prevent a further intrusion into the house. In particular, by reinforcing the locking of locked locations (for example, a balcony window which is manually locked at a single location) such that the locations are automatically locked at a plurality of locations, since, when the burglar attempts further to intrude into the house, the reinforced locking takes the burglar more time to achieve the object, it becomes possible to make him or her to give up his or her attempt.

Thus, when the vehicle burglar or intruder is detected, the locking can be reinforced based on the determination of the criminal vibration mode by the determination unit so as to prevent the attempted intrusion. In particular, by reinforcing the locking of the locked locations by automatically locking them at the plurality of locations, the intruder has to run a larger risk in attempting further to intrude into the house by spending more time to break the lock, and hence, the reinforced locking can make the intruder to give up his or her attempt. In the vent of the vehicle, the storage compartment such as the glove box can be locked, or the on-board AV equipment can be locked in by the locked lid. In addition, the door handle apparatus can be applied to the keyless entry apparatus or smart entry apparatus for such doors as front doors to a building and a house, whereby the operability of the door handle portion of the keyless entry apparatus can be improved, thereby making it possible to realize a door member which has the multiple functions and superior convenience.

Additionally, while in the respective embodiments that have been described heretofore, the door handle apparatus has been described as being applied to vehicle doors which enables passage into and out of the vehicle such as side doors and sliding doors, the door handle apparatus according to the invention provides the same advantages also when applied to a tailgate which opens and closes at the rear of the vehicle. Thus, the door handle apparatus can be applied to the keyless entry apparatus for doors such as the side doors and the tailgate so as to improve the operability of the door handle portion of the keyless entry apparatus, thereby making it possible to realize the keyless entry which has the multiple functions and superior convenience.

In addition, since a vibration detected while locked can be determined as the criminal vibration more clearly by being discriminated from the vibration intended by the user, a malfunction can be prevented, whereby the alarm means can be activated to carry out the predetermined alarming or anti-burglary actions, thereby making it possible to realize the keyless entry apparatus which is highly functional, convenient and superior in anti-burglary properties.

Note that while in the respective embodiments, while the door handle apparatus has been described as being applied to the gripping handle hinged at one end thereof, the door handle apparatus of the invention provides the same functions and advantages also when applied to a pull-up type door handle in which the entirety of the handle is pulled up or door handles of other configurations.

### INDUSTRIAL APPLICABILITY

Thus, in the door handle apparatus according to the invention, the piezoelectric sensor has such flexibility as to be annexed to the door handle, and the minute displacement of the door handle can be detected with high sensitivity. Consequently, since a sufficient signal output can be obtained only through a simple touch to the door handle so as to detect a contact to the door handle, in addition to the application to the door handle, the door handle apparatus of the invention can be used as a highly sensitive switch which can be used in various fields as an opening/closing control switch for a door which allows for passage of an article or human body into and out of a compartment or a motion control switch for a mobile articles storage compartment.

## Claims

1. A door handle apparatus comprising:
a handle portion which performs opening and closing operations of a door;
a movable portion which operates while linking with the handle portion;
a frame portion on which the handle portion and the movable portion are mounted;
an elastic element which deforms by operation of either the handle portion or the movable portion;
a piezoelectric sensor which is supported at least partially by the elastic element and which outputs a signal by the deformation of the elastic element; and
a sensor signal detecting portion which detects an output signal from the piezoelectric sensor,
wherein the elastic element is mounted on any of the handle portion, the movable portion and the frame portion while being biased with a predetermined pressure applied thereto.

2. The door handle apparatus according to claim 1, wherein at least part of the piezoelectric sensor comprises an elastic element.

3. The door handle apparatus according to claim 1 or 2, wherein at least part of the piezoelectric sensor comprises a bent portion which is deformed in advance.

4. The door handle apparatus according to any of claims 1 to 3, wherein at least part of the piezoelectric sensor is deformed torsionally in advance.

5. The door handle apparatus according to any of claims 1 to 4, wherein the elastic element is formed into a cantilever shape in which the elastic element is fixed to an inside of the door handle apparatus at one end thereof.

6. The door handle apparatus according to any of claims 1 to 5, wherein the elastic element is bent in a direction in which the elastic element oppositely faces the movable portion.

7. The door handle apparatus according to any of claims 1 to 6, wherein the piezoelectric sensor comprises a bent portion which is deformed in advance at an extending side of an opposite end portion to a fixed end of the elastic element.

8. The door handle apparatus according to any of claims 1 to 7, wherein the elastic element supports the piezoelectric sensor while bending and deforming at least part of the piezoelectric sensor.

9. The door handle apparatus according to any of claims 1 to 8, wherein the elastic elements supports the piezoelectric sensor while deforming torsionally at least part of the piezoelectric sensor.

10. The door handle apparatus according to any of claims 1 to 9, wherein the elastic element is brought into contact with part of the movable portion when the handle portion is not in use due to a predetermined torsional stress being applied to part of the elastic element.

11. The door handle apparatus according to any of claims 1 to 10, wherein the sensor signal detecting portion comprises a filter which extracts a signal of a frequency that is generated by virtue of operation of the door handle portion.

12. The door handle apparatus according to any of claims 1 to 11, wherein the piezoelectric sensor, the elastic element and the sensor signal detecting portion are molded as an integrated unit.

13. A door member comprising the door handle apparatus according to any of claims 1 to 12.

14. A keyless entry system comprising the door member according to claim 13.

15. A sensor unit comprising:
a flexible piezoelectric sensor;
an elastic element which supports part of the piezoelectric sensor; and
a sensor signal detecting portion which detects an output signal from the piezoelectric sensor,
wherein the sensor signal detecting portion detects a signal from the piezoelectric sensor when the elastic element is deformed from a state in which a predetermined stress is applied to the elastic element.

16. The sensor unit according to claim 14, wherein at least part of the piezoelectric sensor comprises an elastic element.

17. A sensor unit mounting method, wherein the sensor unit according to claim 15 or 16 is mounted in such a manner that the elastic unit is imparted a pressure from the handle portion to thereby be deformed when mounted on a door.

18. A method for detecting a contact of a human being or an object to a handle portion or an operation of the handle portion of a door handle apparatus comprising the sensor unit according to claim 15 or 16 based on a signal from the piezoelectric sensor when the elastic element is deformed by the use of the handle portion from a state in which a predetermined stress is applied to the elastic element while the handle portion is not in use.
